# EUROPEAN PATENT APPLICATION

(11) **EP 4 484 069 A1**
(43) Date of publication of application: **01.01.2025**
(21) Application number: 23787547.1
(22) Date of filing: 03.04.2023
(51) Int. Cl.: B25F 5/00, B25F 5/02, H02J 7/00, H02K 7/10, H02K 11/00, H01M 50/244, H01M 50/247

(54) **POWER DEVICE**

(30) Priority: 15.04.2022 CN 202210396998; 17.02.2023 CN 202310134213; 17.02.2023 CN 202310133717; 17.02.2023 CN 202320255986 U; 17.02.2023 CN 202310133755; 17.02.2023 CN 202310134858
(71) Applicant: Nanjing Chervon Industry Co., Ltd., Nanjing, Jiangsu 211106 (CN)
(72) Inventor: LI, Li, Nanjing, Jiangsu 211106 (CN); ZHANG, Lijin, Nanjing, Jiangsu 211106 (CN); LU, Wei, Nanjing, Jiangsu 211106 (CN); ZHANG, Chenzhong, Nanjing, Jiangsu 211106 (CN)
(74) Representative: Sun, Yiming
(86) International application number: PCT/CN2023/085992
(87) International publication number: WO 2023/197902

(57) **Abstract**

Provided is a power unit. The power unit includes an output assembly, a housing, and a power supply device. The output assembly includes an output shaft used for outputting power and rotatable about a first axis. The housing is used for supporting the output assembly. The power supply device powers the output assembly and includes at least a first battery pack.

## Description

This application claims priority to Chinese Patent Application No. 202210396998.6 filed with the China National Intellectual Property Administration (CNIPA) on Apr. 15, 2022, Chinese Patent Application No. 202310134213.2 filed with the CNIPAon Feb. 17, 2023, Chinese Patent Application No. 202310133717.2 filed with the CNIPAon Feb. 17, 2023, Chinese Patent Application No. 202320255986.1 filed with the CNIPAon Feb. 17, 2023, Chinese Patent Application No. 202310133755.8 filed with the CNIPAon Feb. 17, 2023, and Chinese Patent Application No. 202310134858.6 filed with the CNIPA on Feb. 17, 2023, the disclosures of which are incorporated herein by reference in their entireties.

### TECHNICAL FIELD

The present application relates to a power unit, for example, a power unit applicable to a power tool.

### BACKGROUND

The present application relates to a power unit. A power supply device, an output assembly, and a control circuit are integrated into the power unit. The power unit is operated such that a rotational speed and torque can be outputted. The power unit can be used for replacing an engine and work independently.

### SUMMARY

The present application provides a power unit so that the space occupied by the power unit is optimized, more functions are implemented from the perspective of operation, and operation experience is optimized.

The present application provides the technical solutions below.

A power unit applicable to a power tool includes: an output assembly including an output shaft for outputting power, where the output shaft is configured to be rotatable about a first axis; a housing supporting the output assembly and including a base, where it is defined that the base has a bottom plane capable of causing the power unit to be placed on a receiving plane and the bottom plane is parallel to the receiving plane; and a power supply device including a first battery pack and a second battery pack for powering the output assembly. The distance between the output shaft and the bottom plane is greater than or equal to 5 mm. The first battery pack is detachably mounted to the housing along the direction of a first straight line. The second battery pack is detachably mounted to the housing along the direction of a second straight line. The first straight line is substantially parallel to the bottom plane, and the second straight line is substantially parallel to the bottom plane. The first battery pack and the second battery pack are symmetrical about a symmetry plane. The first battery pack is disposed on one side of the symmetry plane. The second battery pack is symmetrically disposed on the other side of the symmetry plane relative to the first battery pack. A preset distance exists between the first axis of the output shaft and the symmetry plane.

A power unit applicable to a power tool includes: an output assembly including an output shaft for outputting power, where the output shaft is configured to be rotatable about a first axis; a housing supporting the output assembly and including a base, where the base is configured to be used for detachably mounting the power unit to the power tool; and a power supply device including a first battery pack and a second battery pack for powering the output assembly. The first battery pack is detachably mounted to the housing along the direction of a first straight line. The second battery pack is detachably mounted to the housing along the direction of a second straight line. The first straight line is substantially parallel to a working plane of the power unit, and the second straight line is substantially parallel to the working plane.

A power unit applicable to a power tool includes: an output assembly including an output shaft for outputting power, where the output shaft is configured to be rotatable about a first axis; a housing supporting the output assembly and including a base and a sidewall, where the base is configured to be used for detachably mounting the power unit to the power tool, and the sidewall is formed with a through hole for the output shaft to protrude from the housing along the first axis; and a power supply device including a first battery pack and a second battery pack for powering the output assembly. The first battery pack is disposed above the output shaft, and the second battery pack is disposed above the output shaft. It is defined that a symmetry plane is between the first battery pack and the second battery pack. The first battery pack is disposed on one side of the symmetry plane, and the second battery pack is symmetrically disposed on the other side of the symmetry plane relative to the first battery pack. A preset distance exists between the output shaft and the symmetry plane.

A power unit applicable to a power tool includes: an output assembly including an electric motor and an output shaft for outputting power, where the output shaft is configured to be rotatable about a first axis; a housing supporting the output assembly and including a base, where the base is configured to be used for mounting the power unit to the power tool, and the output shaft is disposed on the upper side of the base; and a power supply device including a first battery pack and a second battery pack for powering the output assembly. The output shaft includes an output portion on the front side of the housing. The first battery pack is disposed on the upper side of the electric motor, and the second battery pack is disposed on the left or right side of the electric motor.

A power unit applicable to a power tool includes: an output assembly including an electric motor and an output shaft for outputting power, where the output shaft is configured to be rotatable about a first axis; a housing supporting the output assembly; a power supply device including a first battery pack for powering the output assembly; and a battery pack coupling portion for mounting the first battery pack. The first battery pack is detachably coupled to the battery pack coupling portion along the direction of a first straight line. The direction of the first straight line is inclined relative to the direction of the first axis.

A power unit applicable to a power tool includes: an output assembly including an electric motor and an output shaft for outputting power, where the output shaft is configured to be rotatable about a first axis; a housing supporting the output assembly and including a base, where the output shaft is disposed on the upper side of the base; a power supply device including a first battery pack and a second battery pack for powering the output assembly; and a power management board including a control circuit configured to control a power supply mode of the power supply device. The first battery pack is disposed on the upper side of the electric motor. The power management board is disposed between the base and the top surface of the first battery pack.

A power unit applicable to a power tool includes: an output assembly including a first electric motor and a second electric motor; a housing supporting the output assembly and including a base, where the base is configured to be used for detachably mounting the power unit to the power tool, and the output shaft is disposed on the upper side of the base; and a power supply device for powering the output assembly. The first electric motor includes a first electric motor shaft rotatable about a first axis. The second electric motor includes a second electric motor shaft rotatable about a second axis.

A power unit applicable to a power tool includes: an output assembly including an output shaft for outputting power and an electric motor for driving the output shaft to rotate; a housing supporting the output assembly and including a base, where the base is configured to be used for detachably mounting the power unit to the power tool, and the output shaft is disposed on the upper side of the base; and a power supply device for powering the output assembly. The output assembly further includes a transmission assembly disposed between the electric motor and the output shaft. The ratio of a rotational speed of the output shaft to a rotational speed of the electric motor is defined as a gear ratio of the transmission assembly. The gear ratio is higher than or equal to 2 and lower than or equal to 15.

A power unit applicable to a power tool includes: an output assembly including an electric motor and an output shaft for outputting power, where the output shaft is configured to be rotatable about a first axis; a housing supporting the output assembly and including a base and a sidewall, where the base is configured to be used for detachably mounting the power unit to the power tool, and the sidewall is formed with a through hole for the output shaft to protrude forward from the housing along the first axis; a power supply device including a first battery pack for powering the output assembly; a circuit board assembly for controlling the electric motor and/or the power supply device; and a control device including a speed adjusting element for controlling an output speed of the output shaft. At least part of the circuit board assembly and at least part of the control device are disposed on the same side of a vertical plane passing through the first axis.

A power unit applicable to a power tool includes: an output assembly including an output shaft for outputting power; a housing supporting the output assembly and including a base, where the base is configured to be used for detachably mounting the power unit to the power tool, and the output shaft is disposed on the upper side of the base; a power supply device including a first battery pack for powering the output assembly; and a control device including a speed adjusting element for controlling an output speed of the output shaft. The housing is formed with a mounting portion for mounting the control device. The mounting portion includes a mounting structure through which the control device is capable of being detachably mounted. The control device includes a first electrical connection interface. The power unit includes a second electrical connection interface electrically connected to the first electrical connection interface.

A power unit applicable to a power tool includes: an output assembly including an output shaft for outputting power; a housing supporting the output assembly and including a base, where the base is configured to be used for detachably mounting the power unit to the power tool, and the output shaft is disposed on the upper side of the base; a power supply device including a first battery pack for powering the output assembly; a control device including a speed adjusting element for controlling an output speed of the output shaft; and a circuit board disposed in the housing. The housing is formed with a mounting portion for mounting the control device. The mounting portion includes a mounting structure through which the control device is capable of being detachably mounted. The mounting structure is also configured to be capable of causing the control device to be electrically connected to the circuit board.

A power unit applicable to a power tool includes: an output assembly including an output shaft for outputting power; a housing supporting the output assembly and including a base, where the base is configured to be used for detachably mounting the power unit to the power tool, and the output shaft is disposed on the upper side of the base; a power supply device including a first battery pack for powering the output assembly; a control device including a speed adjusting element for controlling an output speed of the output shaft; and a circuit board disposed in the housing. The housing is formed with a mounting portion for mounting the control device. The control device has a separate state in which the control device is detached from the mounting portion to be mounted on the power unit. The control device is electrically connected to the circuit board through a cable when the control device is in the separate state. The length of the portion of the cable located outside the housing is greater than or equal to 10 cm when the control device is in the separate state.

A power unit applicable to a power tool includes: an output assembly including an output shaft for outputting power; a housing supporting the output assembly and including a base, where the base is configured to be used for detachably mounting the power unit to the power tool, and the output shaft is disposed on the upper side of the base; a power supply device including a first battery pack for powering the output assembly; a control device including a speed adjusting element for controlling an output speed of the output shaft; and a circuit board disposed in the housing. The housing is formed with a mounting portion for mounting the control device. The control device has a separate state in which the control device is detached from the mounting portion. The control device is configured to form a wireless communication connection with the circuit board when the control device is in the separate state.

A power unit applicable to a power tool includes: an output assembly including an output shaft for outputting power; a housing supporting the output assembly and including a base, where it is defined that the base has a bottom plane capable of causing the power unit to be placed on a receiving plane, the bottom plane is parallel to the receiving plane, and the distance between the output shaft and the bottom plane is greater than or equal to 5 mm; and a power supply device including a first battery pack and a second battery pack for powering the output assembly. The ratio of the distance between the output shaft and the base to the height of the power unit in a vertical direction is higher than or equal to 0.01.

A power unit applicable to a power tool includes: an output assembly including an output shaft for outputting power; a housing supporting the output assembly and including a base and a sidewall, where the base is configured to be used for detachably mounting the power unit to the power tool; and a power supply device including a first battery pack and a second battery pack for powering the output assembly. The distance between the output shaft and the outer edge of the sidewall is a first length. The distance of the power unit in a left and right direction is the length of the whole machine. The ratio of the first length to the length of the whole machine is higher than or equal to 0.02 and lower than or equal to 0.5.

A power unit applicable to a power tool includes: an output assembly including an electric motor and an output shaft for outputting power; a housing supporting the output assembly and including a base, where it is defined that the base has a bottom plane capable of causing the power unit to be placed on a receiving plane, the bottom plane is parallel to the receiving plane, and the distance between the output shaft and the bottom plane is greater than or equal to 5 mm; and a power supply device including a first battery pack for powering the output assembly. The ratio of the diameter of the output shaft to the outer diameter of the electric motor is higher than or equal to 0.069 and lower than or equal to 0.4.

A power unit applicable to a power tool includes: an output assembly including an electric motor and an output shaft for outputting power; a housing supporting the output assembly and including a base, where the base is configured to be used for detachably mounting the power unit to the power tool, it is defined that the base has a bottom plane capable of causing the power unit to be placed on a receiving plane, the bottom plane is parallel to the receiving plane, and the distance between the output shaft and the bottom plane is greater than or equal to 5 mm; and a power supply device including a first battery pack for powering the output assembly. The product of the height of the power unit along an up and down direction, the width of the power unit along a left and right direction, and the thickness of the power unit along a front and rear direction is defined as the volume of the power unit. The ratio of the maximum output power of the power unit to the volume of the power unit is higher than or equal to 10000 (W/m^3) and lower than or equal to 1330000 (W/m^3).

A power unit applicable to a power tool includes: an output assembly including an electric motor and an output shaft for outputting power, where the output shaft is configured to be rotatable about a first axis; a housing supporting the output assembly and including a base, where it is defined that the base has a bottom plane capable of causing the power unit to be placed on a receiving plane, the bottom plane is parallel to the receiving plane, and the distance between the output shaft and the bottom plane is greater than or equal to 5 mm; and a power supply device including at least a first battery pack and a second battery pack for powering the output assembly. The product of the total capacity of the power supply device and the maximum output power of the power unit is greater than or equal to 1000 W Ah.

A power unit applicable to a power tool includes: an output assembly including an electric motor and an output shaft for outputting power, where the output shaft is configured to be rotatable about a first axis; a housing supporting the output assembly and including a base, where it is defined that the base has a bottom plane capable of causing the power unit to be placed on a receiving plane, the bottom plane is parallel to the receiving plane, and the distance between the output shaft and the bottom plane is greater than or equal to 5 mm; and a power supply device including at least a first battery pack and a second battery pack for powering the output assembly. The first battery pack includes a first cell encapsulated in the housing. The second battery pack is detachably connected to the housing. The housing is formed with a coupling portion to which the second battery pack is detachably mounted.

A power unit applicable to a power tool includes: an output assembly including an electric motor and an output shaft for outputting power, where the output shaft is configured to be rotatable about a first axis; a housing supporting the output assembly and including a base, where the base is configured to be used for detachably mounting the power unit to the power tool; and a power supply device including at least a first battery pack and a second battery pack for powering the output assembly. The first battery pack includes a first cell. The second battery pack includes a second cell. The first cell and the second cell are capable of having different materials or different shapes.

A power unit applicable to a power tool includes: an output assembly including an electric motor and an output shaft for outputting power, where the output shaft is configured to be rotatable about a first axis; a housing supporting the output assembly and including a base, where the output shaft is disposed on the upper side of the base; and a power supply device including at least a first battery pack and a second battery pack for powering the output assembly. The first battery pack is further configured to be detachable from the housing to power another power tool. The housing is formed with a battery pack coupling portion to which the first battery pack is capable of being detachably mounted.

A power unit applicable to a power tool includes: an output assembly including an electric motor and an output shaft for outputting power, where the output shaft is configured to be rotatable about a first axis; a housing supporting the output assembly and including a base and a sidewall, where the base is configured to be used for detachably mounting the power unit to the power tool; and a power supply device including at least a first battery pack and a second battery pack for powering the output assembly. The first battery pack is mounted to the housing. The second battery pack is configured to be separable from the power unit and capable of powering the power unit when the second battery pack is separated from the power unit.

A power unit applicable to a power tool includes: an output assembly including an output shaft for outputting power, where the output shaft is configured to be rotatable about a first axis; a housing supporting the output assembly and including a base, where it is defined that the base has a bottom plane capable of causing the power unit to be placed on a receiving plane and the bottom plane is parallel to the receiving plane; and a power supply device including a first battery pack for powering the output assembly. The power unit further includes a first locking assembly. The first battery pack is fixed to the power unit through the first locking assembly. The first locking assembly has a locking position and an unlocking position. The first locking assembly restricts the movement of the first battery pack when the first locking assembly is located at the locking position. The first locking assembly does not restrict the movement of the first battery pack when the first locking assembly is located at the unlocking position. The first locking assembly needs to be driven by a first unlocking tool to switch between the locking position and the unlocking position.

A power unit applicable to a power tool includes: an output assembly including an output shaft for outputting power, where the output shaft is configured to be rotatable about a first axis; a housing supporting the output assembly and including a base, where it is defined that the base has a bottom plane capable of causing the power unit to be placed on a receiving plane and the bottom plane is parallel to the receiving plane; and a power supply device including a first battery pack for powering the output assembly. It is defined that the working center of gravity G refers to the center of gravity of the whole machine for the power unit 10 to be capable of working normally. The distance Y1 between the working center of gravity G and the first axis in an up and down direction is less than or equal to 14 cm.

A power unit applicable to a power tool includes: an output assembly including an output shaft for outputting power, where the output shaft is configured to be rotatable about a first axis; a housing supporting the output assembly and including a base, where it is defined that the base has a bottom plane capable of causing the power unit to be placed on a receiving plane and the bottom plane is parallel to the receiving plane; and a power supply device including a first battery pack and a second battery pack for powering the output assembly. The distance between the output shaft and the bottom plane is greater than or equal to 5 mm. The first battery pack is detachably mounted to the housing along the direction of a first straight line. The second battery pack is detachably mounted to the housing along the direction of a second straight line. The included angle between the first straight line and the bottom plane is greater than or equal to 0 degrees and less than or equal to 30 degrees. The included angle between the second straight line and the bottom plane is greater than or equal to 0 degrees and less than or equal to 30 degrees.

A power unit applicable to a power tool includes: an output assembly including an electric motor and an output shaft for outputting power, where the output shaft is configured to be rotatable about a first axis; a housing supporting the output assembly and including a base and a sidewall, where the base is configured to be used for detachably mounting the power unit to the power tool, and the sidewall is formed with a through hole for the output shaft to protrude forward from the housing along the first axis; a power supply device including a first battery pack for powering the output assembly; a circuit board assembly for controlling the electric motor and/or the power supply device; and a control device including a speed adjusting element for controlling an output speed of the output shaft. At least part of the circuit board assembly and at least part of the control device are disposed on the same side of a vertical plane passing through the first axis.

The present application discloses multiple arrangement manners of the output assembly, the housing, the power supply device, and other structures in the power unit. Thus, the space occupied by the power unit is optimized, more functions are implemented from the perspective of operation, operation experience is optimized, and the power unit works well.

### BRIEF DESCRIPTION OF DRAWINGS

FIG. 1 is a perspective view of a power unit;
FIG. 2 is a perspective view of a power unit viewed from the rear;
FIG. 3 is a perspective view of a power unit viewed from the front;
FIG. 4 is a perspective view of a power supply device, an electric motor, and a symmetry plane;
FIG. 5 is a front view of a structure in FIG. 4 viewed from the direct front;
FIGS. 6a to 6k, FIG. 6m, FIG. 6n, and FIG. 6p are front views of a power supply device, an electric motor, and a base viewed from the direct front in some examples;
FIG. 7 is a perspective view of an internal structure of a power unit from an angle of view;
FIG. 8 is a perspective view of the structure shown in FIG. 7 from another angle of view;
FIG. 9 is a perspective view of a power supply device, an electric motor, a power management board, and the like from an angle of view;
FIG. 10 is a front view of the structures in FIG. 9 viewed from the direct front;
FIG. 11 is a perspective view of the interior of a power unit having two electric motors;
FIG. 12 shows the relative position of a power supply device on an x-y coordinate system established with a first axis as a z-axis;
FIG. 13 is a front view of a power unit;
FIG. 14 is a top view of a power unit;
FIG. 15 is a schematic view showing that a control device and a housing of a power unit are separate from each other;
FIG. 16 is a schematic view of a control device;
FIGS. 17a to 17d are schematic views showing that a control device is mounted at different positions of a housing;
FIG. 18 is a schematic view of the cell of a power supply device encapsulated in a housing;
FIG. 19 is a schematic view of a battery pack coupling portion;
FIG. 20 shows an example in which a power supply device of a power unit is mounted and locked;
FIG. 21 is a partial enlarged view of a first locking assembly at an unlocking position;
FIG. 22 shows another example of a first locking assembly;
FIG. 23 is a perspective view of a locking plate;
FIG. 24 shows another example of a first locking assembly;
FIG. 25 shows another example of a first locking assembly;
FIG. 26 is a schematic view of the first locking assembly shown in FIG. 25 at a locking position;
FIG. 27 is a schematic view of the first locking assembly shown in FIG. 25 at an unlocking position;
FIG. 28 is an exploded view of the first locking assembly shown in FIG. 25;
FIG. 29 is a side sectional view of FIG. 26;
FIG. 30 is a side sectional view of FIG. 27;
FIG. 31 shows an example of a first unlocking tool;
FIG. 32 is a side view of a power unit;
FIG. 33 is a perspective view of the power unit in FIG. 31;
FIG. 34 is a perspective view of a housing in FIG. 33;
FIG. 35 is a partial enlarged view of a heat dissipation portion on a first top cover in FIG. 34;
FIG. 36 is a sectional view of a first top cover in FIG. 34;
FIG. 37 is a perspective view of an example of a control device;
FIG. 38 is an exploded view of the control device in FIG. 37;
FIG. 39 is a perspective view of the structure in FIG. 38 from another angle of view;
FIG. 40a and FIG. 40b are perspective views of a speed adjusting element rotating to a first rotational speed from different angles of view;
FIG. 41a and FIG. 41b are perspective views of a speed adjusting element rotating to a second rotational speed from different angles of view;
FIG. 42 is a schematic view showing the mounting of a speed adjusting element;
FIG. 43 is a schematic view showing the mounting of a damping member in a speed adjusting element;
FIG. 44 is a sectional view of an example of a control device;
FIG. 45 is a schematic diagram showing the operation of a main switch;
FIG. 46 shows an example of a display manner of a display interface 512a;
FIG. 47 is a schematic diagram showing the functions of a control system of a power unit;
FIG. 48 is a perspective view of a heat dissipation opening and a base of a power unit;
FIG. 49 is a perspective view of a heat dissipation opening and a base of a power unit from another angle of view;
FIG. 50 is a schematic view of a power unit viewed from bottom to top;
FIG. 51 is a plan view of a base plate;
FIG. 52 is a partial enlarged view of a closed opening of the base plate in FIG. 51;
FIG. 53 is a partial enlarged view of an open opening of the base plate in FIG. 51;
FIG. 54 is a front view of a center-of-gravity position of a power unit;
FIG. 55 is a partial enlarged view of a power unit in FIG. 51;
FIG. 56 is an enlarged view of an output shaft mounting portion in FIG. 51;
FIG. 57 is a perspective view of a power unit with a first adapter plate and a second adapter plate mounted; and
FIG. 58 is an exploded view of FIG. 57.

### DETAILED DESCRIPTION

To make solved technical problems, adopted technical solutions, and achieved technical effects of the present application more apparent, the technical solutions in examples of the present application are further described in detail below in conjunction with the drawings. The examples described below are part, not all, of the examples of the present application.

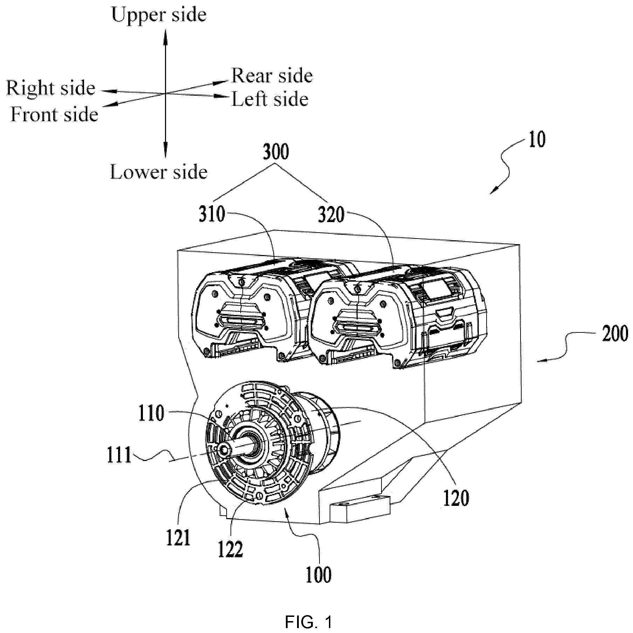

In the description of the present application, it is to be noted that orientations or position relations indicated by terms such as "center", "up", "down", "left", "right", "front", and "rear" are based on figure 1. These orientations or position relations are intended to facilitate and simplify the description of the present application and not to indicate or imply that a device or element referred to must have such particular orientations or is configured or operated in such particular orientations. Moreover, terms such as "first" and "second" are used only for distinguishing between different structures or components and are not to be construed as indicating or implying relative importance. The term "approximately" in the present application refers to a range of an original value with its 5% added or reduced.

The present application relates to a power unit applicable to a power tool. A power supply device, an output assembly, and a control board including an electronic element are typically integrated into the power unit. The power unit is supported by a housing and mounted in the power tool for use. In practical applications, the power unit is commonly used for replacing an engine and is adaptable to a variety of power tools such as a mower, a snow thrower, a tamper, a sprayer, a compressor, a high-pressure cleaning machine, and a sawmill. The power unit plays an important role in many fields such as gardening, construction, agriculture, and daily life.

As shown in FIG. 1, in an example, a power unit 10 includes an output assembly 100, a power supply device 300, and a housing 200 supporting the output assembly. The output assembly 100 includes an output shaft 110 for outputting power. The output shaft 110 is configured to be rotatable about a first axis 111. The power supply device 300 provides an energy source for the output assembly 100. In this example, the power supply device 300 includes at least a first battery pack 310 and a second battery pack 320.

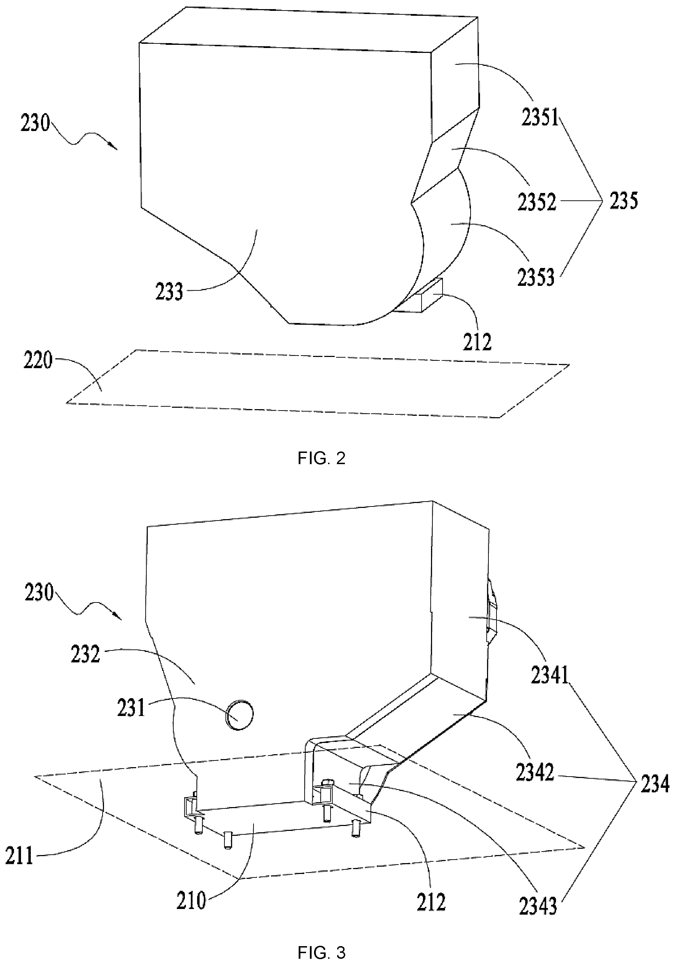

As shown in FIG. 2 and FIG. 3, the housing 200 includes a base 210. It is defined that the base 210 has a bottom plane 211 capable of causing the power unit 10 to be placed on a receiving plane 220, and the bottom plane 211 is parallel to the receiving plane 220. It is to be noted that the receiving plane 220 may be a surface of the power tool on which the power tool and the power unit 10 are fixed to each other. Alternatively, the receiving plane 220 may be a surface of the power tool on which the power unit 10 is placed when the power unit 10 is used in conjunction with the power tool. The base 210 may be a mounting base for detachably mounting the power unit 10 to the power tool. Alternatively, the base 210 may be a structure on the power unit 10 used for stable placement when the power unit 10 drives the power tool to work. That is to say, the power unit 10 in the present application is a power unit with a horizontal shaft.

The output shaft 110 protrudes from the front side of the housing 200 instead of the base 210. In this example, on the front side of the housing 200, a sidewall 230 is in contact with a base plate 210, and the output shaft 110 protrudes from the sidewall 230. The distance between the output shaft 110 and the bottom plane 211 is greater than or equal to 5 mm. Here, if the first axis 111 of the output shaft 110 intersects with the bottom plane 211, the distance between the output shaft 110 and the bottom plane 211 refers to the distance from an end of the output shaft 110 closer to the bottom plane 211 to the bottom plane 211. The sidewall 230 is formed with a through hole 231 for the output shaft 110 to protrude from the housing 200 along the first axis 111.

It is to be noted that when the bottom of the base 210 has a substantially even surface so that the base 210 is placed on the power tool, the bottom plane 211 is a plane formed by the bottom of the base 210; and when the base 210 is placed on the power tool through a support, a stringer, a structure with an uneven surface, or the like, the bottom plane 211 is a "virtual" plane formed at the bottom of the base 210 and capable of causing the power unit 10 to be placed on the receiving plane 220.

In this example, the base 210 of the power unit 10 is provided with a screw hole. A screw is passed through the screw hole so that the power unit 10 is fixed to the power tool. In some examples, the power unit 10 may be fixed to the power tool through a positioning structure on the sidewall 230, such as a screw, a snap, or a hook. In some examples, the power unit 10 may be provided with fixing structures on both the base 210 and the sidewall 230 to achieve a fixing effect.

In an example, the sidewall 230 includes a front sidewall 232 for the output shaft 110 to pass through to protrude from the housing 200. The sidewall 230 also includes a rear sidewall 233 opposite to the front sidewall 232 and a left sidewall 234 and a right sidewall 235 disposed between the front sidewall 232 and the rear sidewall 233. In the example shown in FIG. 2 and FIG. 3, the left sidewall 234 includes a first left sidewall 2341, a second left sidewall 2342, and a third left sidewall 2343, and the right sidewall 235 includes a first right sidewall 2351, a second right sidewall 2352, and a third right sidewall 2353. The sidewall 230 may be planar or curved and may have an opening or be completely closed.

The output shaft 110 is inserted into the shaft hole of the power tool. When the output shaft 110 rotates, the working shaft of the power tool is driven to rotate. When the power unit 10 is directly driven by an electric motor, the first axis 111 of the output shaft 110 coincides with an electric motor axis. When a transmission structure exists in the power unit, such as a gear transmission or a belt transmission, the output shaft 110 is a shaft protruding from the power unit 10 and driving the power tool to move. It is to be noted that an additional intermediate shaft may be added to the output shaft 110 to be matched with a power tool with a different shaft hole.

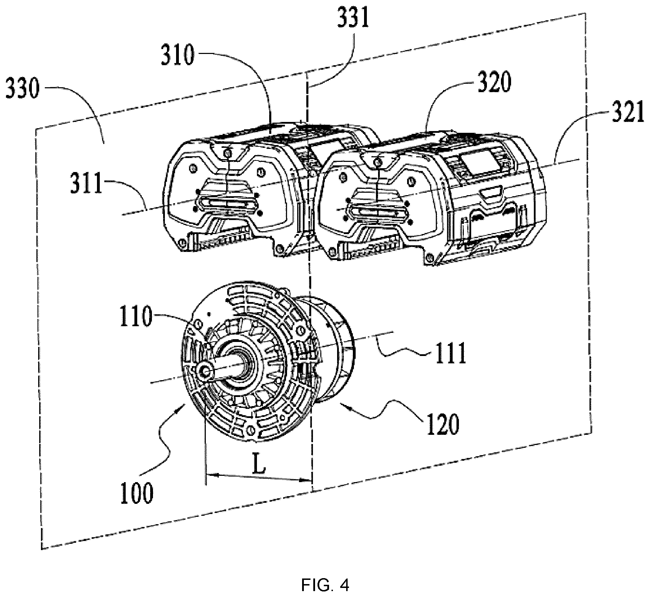

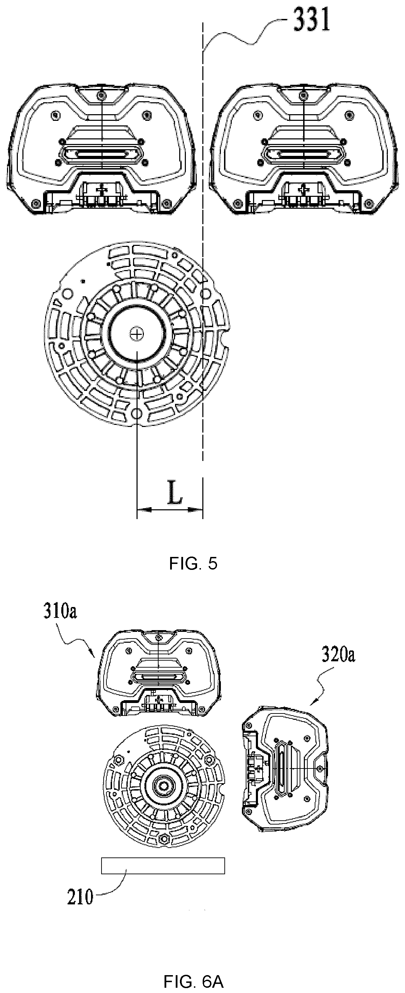

As shown in FIG. 4 and FIG. 5, the first battery pack 310 and the second battery pack 320 are substantially symmetrical about a symmetry plane 330. The first battery pack 310 is disposed on one side of the symmetry plane 330, and the second battery pack 320 is symmetrically disposed on the other side of the symmetry plane 330 relative to the first battery pack 310. A preset distance L exists between the first axis 111 of the output shaft 110 and the symmetry plane 330. The preset distance L is greater than zero. FIG. 5 is a front view of the structure in FIG. 4 viewed from the direct front. For FIG. 5, the intersection line between the symmetry plane 330 and the paper surface of FIG. 5 forms a first intersection line 331, and the distance between the first axis 110 of the output shaft 110 and the first intersection line 331 is the preset distance L. In this example, the first battery pack 310 is disposed on the right side of the symmetry plane 330, and the second battery pack is disposed on the left side of the symmetry plane 330.

In this example, the first battery pack 310 is detachably mounted to the housing 200 along the direction of a first straight line 311, and the second battery pack 320 is detachably mounted to the housing 200 along the direction of a second straight line 321. The first straight line 311 is substantially parallel to the bottom plane 211, and the second straight line 321 is also substantially parallel to the bottom plane 211. That is to say, the detachment directions of the first battery pack 310 and the second battery pack 320 are each substantially parallel to the bottom plane 211. It is to be noted here that "substantially parallel" herein refers to that an included angle of less than or equal to 10 degrees may be formed between a straight line and a plane. In this example, the detachment directions of the first battery pack 310 and the second battery pack 320 are each substantially parallel to the first axis 111 of the output shaft 110.

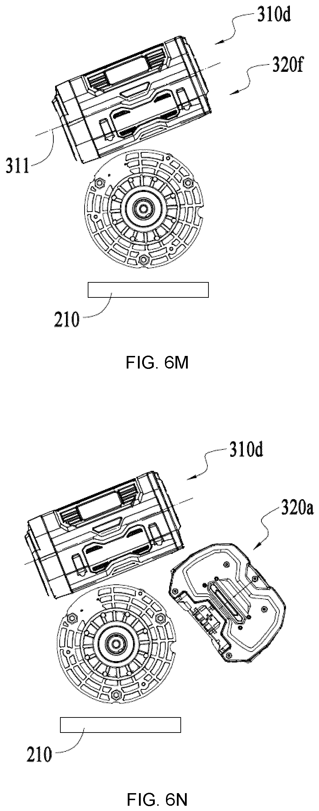

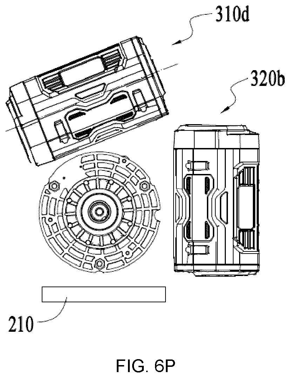

FIGS. 6a to 6k, FIG. 6m, FIG. 6n, and FIG. 6p disclose various examples of the present application, but these figures are only part of schematic views involved in the present application and do not cover all possibilities. The first battery pack (310a, 310b, 310c, and 310d) has multiple arrangement manners, and the second battery pack (320a, 320b, 320c, 320d, 320e, and 320f) also has multiple arrangement manners.

In an example, the first straight line 311 of the first battery pack 310 is substantially parallel to a working plane of the power unit 10, and the second straight line 321 of the second battery pack 320 is substantially parallel to the working plane. The working plane is a plane defined when the power unit 10 is placed on a working surface. In an example, the working plane is the receiving plane 220 of the power tool. Therefore, directions in which the first battery pack 310 and the second battery pack 320 are plugged or unplugged are each parallel to the working plane.

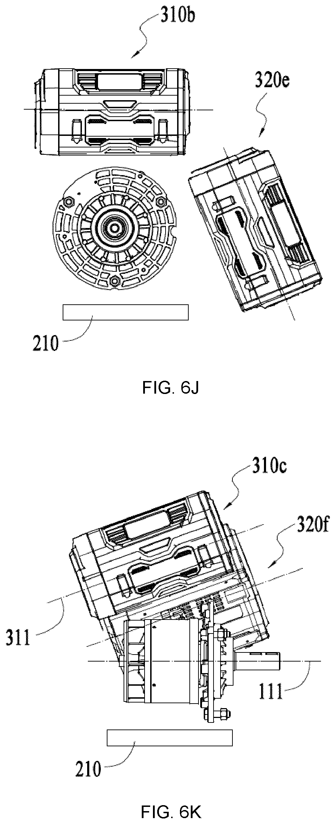

In an example, as shown in FIG. 4, FIG. 6k, and FIG. 6m, the first battery pack 310 is disposed above the output shaft 110, and the second battery pack 320 is disposed above the output shaft 110. The symmetry plane 330 exists between the first battery pack 310 and the second battery pack 320. The first battery pack 310 is disposed on the one side of the symmetry plane 330, and the second battery pack 320 is symmetrically disposed on the other side of the symmetry plane 330 relative to the first battery pack 310. The preset distance L exists between the output shaft 110 and the symmetry plane 330.

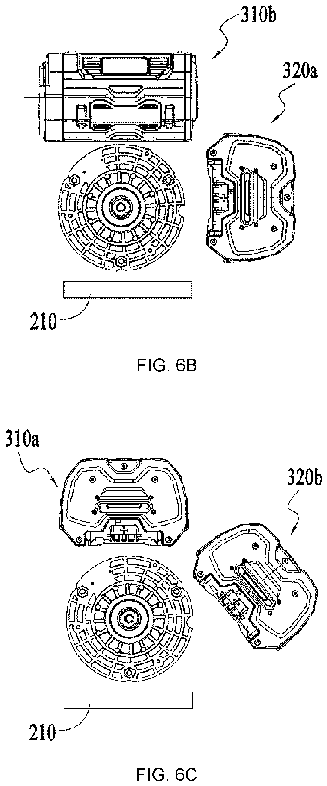

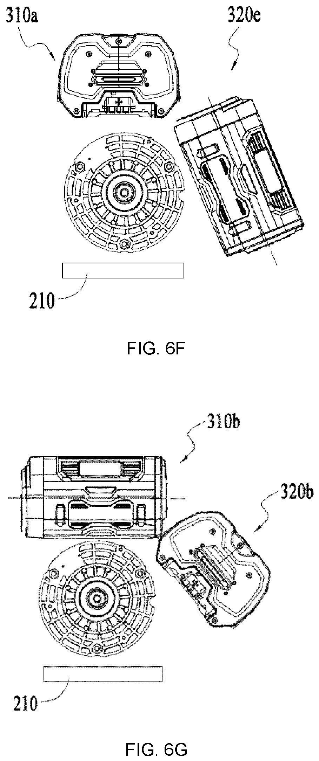

In an example, as shown in FIG. 6c, FIG. 6g, FIG. 6k, FIG. 6m, and FIG. 6n, the center of gravity of the first battery pack 310 is configured to be above the output shaft 110, and the center of gravity of the second battery pack 320 is also configured to be above the output shaft 110. In some examples, the distance between the center of gravity of the first battery pack 310 or the center of gravity of the second battery pack 320 and the first axis 111 of the output shaft 110 is greater than or equal to 2 cm. In some examples, the distance between the center of gravity of the first battery pack 310 or the center of gravity of the second battery pack 320 and the first axis 111 of the output shaft 110 is greater than or equal to 4 cm.

As shown in FIG. 4, FIG. 6k, and FIG. 6m, in an example, the first battery pack 310 is disposed above the output shaft 110, and the second battery pack 320 is disposed above the output shaft 110.

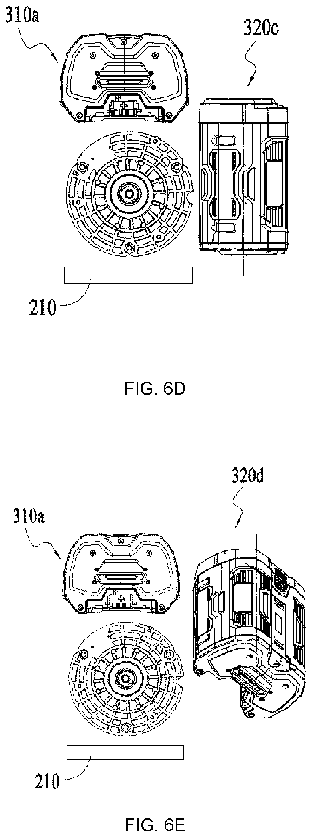

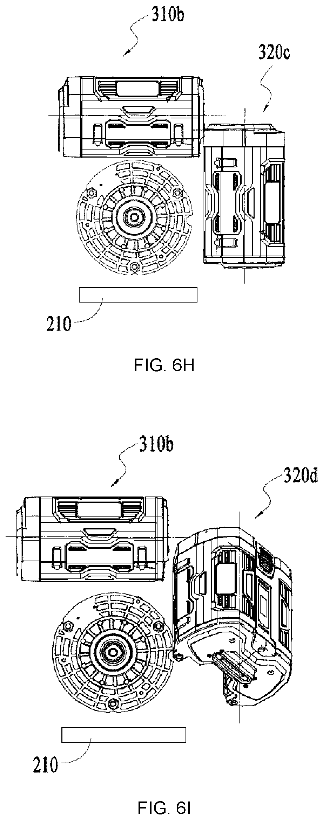

In an example, as shown in FIGS. 6a to 6j, FIG. 6n, and FIG. 6p, the first battery pack 310 is disposed on the upper side of the electric motor 120, and the second battery pack 320 is disposed on the left or right side of the electric motor 120. When the first battery pack 310 is disposed on the upper side of the electric motor 120, the first battery pack 310 may be detached in any direction as long as every part of the first battery pack 310 is disposed above the electric motor 120. The second battery pack 320 is disposed on the left or right side of the electric motor 120. The "left side" and the "right side" here refer to that a plane perpendicular to the base 210 and passing through the first axis 111 of the output shaft 110 is used as a reference plane, the left side of this reference plane is referred to as the "left side", and the right side of this reference plane is referred to as the "right side". As can be seen from FIGS. 6 to 12, the detachment directions of the battery packs in the power supply device 300 may be parallel to the bottom plane 211 or intersect with the bottom plane 211. It is to be noted that the drawings disclosed in the present application do not reflect all implementations of this example.

FIGS. 6a to 6j, FIG. 6n, and FIG. 6p are collectively described here. In these drawings, the first battery pack (310a, 310b, 310c, or 310d) and the second battery pack (320a, 320b, 320c, 320d, 320e, or 320f) are all "rectangular". Therefore, each of the first battery pack and the second battery pack has the longest direction. The dotted lines running through the first battery pack and/or the second battery pack in the drawings represent the longest directions of the battery packs. It is to be noted that in some examples, the detachment direction of each of the battery packs is substantially the same as the longest direction of each of the battery packs, and in some examples, the detachment direction of each of the battery packs is substantially perpendicular to the longest direction of each of the battery packs.

When the first battery pack and/or the second battery pack have a shape similar to a "square" or a "sphere" without an apparent longest direction, an arbitrary direction of the first battery pack and/or the second battery pack is defined as the longest direction. It is to be noted that the preceding description is also applicable when there are third and fourth battery packs.

In an example, as shown in FIG. 6d and FIG. 6h, the longest direction of the second battery pack 320c is substantially perpendicular to the base 210 and the bottom plane 211. The detachment direction and the mounting direction of the second battery pack 320 may either coincide with the longest direction or be perpendicular to the longest direction. The detachment direction and the mounting direction of the battery pack do not affect the arrangement manner of the first battery pack 310 and the arrangement manner of the second battery pack 320. In an example, the detachment direction and the mounting direction of the same battery pack may be different from each other.

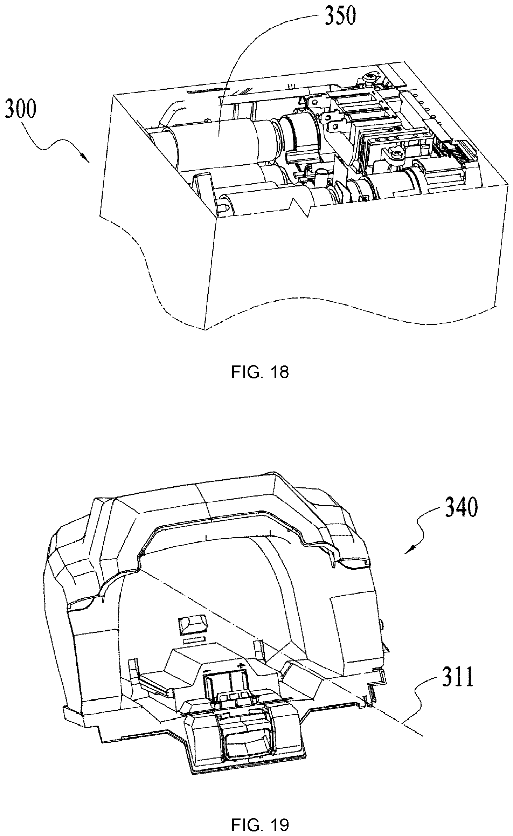

In an example, as shown in FIG. 6k and FIG. 6m, the power supply device 300 includes the first battery pack 310 for powering the output assembly 100. The first battery pack 310 can be mounted to a battery pack coupling portion 340 (see FIG. 19). The first battery pack 310 is detachably coupled to the battery pack coupling portion 340 along the direction of the first straight line 311, and the direction of the first straight line 311 is inclined relative to the direction of the first axis 111. That is, the detachment direction of the first battery pack 310 and the first axis 111 of the output shaft 110 are neither parallel to each other nor located on two planes parallel to each other.

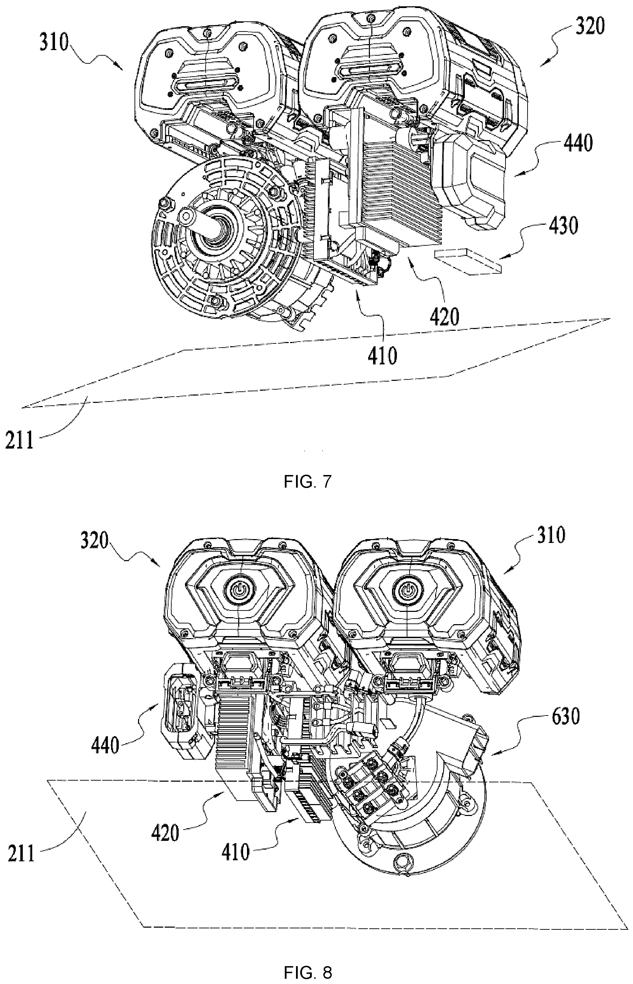

As shown in FIG. 7, in an example, the power supply device 300 includes the first battery pack 310 and the second battery pack 320 for powering the output assembly 100, and the first battery pack 310 is disposed on the upper side of the electric motor 120. The power unit 10 also includes a power management board 410. The power management board 410 includes a control circuit configured to control a power supply mode of the power supply device 300. The control circuit is configured to control discharging order, a discharge condition, and the like of the first battery pack 310 and the second battery pack 320 so as to drive the output assembly 100 to move. In some examples, the power management board 410 is disposed between the base 210 and the top surface 312 of the first battery pack 310.

It is to be noted that in this example, the detachment direction of the first battery pack 310 on the upper side of the electric motor 120 may be set according to actual conditions as long as the first battery pack 310 is spatially disposed above the electric motor 120. In addition, the position and detachment direction of the second battery pack 320 may be set according to the actual conditions. Each of FIG. 7 and FIG. 8 is only one implementation of this example and cannot be considered as all implementations.

As shown in FIG. 8, in some examples, the power unit 10 further includes a control board 420. The control circuit configured to control the electric motor 120 to start, stop, and run is disposed on the control board 420.

In an example, the power management board 410 is disposed between the first battery pack 310 and the base 210. In an example, the first battery pack 310 and the second battery pack 320 are symmetrical about the symmetry plane 330, and the power management board 410 is disposed between the first battery pack 310 and the second battery pack 320 and the base 210. In an example, a power management board 410a is disposed between the first battery pack 310 and the electric motor 120. In an example, the power management board 410 is disposed on the left or right side of the electric motor 120. In an example, the control board 420 and the power management board 410 are on two sides of the symmetry plane 330. In an example, the control board 420 and the power management board 410 are on the two sides of the symmetry plane 330.

In an example, the control board 420 is substantially parallel to the power management board 410. In an example, the control board 420 is inclined relative to the power management board 410.

In an example, the power unit 10 further includes a third circuit board 430 (see FIG. 7). In addition to the power management board 410 and the control board 420, the third circuit board 430 is another circuit board including an electronic element. The third circuit board includes an electronic element for controlling the power unit 10.

The power unit 10 further includes a first socket 440 (see FIG. 7 and FIG. 8). The first socket 440 is configured to connect an external battery pack to power the power unit 10. In an example, the external battery pack is a backpack battery pack capable of being carried by an operator on the back for use. In an example, the external battery pack is a hand-pulled battery pack capable of being pulled by the operator to move on the ground.

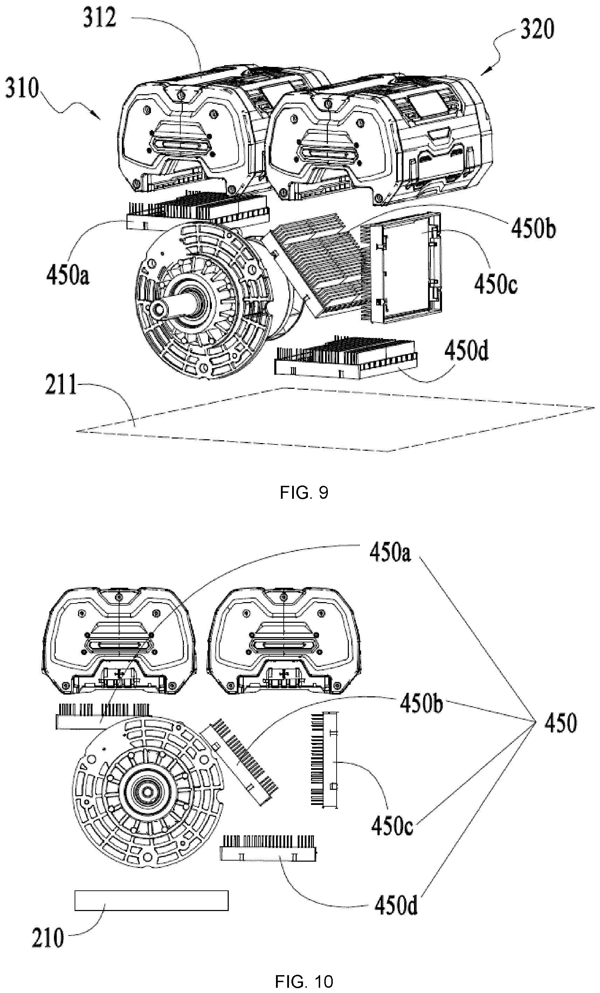

As shown in FIG. 9 and FIG. 10, a first element 450 is defined as any one of the power management board 410, the control board 420, the third circuit board 430 and/or the first socket 440. In an example, the first element 450 may be disposed within the position ranges shown in FIG. 9 and FIG. 10. That is to say, the first element (450a, 450b, 450c, or 450d) may be disposed between the top of the first battery pack 310 and the base 210, the first element (450a, 450b, 450c, or 450d) may be disposed between the first battery pack 310 and the base 210, and the first element (450a, 450b, 450c, or 450d) may be disposed on the left or right side of the electric motor 120.

In an example, the power unit 10 includes at least two of the power management board 410, the control board 420, the third circuit board 430, and the first socket 440, and the two are parallel to each other or inclined relative to each other.

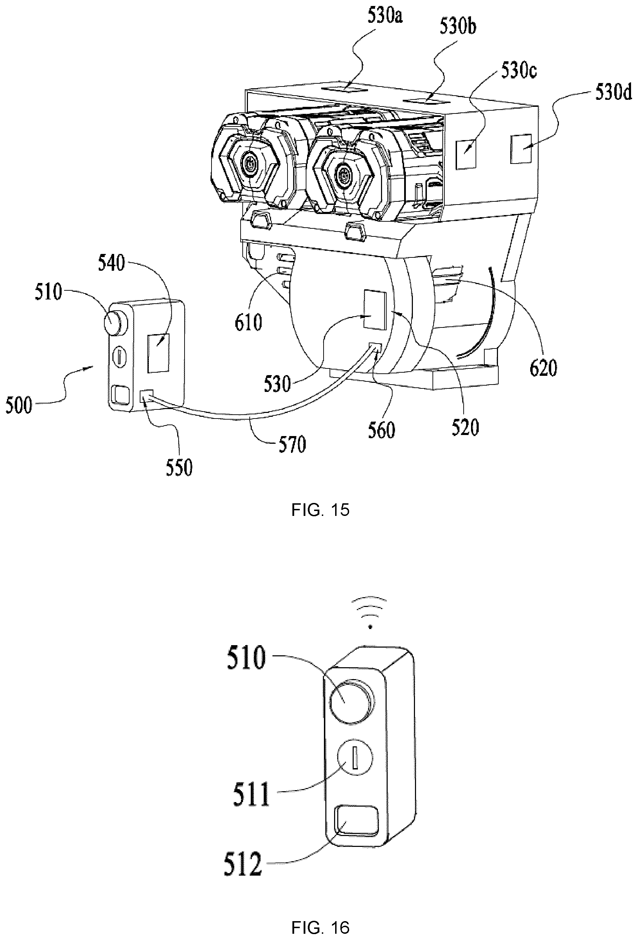

As shown in FIGS. 7 to 10, in an example, the housing 200 includes the base 210 and the sidewall 230. The base 210 is configured to be used for detachably mounting the power unit 10 to the power tool 10. The sidewall 230 is formed with a through hole 231 for the output shaft 110 to protrude forward from the housing 200 along the first axis 111. The power unit 10 further includes a circuit board assembly 450 for controlling the electric motor 120 and/or the power supply device 300. As shown in FIG. 15, the power unit 10 further includes a control device 500. The control device 500 includes a speed adjusting element 510 for controlling an output speed of the output shaft 110. At least part of the circuit board assembly 450 and at least part of the control device 500 are disposed on the same side of a vertical plane passing through the first axis 111.

In an example, the circuit board assembly 450 is disposed between the electric motor 120 and the first battery pack 310. In an example, the circuit board assembly 450 is disposed between the base 210 and the first battery pack 310. In an example, the circuit board assembly 450 is disposed between the base 210 and the top of the housing 200.

In an example, the power supply device 300 further includes the second battery pack 320. In an example, the first battery pack 310 and the second battery pack 320 are each disposed above the electric motor 210. In an example, the first battery pack 310 is disposed above the electric motor 120, and the circuit board assembly 450 is at least partially disposed between the first battery pack 310 and the second battery pack 320. In an example, the first battery pack 310 is disposed above the electric motor, and the circuit board assembly 450 is at least partially disposed between the electric motor 120 and the second battery pack 320.

In an example, the circuit board assembly 450 includes the control board 420, and the control device 500 is electrically connected to the control board 420 of the circuit board assembly 450.

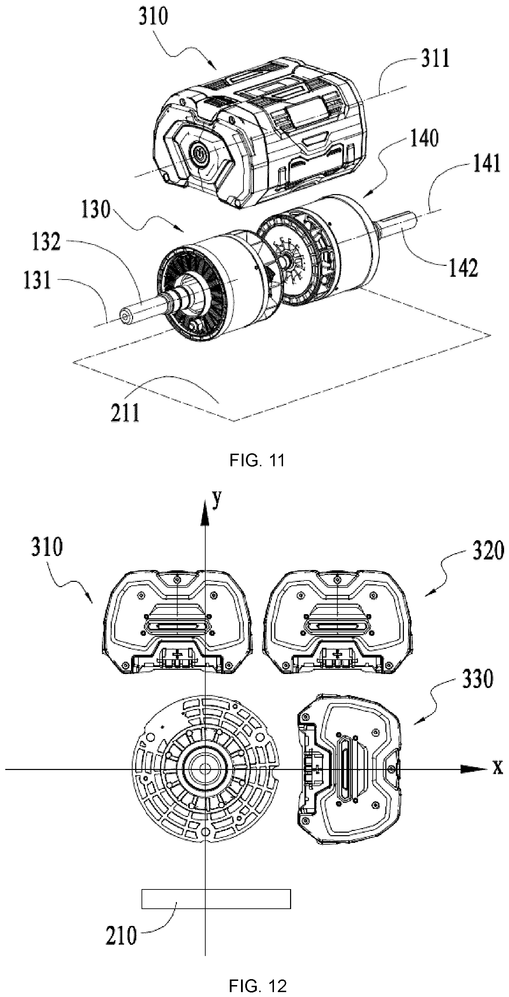

As shown in FIG. 11, the power unit 10 includes the output assembly 100, the housing 200, and the power supply device 300. The output assembly 100 includes a first electric motor 130 and a second electric motor 140. The first electric motor 130 includes a first electric motor shaft 132 rotatable about the first axis 131. The second electric motor 140 includes a second electric motor shaft 142 rotatable about a second axis 141. In an example, the first axis 131 and the second axis 132 coincide with each other. In an example, the first axis 131 and the second axis 132 are parallel to each other. In an example, the first axis 131 and the second axis 132 are inclined relative to each other. The power supply device 300 includes at least the first battery pack 310. The position and detachment direction of the first battery pack 310 and the numbers and positions of power management boards, circuit boards, control boards, and the like in the power unit 10 may be set according to the actual conditions.

In an example, the power supply device 300 includes at least the first battery pack 310, and the first battery pack 310 is disposed at least above the first electric motor 130 and the second electric motor 140. In an example, the first battery pack 310 is detachably plugged into or unplugged from the housing 200 along the direction of the first straight line 311, and the first straight line 311 is substantially perpendicular to the base 210. In an example, the power supply device 300 further includes the second battery pack 320. At least one of the first battery pack 310 and the second battery pack 320 is encapsulated in the housing 200. The first battery pack 310 and the second battery pack 320 are detachably mounted to the housing 200.

As shown in FIG. 12, the first axis 111 is used as the center, and an x-axis and a y-axis perpendicular to each other are formed. The base 210 is located in the negative direction of the y-axis. A projection of the bottom plane 211 on the x-y plane is substantially parallel to the x-axis. The first axis 111 is perpendicular to both the x-axis and the y-axis. The intersection point at which the first axis 111 is perpendicular to the paper surface is used as the intersection point of the x-axis and the y-axis. The region formed by the positive direction of the x-axis and the positive direction of the y-axis is defined as the first quadrant. The region formed by the negative direction of the x-axis and the positive direction of the y-axis is defined as the second quadrant. The region formed by the negative direction of the x-axis and the negative direction of the y-axis is defined as the third quadrant. The region formed by the positive direction of the x-axis and the negative direction of the y-axis is defined as the fourth quadrant.

In an example, the power unit 10 includes the first battery pack 310 and the second battery pack 320, and the first battery pack 310 and the second battery pack 320 are at least partially in the first quadrant and the second quadrant. In an example, the power unit 10 includes the first battery pack 310 and the second battery pack 320, and the first battery pack 310 and the second battery pack 320 are only in the first quadrant and the second quadrant. In an example, the power unit 10 further includes a third battery pack 330, and the third battery pack 330 is in the first quadrant and the fourth quadrant.

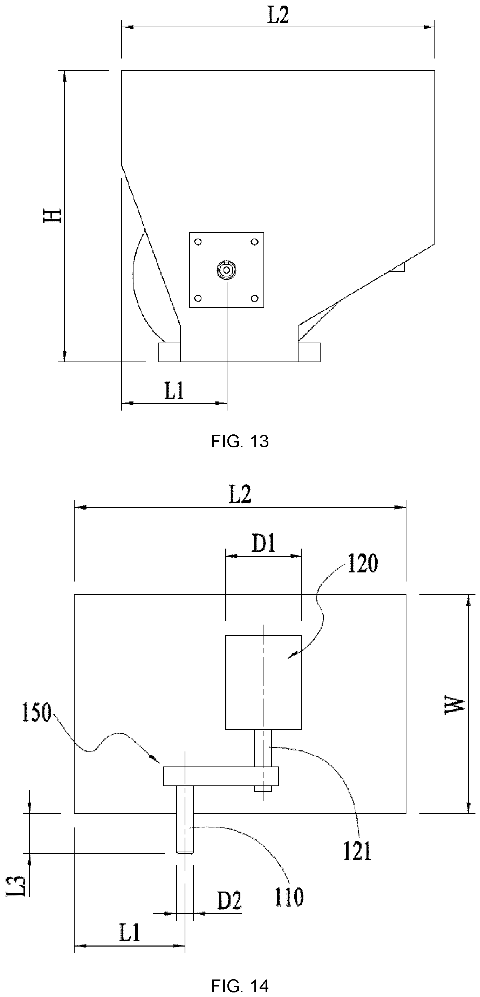

As shown in FIG. 14, in an example, the output assembly 100 of the power unit 10 further includes a transmission assembly 150 disposed between the electric motor 120 and the output shaft 110. The ratio of a rotational speed of the output shaft 110 to a rotational speed of the electric motor 120 is defined as a gear ratio of the transmission assembly 150. The gear ratio is higher than or equal to 2 and lower than or equal to 15. In an example, the gear ratio is higher than or equal to 4 and lower than or equal to 13. In an example, the gear ratio is higher than or equal to 6 and lower than or equal to 11. The transmission assembly 150 may include at least one stage of a gear transmission structure, for example, a planetary gear train, a bevel gear, or a helical gear. Alternatively, the transmission assembly 150 may include a pulley transmission structure or another mechanical structure with a deceleration function.

As shown in FIG. 15, in an example, the housing 200 is formed with a mounting portion 520 for mounting the control device 500. The mounting portion 520 includes a mounting structure 530 through which the control device 500 can be detachably mounted. The control device 500 includes a coupling portion 540 that can be detachably mounted to the housing 200 so that the coupling portion 540 mates with the mounting portion 520.

The control device 500 may be connected to the mounting structure 530 of the mounting portion 520 of the housing 200 slidably, pivotally, or through a press. In an example, the mounting structure 530 may include a slide groove to allow the control device 500 to slidably mate with the housing 200. In an example, the mounting structure 530 may include an operation member. When the operator operates the operation member, the control device 500 switches from the state of being clamped on the housing 200 to a detachable state. In an example, the mounting structure 530 may be an adhesion structure that has a certain adhesive force to be capable of causing the control device 500 and the housing 200 to adhere together and can be detached multiple times, for example, a Velcro nylon snap. In an example, the mounting structure 530 may be a structure with certain suction, for example, a magnet or a vacuum cup.

In an example, the mounting structure 530 forms an accommodation space, and the control device 500 can be placed in the accommodation space of the mounting structure 530 of the housing 200.

The control device 500 includes a first electrical connection interface 550. The power unit 10 includes a second electrical connection interface 560 electrically connected to the first electrical connection interface 550. In an example, the first electrical connection interface 550 and the second electrical connection interface 560 may be two interfaces for inserting cables. The control device 500 is connected to the control board 420 in the power unit 10 through a cable 570. The control device 500e may also be provided with a quick release mechanism so that it is convenient to detach the control device from the power unit 10 or mount the control device to the power unit 10 quickly.

The control device 500 has a separate state in which the control device 500 is detached from the mounting portion 520 to be mounted on the power unit 10. When the control device 500 is in the separate state, the control device 500 is electrically connected, through the cable 570, to the circuit board 420 including an electronic element for adjusting the rotational speed of the electric motor. The length of the portion of the cable 570 located outside the housing is greater than or equal to 10 cm when the control device 500 is in the separate state.

In an example, the first electrical connection interface 550 and the second electrical connection interface 560 are cable channels, and the length of the cable between the control device 500 and the control board 420 is greater than or equal to 10 cm. In some examples, the length of the cable between the control device 500 and the control board 420 may be 20 cm, 25 cm, 30 cm, 35 cm, or the like and may be incremented up to 200 cm at an interval of 5 cm.

It is to be noted that the first electrical connection interface 550 and the second electrical connection interface 560 may have various shapes, for example, a rectangular shape, a circular shape, the shape of an elongated slot, and various irregular shapes. The cable may only pass through the first electrical connection interface 550 and/or the second electrical connection interface 560. Alternatively, the cable may move to different positions along the housing 200 in the first electrical connection interface 550 and/or the second electrical connection interface 560. For example, the second electrical connection interface 560 on the housing 200 may be a track slot. The operator may separate the coupling portion 540 of the control device 500 from the mounting portion 520 on the housing 200 and move the control device 500 to another position on the housing 200. The cable is movable in the track slot during the movement of the control device 500.

In an example, the length of the cable 570 is 20 cm, and the control device 500 may be mounted at multiple positions on the housing 200. The positions of the mounting structures 530, 530a, 530b, 530c, and 530d in FIG. 15 are only some examples, and each surface of the housing 200 may become a surface where the mounting structure 530 is disposed. The operator may place the control device 500 at a proper position according to actual needs.

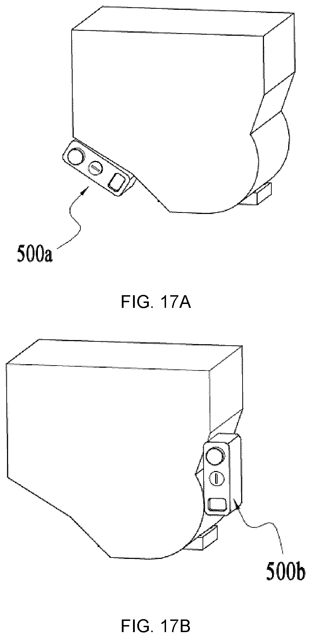

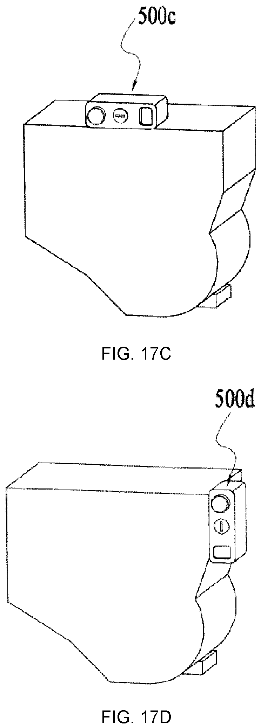

As shown in FIGS. 17a to FIG. 17d, the control device 500 has at least two workable positions. The power unit 10 can work normally when the control device 500 is at each of the two positions. A control device 500a is mounted on the second left sidewall 2342. A control device 500b is mounted in the middle section of the right sidewall 235. A control device 500c is mounted on the top of the housing 200. A control device 500d is mounted in the upper section of the right sidewall 235. In an example, the control device 500 is movable to the position of the mounting structure 530. In an example, the control device 500 is connected to a host through the cable 570. In an example, the control device 500 is connected to the host through wireless communication.

In an example, the length of the cable is 200 cm, and the control device 500 can be moved to a handle portion of the power tool adapted to the power unit 10 or another position for the operator to conveniently control the power unit 10. The control device 500 of the power unit 10 has a third electrical connection interface, and the third electrical connection interface of the power unit 10 is connected to the handle portion. In an example, the control device 500 may be fixed, through a strap, to the power tool used in conjunction with the power unit 10.

In an example, as shown in FIG. 15, the control device 500 is configured to form a wireless communication connection with the circuit board 420 when the control device 500 is in the separate state where the control device 500 is detached from the mounting portion 520. The control device 500 includes at least the speed adjusting element 510, a main switch 511, and a display interface 512.

In an example, the control device 500 is configured to be capable of performing a wireless communication connection with another electronic device. For example, the control device 500 performs the wireless communication connection with the power tool used in conjunction with the power unit 10 so that the data required by the operator is displayed on the electronic device of the power tool. That is, the information on the control device 500 of the power unit 10 can be displayed in the electronic device. Alternatively, the power unit 10 may be adjusted through an operation on another electronic device.

In an example, the power unit 10 includes the circuit board 430 disposed in the housing 200, and the mounting structure 530 is also configured to be capable of causing the control device 500 to be electrically connected to the circuit board 430.

As shown in FIG. 13 and FIG. 14, the distance between the output shaft 110 and the outer edge of the sidewall 230 is a first length L1, and the distance of the power unit 10 in a left and right direction is the length L2 of the whole machine. The ratio of the first length L1 to the length L2 of the whole machine is higher than or equal to 0.02 and lower than or equal to 0.5.

In an example, the first length L1 is the distance between the first axis 111 of the output shaft 110 and the outermost edge of the left sidewall 234 or the right sidewall 235 closer to the output shaft 110. In the example shown in FIG. 13 and FIG. 14, the first length L1 is the distance between the output shaft 110 and the outer edge of the closer left sidewall 234, and the first length L1 is greater than or equal to 10 mm. In some example, the first length L1 may be 20 mm, 30 mm, 40 mm, or 50 mm and may be incremented up to 220 mm at an interval of 10 mm. When the electric motor shaft 121 of the electric motor 120 is connected to the output shaft 110 through the transmission assembly 150 in the manner shown in FIG. 14, the first length L1 may be as little as 10 mm.

The longest distance of the power unit 10 in the left and right direction is the length L2 of the whole machine, and the length L2 of the whole machine is greater than or equal to 200 mm. In some examples, the length L2 of the whole machine may be 230 mm, 260 mm, 300 mm, 350 mm, 380 mm, 410 mm, or 450 mm to accommodate different types of electric motors 120 and first battery packs 310 and second battery packs 320 of different numbers, dimensions, and arrangement manners.

In some examples, the ratio of the first length L1 to the length L2 of the whole machine is higher than or equal to 0.02 and lower than or equal to 0.5.

The thickness of the power unit 10 along a front and rear direction is the thickness W of the whole machine. The thickness W of the whole machine is the thickness of the housing 200 in the front and rear direction and does not include the thickness of the portion of the output shaft 110 outside the housing 200. The thickness W of the whole machine is greater than or equal to 150 mm. In some examples, the thickness W of the whole machine may be 165 mm, 180 mm, 195 mm, 205 mm, 215 mm, 225 mm, 240 mm, or 255 mm.

The height of the power unit 10 along an up and down direction is the height H of the whole machine. In this example, the height H of the whole machine is the height of the housing 200 in the up and down direction. The height H of the whole machine is greater than or equal to 250 mm. In some examples, the height H of the whole machine may be 275 mm, 290 mm, 320 mm, 335 mm, 340 mm, 360 mm, 375 mm, or 385 mm.

The product of the height of the power unit 10 along the up and down direction, the width of the power unit 10 along the left and right direction, and the thickness of the power unit 10 along the front and rear direction is defined as the volume of the power unit 10. The volume of the power unit 10 is greater than or equal to 7.5×10^6 mm^3. In an example, the length L2 of the whole machine is about 340 mm, the thickness W of the whole machine is about 220 mm, and the height H of the whole machine is about 340 mm. In this case, the volume of the power unit 10 is about 0.025 m^3.

The maximum output power of the electric motor 120 is defined as the maximum instantaneous power of the electric motor 120 in operation. In an example, the maximum output power of the electric motor 120 is greater than or equal to 500 W and less than or equal to 10000 W The ratio of the maximum output power of the electric motor 120 to the volume of the power unit 10 is higher than or equal to 1×10^(-5) (W/mm^3) and lower than or equal to 1.33×10^(-3) (W/mm^3). For a power unit 10 with the electric motor 120 directly driving the power tool, the maximum output power of the electric motor 120 is the maximum output power of the power unit 10. Therefore, the ratio of the maximum output power of the power unit 10 to the volume of the power unit 10 is higher than or equal to 1×10^(-5) (W/mm^3) and lower than or equal to 1.33×10^(-3) (W/mm^3). In other words, the ratio of the maximum output power of the power unit 10 to the volume of the power unit 10 is higher than or equal to 10000 (W/m^3) and lower than or equal to 1330000 (W/m^3).

In some examples, the output power of the power unit 10 may be about 3000 W, 4000 W, 5000 W, or 6000 W In an example, the output power of the power unit 10 is greater than or equal to 3000 W and less than or equal to 7000 W In an example, the output power of the power unit 10 is greater than or equal to 3000 W and less than or equal to 5000 W

The distance between the output shaft 110 and the bottom plane 211 is greater than or equal to 5 mm. In some examples, when the transmission assembly 150 connects the electric motor 120 and the output shaft 110, the output shaft 110 protrudes from the upper side of the bottom plane 211, and the distance between the output shaft 110 and the bottom plane 211 may be as little as 5 mm.

In an example, the output shaft 110 protrudes from the lower side of the bottom plane 211. In this case, the power unit 10 may include the transmission assembly 150. In this example, the ratio of the distance between the output shaft 110 and the base 210 to the height H of the power unit 10 in a vertical direction is higher than or equal to 0.01.

In an example, the output shaft 110 protrudes from the upper side of the sidewall 230. In this case, the power unit 10 may include the transmission assembly 150. In this example, the ratio of the distance between the output shaft 110 and the base 210 to the height H of the power unit 10 in the vertical direction is higher than 1.

In an example, the output shaft 110 protrudes from the sidewall 230. In this case, the power unit 10 may include the transmission assembly 150. In this example, the ratio of the distance between the output shaft 110 and the base 210 to the height H of the power unit 10 in the vertical direction is higher than or equal to 0.01 and lower than or equal to 1.

The length by which the output shaft 110 protrudes from the housing 200 is a protruding length L3. The diameter of the output shaft 110 is a shaft diameter D2. It is to be noted that the shaft diameter D2 refers to a diameter at the point on the output shaft 110 with the maximum diameter. The ratio of the protruding length L3 to the shaft diameter D2 is higher than 1 and lower than 10. The diameter D2 of the output shaft 110 is greater than or equal to 10 mm and less than or equal to 50 mm. In some examples, the diameter D2 of the output shaft 110 is 15 mm, 20 mm, 25 mm, 30 mm, or 35 mm.

It is to be noted that for the outer diameter of the electric motor, when the electric motor 120 is an inrunner, the outer diameter of the electric motor 120 is the stator diameter of the inrunner, that is, a lamination diameter; and when the electric motor 120 is an outrunner, the outer diameter of the electric motor 120 is the diameter of the rotor sleeve of the outrunner. The outer diameter D1 of the electric motor 120 is greater than or equal to 75 mm. In some examples, the outer diameter D1 may be 85 mm, 95 mm, 105 mm, 115 mm, 125 mm, 135 mm, or 145 mm.

The ratio of the diameter of the output shaft 110 to the outer diameter of the electric motor is higher than or equal to 0.069 and lower than or equal to 0.4.

The total capacity of the power supply device 300 is the sum of the capacities of all battery packs of the power supply device 300. In this example, when the power supply device 300 includes only one battery pack, the minimum value of the total capacity of the power supply device 300 is 2 Ah. In an example, when the power supply device 300 includes two battery packs, the total capacity of the power supply device 300 may be 24 Ah. In an example, when the power supply device 300 includes three battery packs and one of the three battery packs is the backpack battery pack, the total capacity of the power supply device 300 may be 52 Ah. The product of the total capacity of the power supply device 300 and the maximum output power of the electric motor 120 is greater than or equal to 1000 W Ah.

In an example, the total capacity of the power supply device 300 is greater than or equal to 2 Ah and less than or equal to 52 Ah. In an example, the power supply device 300 includes two battery packs, and the capacity of each of the two battery packs is 10 Ah. In an example, the power supply device 300 may include two battery packs with different capacities. When the total capacity of the power supply device 300 is excessively large, the power supply device may be caused to be excessively heavy, affecting the portability of the power unit 10.

The power supply device 300 may include different types of battery units (also referred to as cells). That is, the power supply device 300 may include the cells having one or more characteristics that are different from each other. The cells may have different physical dimensions (for example, different diameters and different lengths), different shapes (for example, a circular shape and a prismatic shape), different chemical compositions (for example, different lithium-based materials or different other chemical compositions), or different operational characteristics (for example, a capacity (Ah), temperature performance, and a nominal voltage). The cells may also have various combinations of the preceding characteristics. In terms of the chemical compositions, the cells may include lithium batteries, lithium iron phosphate batteries, lithium-carbon capacitor batteries, and the like. The outer package of each of the cells may be a deformable structure. For example, each of the cells expands and deforms when a chemical reaction occurs. The first battery pack 310 includes a first cell 350, and the second battery pack 320 includes a second cell (not shown in the figure). The first cell and the second cell may have different materials or different shapes.

The first battery pack 310 and the second battery pack 320 may have different physical dimensions, different shapes, different chemical compositions, different operational characteristics, and the like or may have different combinations of these different characteristics.

In an example, the first battery pack 310 includes a first cell 350 disposed in the housing 200, the second battery pack 320 is detachably connected to the housing, and the housing 200 is formed with the battery pack coupling portion 340 to which the second battery pack 320 is detachably mounted.

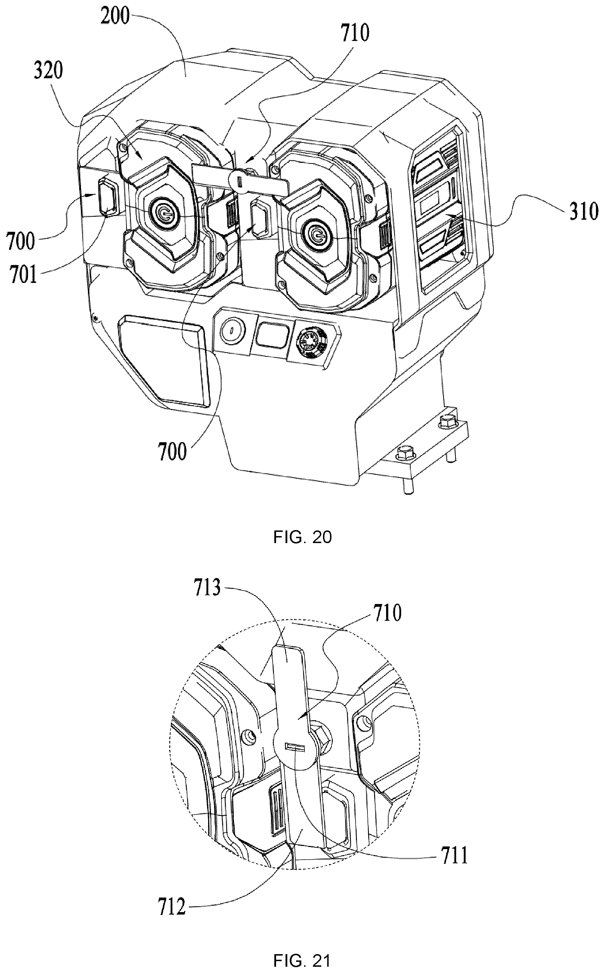

As shown in FIG. 21, in an example, one of the first battery pack 310 and the second battery pack 320 is fixed to the housing 200 of the power unit 10, and the other one of the first battery pack 310 and the second battery pack 320 is detachably disposed on the power unit 10. The first battery pack 310 or the second battery pack 320 fixed to the housing 200 is defined as a "fixed battery pack", and the other one that is detachable is referred to as a "detachable battery pack". The operator cannot detach the "fixed battery pack" from the power unit 10 or mount the "fixed battery pack" to the power unit 10 by himself/herself. Only when the operator uses an additional tool (such as a screwdriver or a screwdriver bit) to open the housing 200 of the power unit 10 or when the housing of the power unit 10 is damaged can the "fixed battery pack" be detached. However, for the "detachable battery pack", in some examples, the operator commonly only needs to operate the detachment button on the power unit 10 such that the "detachable battery pack" can be detached. Therefore, when the "fixed battery pack" is charged, a charging power supply needs to be inserted into an interface of the power unit 10 for an operation.

In an example, the first battery pack 310 is configured to be detachable from the housing 200 to power another power tool. The housing 200 is formed with the battery pack coupling portion 340 to which the first battery pack 310 can be detachably mounted.

In an example, the first battery pack 310 is mounted to the housing 200, and the second battery pack 320 is configured to be detachable from the housing 200 of the power unit 10. In addition, the second battery pack 320 can still power the power unit 10 when being separate from the housing 200. It is to be noted that "being separate" here refers to spatial separation, that is, mechanical separation. When the power unit 10 is in a working state, the second battery pack 320 and the power unit 10 still remain electrically connected to each other. In an example, when the second battery pack 320 is placed outside the housing 200, the second battery pack may remain electrically connected to the housing.

In an example, the power unit 10 includes the control board 420. The control board 420 includes an electronic element for controlling the electric motor 120. The second battery pack 320 is configured to be connectable to the control board 420. In an example, the second battery pack 320 can be carried by a user on the back for use. In an example, the power unit 10 has a first coupling portion, the second battery pack 320 has a first mounting portion, and the first mounting portion of the second battery pack 320 can be mounted to the first coupling portion of the power unit 10. In an example, the first coupling portion is disposed on the top or sidewall 230 of the power unit.

In an example, the second battery pack 320 has a second mounting portion, and the second mounting portion can cause the second battery pack 320 to be mounted on an even surface. The even surface may be a surface on the power tool, a surface on the power unit 10, or a surface outside the power tool such as a wall next to the power tool. In an example, the second battery pack has the second mounting portion, and the second mounting portion may be hung, slidably mounted, pivotally mounted, or mounted through a press. In an example, the second mounting portion of the second battery pack may be mounted to the power unit. In an example, the second mounting portion of the second battery pack may be mounted to the power tool mating with the power unit.

As shown in FIG. 8 and FIG. 15, an air guide channel 630 is outside the electric motor 120. The air guide channel 630 dissipates heat for the electric motor 120. As shown in FIG. 15, the housing 200 of the power unit 10 has an air inlet 610 and an air outlet 620. In this example, the air inlet 610 and the air outlet 620 are on two sides of the vertical plane passing through the first axis 111 of the output shaft 110.

As shown in FIG. 20, the power supply device 300 is mounted to the housing 200 through the battery pack coupling portion 340. The battery pack coupling portion 340 has an electrode plate to electrically connect the battery pack to elements in the housing 200 such as the control board 420. The power unit 10 includes a first locking assembly 710 and an auxiliary locking assembly 700. The first battery pack 310 is fixedly mounted to the battery pack coupling portion 340 through both the first locking assembly 710 and the auxiliary locking assembly 700. Thus, the first battery pack 310 does not loosen or fall off the housing 200 under huge vibrations. In addition, the anti-theft performance of the first battery pack 310 is improved. When the power unit 10 further includes the second battery pack 320, the first locking assembly 710 can also prevent the second battery pack 320 from falling off.

An example of the first locking assembly is introduced below. As shown in FIG. 20 and FIG. 21, the first locking assembly 710 has at least a locking position and an unlocking position. FIG. 20 shows that the first locking assembly 710 is at the locking position. FIG. 21 shows that the first locking assembly 710 is at the unlocking position. The first locking assembly 710 includes a locking hole 711. The user needs to use a first unlocking tool to switch the first locking assembly 710 between the locking position and the unlocking position. The first locking assembly 710 restricts the movement of the first battery pack 310 when the first locking assembly 710 is located at the locking position. The first locking assembly 710 does not restrict the movement of the first battery pack when the first locking assembly 710 is located at the unlocking position.

The first locking assembly 710 further includes a first end 712 and a second end 713 disposed at two sides of the locking hole 711, respectively. The lines from the first end 712 and the second end 713 to the locking hole 711 form a straight line substantially. When the first locking assembly 710 is at the unlocking position, the first end 712 and the second end 713 do not block the plugging or unplugging paths of the first battery pack 310 and the second battery pack 320. When the first locking assembly 710 is at the locking position, the first end 713 blocks one side of the first battery pack 310, resulting in that the first battery pack 310 cannot be plugged or unplugged, and the second end 713 blocks one side of the second battery pack 320, resulting in that the second battery pack 320 cannot be plugged or unplugged.

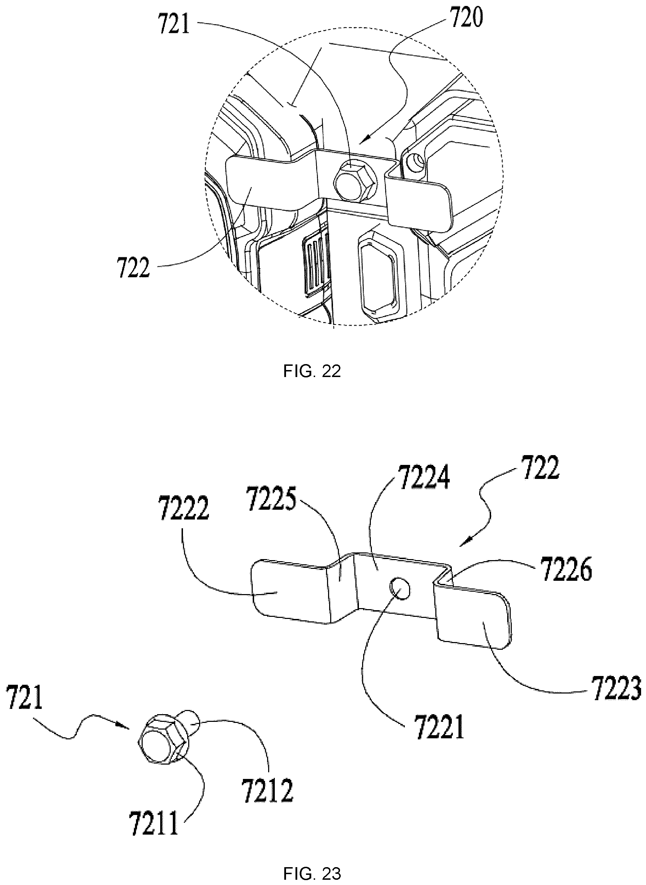

FIG. 22 and FIG. 23 show another example of the first locking assembly. The first locking assembly 720 includes a locking member 721 and a locking plate 722. In this example, the locking plate 722 includes a locking hole 7221. The locking member 721 passes through the locking hole 7221 to fix the locking plate 722 on the housing 200. In an example, the locking member 721 is an external hex screw. In some examples, the locking member 721 may be an internal hex screw or a flower-shaped screw. The user tightens or loosens the locking member 721 using a regular detachment tool such as an adjustable wrench. One end of the locking member 721 is an operation head 7211, and the other end of the locking member 721 includes an external thread 7212. The detachment tool acts on the operation head 7211 so that the locking member 721 is screwed in or out. Therefore, in this example, the first unlocking tool is a wrench. External hex screws of regular dimensions may be tightened or loosened with the wrench. The wrench may be obtained by the user himself or herself or may be connected to the power unit 10 for easy access by the user.

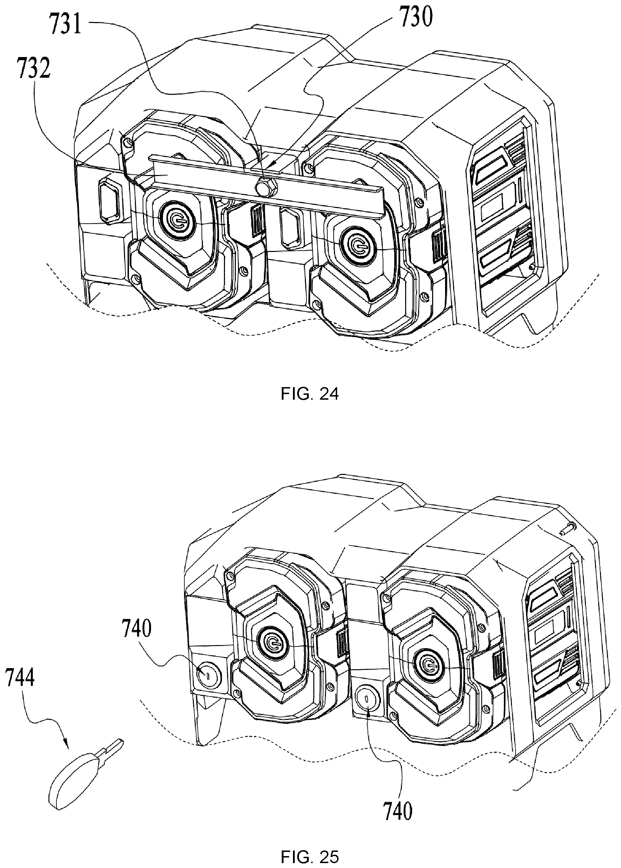

FIG. 23 and FIG. 24 show two examples of the locking plate 722.

The locking plate 722 disclosed in FIG. 23 includes a first baffle 7222 and a second baffle 7223. The first baffle 7222 and the second baffle 7223 block the edges of the two battery packs, respectively. The locking plate 722 also includes a first connection plate 7225 forming an included angle with the first baffle 7222 and a second connection plate 7226 forming an included angle with the second baffle 7223. The first connection plate 7225 and the second connection plate 7226 are connected by a third connection plate 7224. The locking hole 7221 is provided on the third connection plate 7224. The first baffle 7222, the first connection plate 7225, the third connection plate 7224, the second baffle 7223, and the second connection plate 7226 collectively form a recessed shape.

A first locking assembly 730 in FIG. 24 includes a locking member 731 and a locking plate 732. The requirements on the locking member 731 in FIG. 24 are substantially the same as those on the locking member 721 in FIG. 23. The details are not repeated here. The locking plate 732 in FIG. 24 is elongated, and two ends of the locking plate 732 block the two battery packs at the same time.

The first locking assemblies shown in FIGS. 20 to 24 serve to be capable of better fixing the power supply device 300 under the huge vibrations. Under some working conditions, the power unit 10 may vibrate violently and the body may incline, which means that the auxiliary locking assembly 700 alone may not provide a sufficient locking force to lock the power supply device 300. As a result, the first battery pack 310 and/or the second battery pack 320 loosen or fall off, or the mechanical structures of the auxiliary locking assembly 700 and the battery pack coupling portion 340 are deformed and damaged.

In an example, the first unlocking tool may be a "key" adapted to only the power unit 10. Thus, when the first locking assembly 710 is at the locking position, the first battery pack 310 cannot be removed without the first unlocking tool. This ensures the safety of the first battery pack 310 and prevents it from being stolen. After unlocking the first locking assembly 710 with the first unlocking tool, the user quickly removes the first battery pack 310 by operating the auxiliary locking assembly 700. The auxiliary locking assembly 700 has a button 701. The user can remove the first battery pack 310 by pressing the button 701 with no unlocking tool.

FIGS. 25 to 30 show an example of a first unlocking tool 744.

The power unit 10 also includes a second locking assembly 760. The second battery pack 320 is fixed to the power unit 10 through the second locking assembly 760. The second locking assembly 760 has a locking position and an unlocking position. When the second locking assembly 760 is located at the locking position, the second locking assembly 760 restricts the movement of the second battery pack 320. When the second locking assembly 760 is located at the unlocking position, the second locking assembly 760 does not restrict the movement of the second battery pack 320.

As shown in FIG. 25, the first unlocking tool 744 has a structure similar to the "key", and a first locking assembly 740 has a structure similar to a "keyhole". The first locking assembly 740 is disposed on the housing 200 of the power unit 10. The first unlocking tool 744 can drive the first locking assembly 740 to perform a locking or unlocking operation, thereby mounting or detaching the power supply device 300.

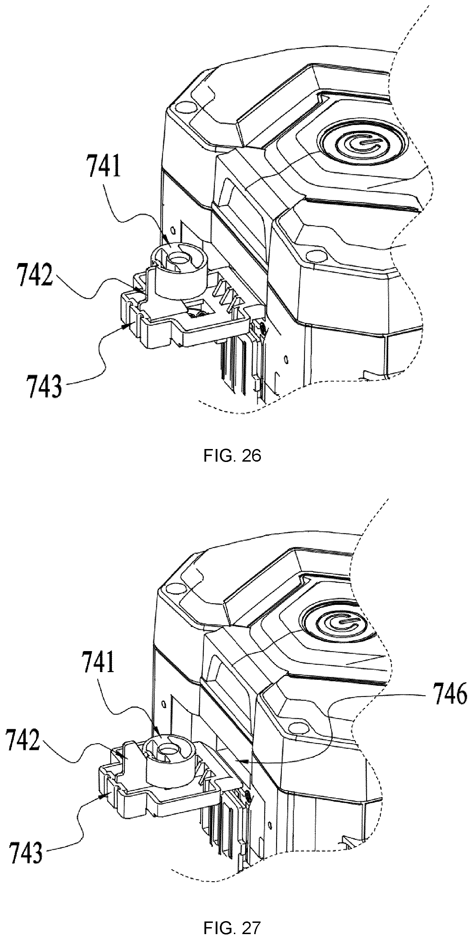

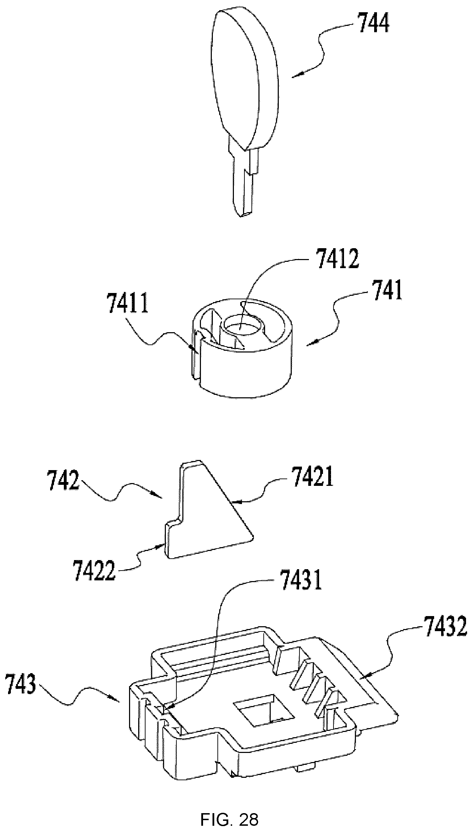

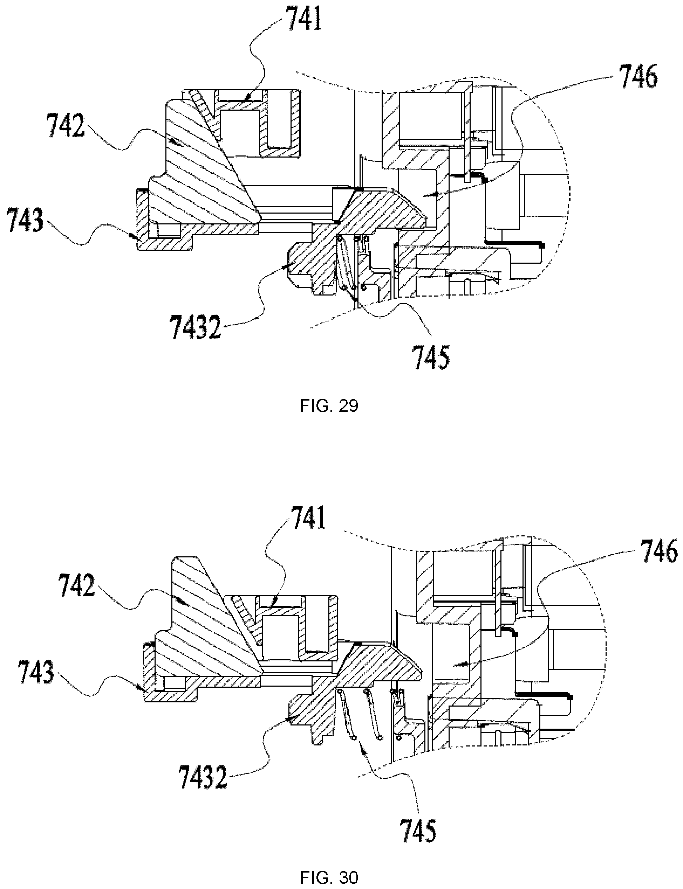

FIG. 26 is a schematic view showing that the first locking assembly 740 is at the locking position. FIG. 27 is a schematic view showing that the first locking assembly 740 is at the unlocking position. FIG. 28 is an exploded view of the first locking assembly 740. FIG. 29 is a side sectional view of FIG. 26. FIG. 30 is a side sectional view of FIG. 27.

The first locking assembly 740 includes a moving member 741, a fixing member 742, and an insertion member 743. A slide groove 7411 is provided on the moving member 741. The fixing member 742 is substantially in the shape of a right triangle. A leg 7422 of the fixing member 742 drives the insertion member 743 to move. The hypotenuse 7421 of the fixing member 742 is inserted into the slide groove 7411, allowing the slide groove 7411 to move on the fixing member 742. In this example, the slide groove 7411 is a linear groove. In an example, the slide groove 7411 may be a spiral groove as long as there is a height difference between the upper and lower ends of the slide groove 7411. As shown in FIG. 27, a locking opening 746 is provided on the power supply device 300 for the first locking assembly 740 to lock or unlock. A first groove 7431 is provided on the insertion member 743 to mate with the fixing member 742 so that the insertion member 743 can be driven, by the movement of the fixing member 742, to move. The insertion member 743 also includes a protruding portion 7432.

When the first unlocking tool 744 is inserted into a hole 7412 on the moving member 741 and pressed downward, the moving member 741 starts moving from the locking position shown in FIG. 26 and FIG. 29. When the moving member 741 moves downward to the bottom, that is, the unlocking position shown in FIG. 27 and FIG. 30, the protruding portion 7432 moves out of the locking opening 746, thereby unlocking the power supply device 300. A first elastic member 745 is disposed between the insertion member 743 and the power supply device 300 so that the insertion member 743 can be automatically reset when the first unlocking tool 744 is moved out of the moving member 741.

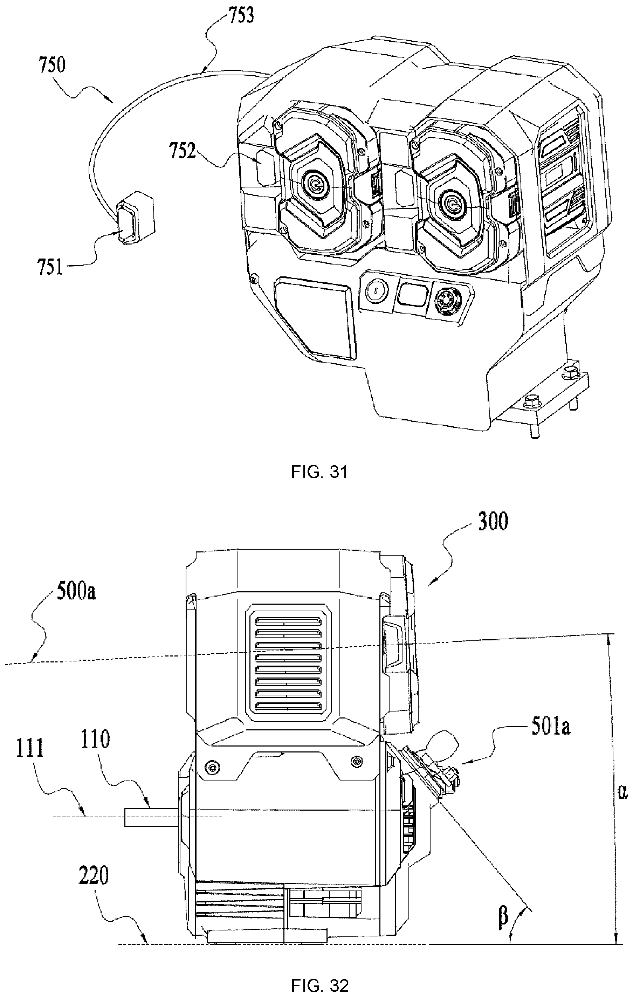

FIG. 31 shows an example of a first unlocking tool 751. The first unlocking tool 751 is connected to the power unit 10 through a first connector 753. In an example, the first connector 753 is connectable to the inside of the power unit 10 or the outside of the power unit 10 through a hook or the like, thereby avoiding the loss of the first unlocking tool 751. A third locking structure 752 is disposed on the power unit 10. Only when the first unlocking tool 751 mates with the third locking structure 752 and is operated by the user can the power supply device 300 be unlocked. For example, the first unlocking tool 751 mates with the third locking structure 752 and is pressed downward. In this case, the first battery pack 310 is detachable. In an example, a mating structure is provided on the first unlocking tool 751, and a receiving structure is provided on the third locking structure 752. When the mating structure mates with the receiving structure, the third locking structure 752 can be driven to perform the unlocking operation. The user cannot directly unlock the third locking structure 752 manually. The benefit of this configuration is to prevent the power supply device 300 from accidentally falling out due to an accidental touch or the like on the power unit 10 working under complex working conditions. Under some working conditions, the power supply device 300 is not parallel to the horizontal plane, or the mounting direction of the power supply device 300 forms an included angle with the output shaft 110. In this case, the first unlocking tool 751 is separated from the third locking structure 752, preventing the power supply device 300 from falling out due to accidental triggering by the user. A storage space such as a storage compartment may also be disposed on the power unit 10 to safely store the first unlocking tool 751 so that the first unlocking tool 751 can be obtained when the user needs it.

It is to be noted that the various locking and unlocking manners of the power supply device 300 disclosed in FIGS. 20 to 31 may be used together. For example, the first locking assembly 710 and the first locking assembly 740 may be used for locking the first battery pack 310 at the same time, thereby implementing double locking and preventing the first battery pack 310 from being stolen.

In an example, the power unit 10 includes only one battery pack, that is, the first battery pack 310. In an example, the power unit 10 includes the first battery pack 310 and the second battery pack 320. The first battery pack 310 is locked to the power unit 10 by the first locking assembly. The second battery pack 320 is locked to the power unit 10 by the second locking assembly. The first unlocking tool can be used for unlocking both the first locking assembly and the second locking assembly. In an example, the power unit 10 includes the first battery pack 310 and the second battery pack 320. The first battery pack 310 and the second battery pack 320 are each locked to the power unit 10 by the first locking assembly. The first unlocking tool can simultaneously unlock the first locking assembly and the second locking assembly.

In conjunction with FIG. 6k and FIG. 32, when viewed from the left side of the power unit 10, the first battery pack 310 is detachably mounted to the power unit 10 along the first straight line 311. In an example, a first included angle α is formed between the first straight line 311 and the receiving plane 220. The first included angle α is greater than or equal to 2 degrees and less than or equal to 30 degrees. The configuration of the second battery pack 320 is similar to that of the first battery pack 310. Thus, an included angle is formed between the top surface 312 of the power supply device and the receiving plane 220. The benefit of the configuration is that in the case where it rains or the like, a drainage angle can be formed at the top of the power supply device 300 so that it is difficult for water to accumulate and the service life of the power supply device is prolonged. On the other hand, when the battery pack is inclined, it is easier for the user to plug and unplug the battery pack.

Similarly, the top surface 312 of the power supply device 300 may be configured to form an included angle with the first straight line 311. When the first straight line 311 is substantially parallel to the receiving plane 220, the included angle is maintained between the top surface 312 and the receiving plane 220, thereby achieving the same drainage effect.

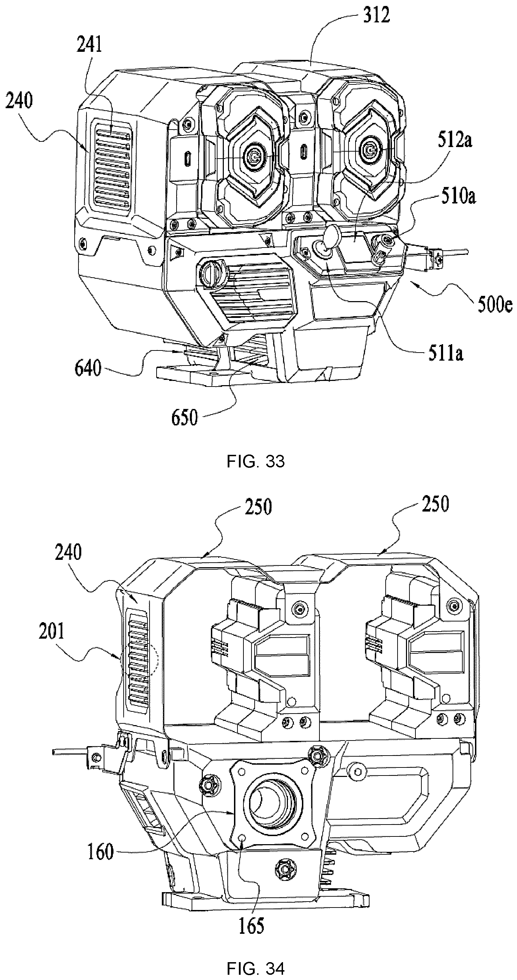

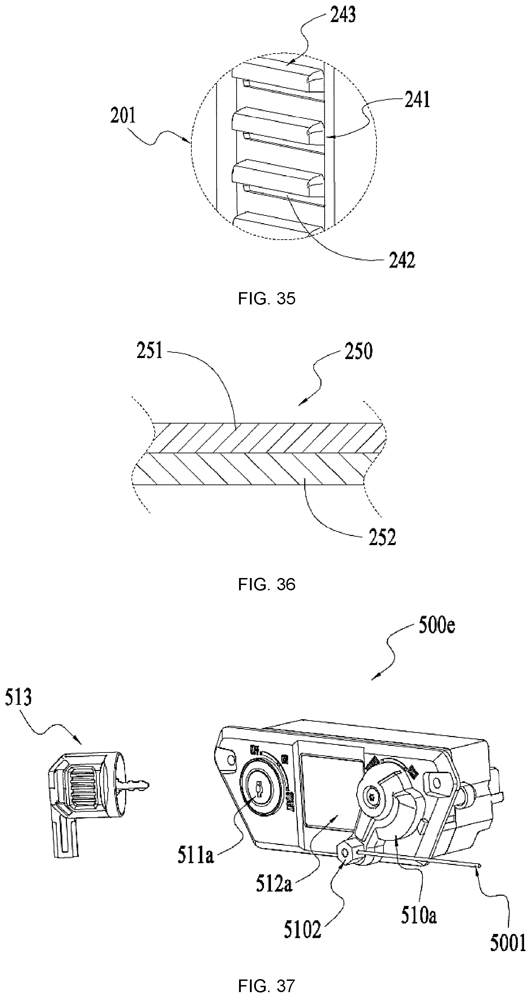

As shown in FIGS. 33 to 35, in the process where the power supply device 300 is mounted and used, in addition to drainage, heat dissipation also needs to be considered so that the service life of the power supply device 300 is prolonged. FIG. 35 is a partial enlarged view of a first region 201 in FIG. 34.

A first sidewall 240 for covering the power supply device 300 is formed on a side of the housing 200. A heat dissipation portion 241 is provided on the first sidewall. The heat dissipation portion 241 is constituted by multiple heat dissipation slots 242. Each heat dissipation slot 242 is covered by a top cover 243 to prevent rainwater from flowing into the heat dissipation slot 242 and soaking into the power supply device 300. In addition, the portion of the housing 200 for placing the power supply device 300 is configured to be a longitudinally through structure, thereby facilitating the flow of air and further enhancing the heat dissipation. In addition, the portion of the housing 200 for placing the power supply device 300 is configured to be the longitudinally through structure so that it is convenient to clean the accommodation space of the power supply device 300. All dust generated when the power unit 10 is mounted on the power tool and works can be conveniently cleaned up.

As shown in FIG. 34 and FIG. 36, a first top cover 250 for covering the power supply device 300 is formed on the top of the housing 200. In an example, the first cover 250 is configured to be made of a material with a good heat dissipation effect. For example, the first top cover 250 may be made of iron, which not only ensures strength but also has a faster heat dissipation speed.

In an example, the first top cover 250 is made of two materials. The two materials are a first material 251 and a second material 252, respectively. The first material 251 and the second material 252 have different heat dissipation capabilities such as different thermal conductivity. In an example, the second material 252 has higher thermal conductivity because the second material 252 is closer to the power supply device 300. Thus, the second material 252 can help the power supply device dissipate the heat quickly.

In addition, the first material 251 and the second material 252 may also have different waterproof capabilities. For example, the first material 251 has no opening on its surface while the second material 252 has several openings so that the first material 251 has a greater waterproof effect and the second material 252 has a greater heat dissipation effect. The first material 251 is in direct contact with the environment outside the power unit 10, and the second material 252 is closer to the power supply device 300. The second material 252 absorbs the heat of the power supply device 300 and conducts the heat to the first material 251. Then, the first material 251 releases the heat to the surrounding environment.

FIG. 32, FIG. 33, and FIG. 37 show another example of a control device 500e.

As shown in FIG. 33, the control device 500e may be disposed on the lower side of the power supply device 300. In other words, the control device 500e may be disposed on the lower side of at least one battery pack. The control device 500e includes a speed adjusting element 510a, a main switch 511a, and a display interface 512a. The speed adjusting element 510a, the main switch 511a, and the display interface 512a collectively form a viewing interface 501a (see FIG. 32). In an example, the viewing interface 501a may be a side surface of the control device 500e, where the side surface has the largest area and can be directly viewed by the user. The user can view parameters and information on the viewing interface 501a such as the rotational speed of the output shaft 110, a battery level of the power supply device 300, and a temperature of the power supply device 300. In an example, the viewing interface 501a includes at least the plane where the display interface 512a of the control device 500e is located.

A second included angle β is formed between the viewing interface 501a and the receiving plane 220. The second included angle β is greater than or equal to 10 degrees and less than or equal to 70 degrees. In an example, the second included angle β is greater than or equal to 10 degrees and less than or equal to 50 degrees. In some examples, the second included angle β may be 20 degrees, 30 degrees, or 40 degrees.

As shown in FIG. 33, FIG. 37, and FIG. 38, the display interface 512a is disposed between the speed adjusting element 510a and the main switch 511a. In this example, the main switch 511a includes a keyhole 514. A main key 513 is used for mating with the keyhole 514 of the main switch 511a so that the power unit 10 switches between different power gears. The main switch 511a includes three power gears. The three power gears are configured to be "OFF", "ON", and "START" in a clockwise direction, respectively. The user adjusts the working state of the power unit 10 by rotating the main key 513.

The control device 500e includes a switch control board 460 electrically connected to the main switch 511a. In this example, the switch control board 460 is also electrically connected to the speed adjusting element 510a and the display interface 512a. A Hall plate 461 is disposed on the switch control board 460. The Hall plate 461 is electrically connected to the switch control board 460 and is provided with a Hall element 462.

In an example, the magnitude of the rotational speed of the electric motor may be controlled by a slide rheostat instead of a Hall sensor. For a power unit 10 using the slide rheostat, a special waterproof seal is required for the housing of the control device 500e. Therefore, from the perspective of waterproofing, the Hall element 462 is used as a sensor and does not need to be waterproofed, which is more practical.

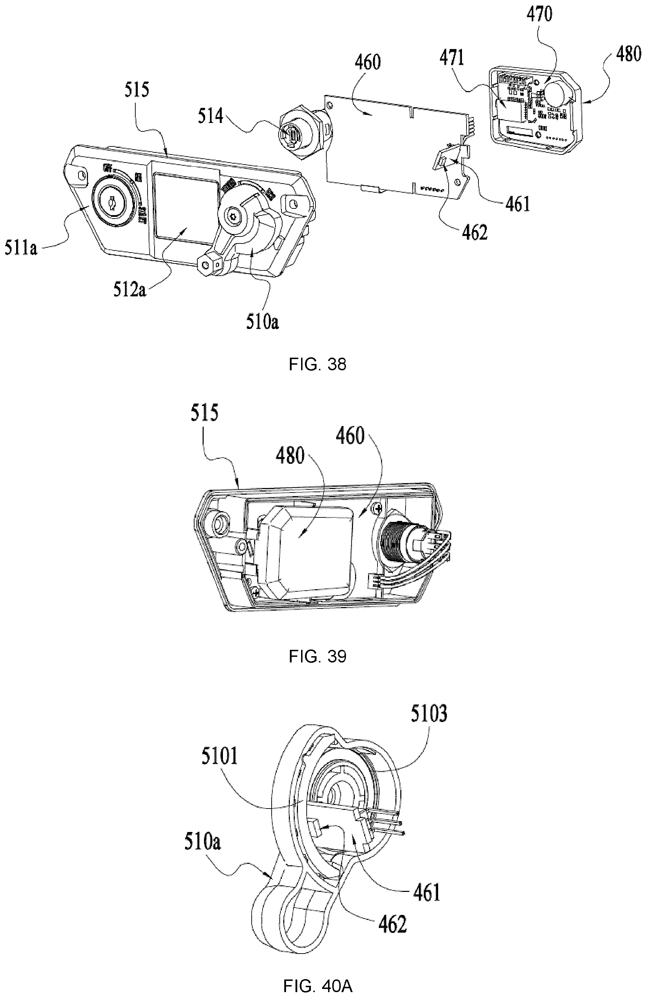

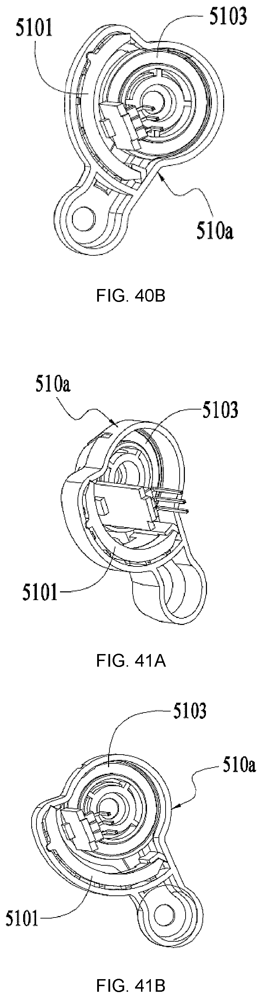

As shown in FIG. 38, the speed adjusting element 510a is a rotatable knob. A magnetic member 5101 is disposed on the inner side of the speed adjusting element 510a (the side of the speed adjusting element 510a facing the Hall plate 461). The magnetic member 5101 rotates along with the rotation of the speed adjusting element 510a. FIG. 40a and FIG. 40b show the state of the speed adjusting element 510a rotating to a first rotational speed. FIG. 41a and FIG. 41b show the state of the speed adjusting element 510a rotating to a second rotational speed. The Hall element 462 senses different magnetic fluxes of the magnetic member 5101 when the position of the magnetic member 5101 is changed and feeds back the magnetic fluxes to the Hall plate 461 so that a current is adjusted.

The speed adjusting element 510a also has a connection portion 5102 (see FIG. 37). The connection portion 5102 is used for connecting a manipulation member 5001. The manipulation member 5001 may be a flexible rope, a steel cable, a rigid rod, or a combination of two or more thereof. When the user pulls the manipulation member 5001, the connection portion 5102 is pulled by one end of the manipulation member 5001, thereby causing the speed adjusting element 510a to rotate. In this example, when the manipulation member 5001 is pulled, the speed adjusting element 510a rotates anti-clockwise. In other words, the user can adjust the angle, position, and the like of the speed adjusting element 510a without directly operating the speed adjusting element 510a with hands. Similarly, when the manipulation member 5001 is pushed, the speed adjusting element 510a rotates clockwise.

In this example, the control device 500e includes a front cover plate 515. The front cover plate 515 is formed with the main switch 511a and mates with the speed adjusting element 510a.

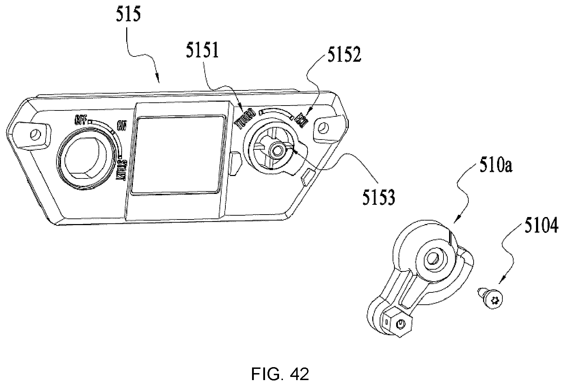

In conjunction with FIGS. 42 to 44, a damping member 5103 is mounted between the speed adjusting element 510a and the front cover plate 515. In an example, the damping member 5103 is an O-ring. The damping member 5103 is provided so that the speed adjusting element 510a needs to overcome the resistance of the damping member 5103 when rotating. In this manner, the speed adjusting element 510a can rely on the resistance of the damping member 5103 to stop at the position where the speed adjusting element 510a is located when the user's hand or the manipulation member 5001 removes an external force from the speed adjusting element 510a.

As shown in FIG. 42, the front cover plate 515 displays at least two rotational speeds, that is, the first rotational speed 5151 and the second rotational speed 5152. The speed adjusting element 510a controls the output speed of the power unit 10 to be between the first rotational speed 5151 and the second rotational speed 5152. An indicator is also disposed on the speed adjusting element 510a. The position to which the indicator is pointed indicates a current rotational speed. When the speed adjusting element 510a is rotated to cause the indicator to point to any position between the first rotational speed 5151 and the second rotational speed 5152 and the hand or the manipulation member 5001 is released, due to the resistance provided by the damping member 5103, the speed adjusting element 510a can remain at the current position. Thus, the power unit 10 outputs a rotational speed between the first rotational speed 5151 and the second rotational speed 5152.

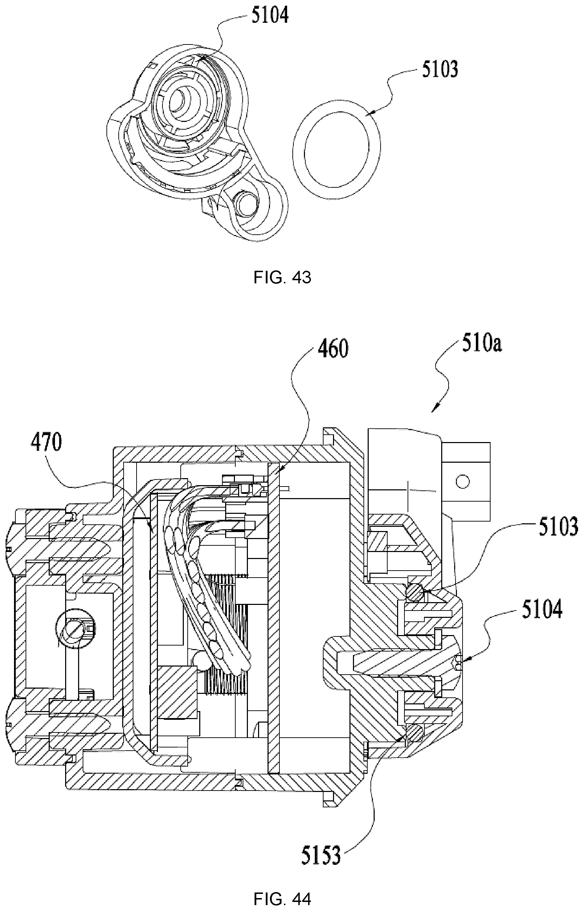

In conjunction with FIG. 43, the speed adjusting element 510a has a first limit portion 5104, a second limit portion 5153 is disposed on the front cover plate 515, and the damping member 5103 is disposed between the first limit portion 5104 and the second limit portion 5153. In this example, the first limit portion 5104 is a locking slot, and the second limit portion 5153 has multiple ribs for increasing friction.

It is to be noted that to cause the speed adjusting element 510a to remain at any position, the damping member 5103 is provided in the present application to increase the friction between the speed adjusting element 510a and the front cover plate 515. Thus, the power unit 10 outputs any rotational speed between the first rotational speed 5151 and the second rotational speed 5152. That is to say, the rotational speed can be adjusted uniformly and smoothly. In addition to the damping member 5103, another structure may also be used for implementing this function. In addition, the power unit 10 may be provided with multiple rotational speed gears so that the output speed of the power unit 10 can only be adjusted to several fixed rotational speeds.

Referring to FIG. 38 again, the control device 500e further includes a wireless communication board 470 and a rear cover 480 for mounting the wireless communication board 470. A wireless communication unit 471 is disposed on the wireless communication board 470. An external device can communicate wirelessly with the wireless communication board 470 through a Bluetooth protocol or a wireless fidelity (Wi-Fi) protocol. Therefore, the control device 500e implements four functions of a power switch, a screen display, the adjustment of the output speed, and wireless communication.

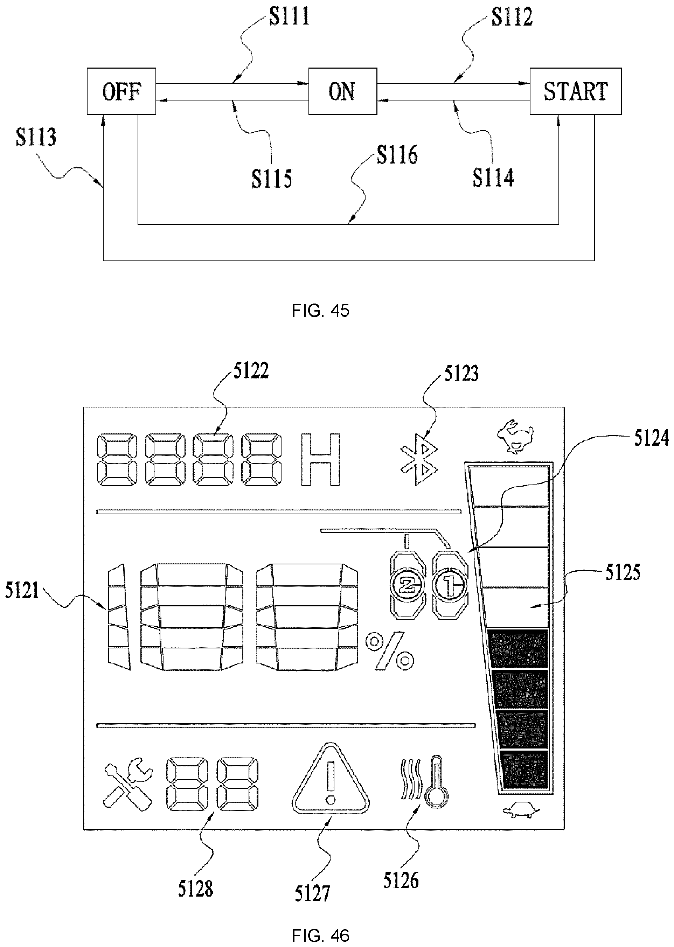

In conjunction with FIG. 45, the main switch 511a can at least control the start and stop of the electric motor 120. A power-on switch 5111 and an electric motor switch 5112 are disposed in the main switch 511a. The shift of the main switch 511a is described in detail below. The main switch 511a has three gears, that is, the "OFF" gear, the "ON" gear, and the "START" gear. When the main switch 511a is adjusted to the "OFF" gear, the power-on switch 5111 and the electric motor switch 5112 are both turned off. When the main switch 511a is adjusted to the "ON" gear, the power-on switch 5111 is turned on, and the electric motor switch 5112 is turned off. When the main switch 511a is adjusted to the "START" gear, the power-on switch 5111 and the electric motor switch 5112 are both turned on.

Operation S111 is performed. The main switch 511a is adjusted from the "OFF" gear to the "ON" gear, and the power unit 10 is immediately powered on, but the output shaft 110 does not rotate. Operation S112 is performed. The main switch 511a is adjusted from the "ON" gear to the "START" gear, and the output shaft 110 of the power unit 10 rotates immediately. Operation S113 is performed. The main switch 511a is directly adjusted from the "START" gear to the "OFF" gear, the output shaft 110 of the power unit 10 stops rotating immediately, and the power unit 10 is powered off after a first preset time. In an example, the first preset time may be four seconds, five seconds, or six seconds. Operation S114 is performed. The main switch 511a is adjusted from the "START" gear to the "ON" gear, and the output shaft 110 of the power unit 10 stops rotating immediately, but the power unit 10 is not powered off. Operation S115 is performed. The main switch 511a is adjusted from the "ON" gear to the "OFF" gear, and the power unit 10 is powered off after a second preset time. The second preset time here may be the same as or different from the first preset time. In an example, the second preset time may also be 4 seconds, 5 seconds, or 6 seconds. Operation S116 is performed. The main switch 511a is directly adjusted from the "OFF" gear to the "START" gear, the power unit 10 is immediately powered on, and the output shaft 110 immediately rotates.

The display interface 512a may be made of a light-emitting diode (LED), a liquid crystal display (LCD), or other luminous materials. That is to say, the display interface 512a may be an LED display interface, an LCD display interface, or the like. The display interface may display at least one of the following information: the battery level of the power supply device, the total working time of the power unit, Bluetooth connection information, working information of the power supply device, the output speed of the power unit, the temperature information of the power unit, fault information of the power unit, or the like.

A display manner of the display interface 512a is shown in FIG. 46. The information displayed on the display interface 512a includes: the battery level 5121, the total working time 5122, a Bluetooth connection identification 5123, the working information 5124 of the power supply device, the output speed 5125, an overheating reminder 5126, a stall reminder 5127, a fault code 5128, and the like.

The uppermost layer of the display interface 512a includes the total working time 5122 and the Bluetooth connection identification 5123. The total working time 5122 refers to the total working time accumulated from the occasion when the power unit 10 works the first time to a current occasion. The user can determine, through the total working time 5122, whether each component needs to be repaired or replaced. The Bluetooth connection identification 5123 is used for displaying whether the Bluetooth connection function of the power unit 10 is enabled. For example, when the Bluetooth connection identification 5123 is lit, the power unit 10 has the capability to establish a Bluetooth connection with another mobile device.

The working information 5124 of the power supply device and the battery level 5121 are included in the middle of the display interface 512a. The working information 5124 of the power supply device includes battery pack icons with the marks "1" and "2" to display the serial number of a battery pack of the power supply device 300 supplying power currently. For example, when the mark "1" is lit, it is indicated that the first battery pack 310 is supplying the power; and when the mark "2" is lit, it is indicated that the second battery pack 320 is supplying the power. That is to say, on the same occasion, the only one battery pack may supply the power, or the two battery packs may supply the power simultaneously. In an example, the battery level of the battery pack that is supplying the power may be displayed as the battery level 5121. In another example, the user may select a battery pack, and the battery level 5121 of the selected battery pack is displayed on the display interface 512a. The battery level 5121 here may be presented in the form of a percentage. For example, 40% refers to that the remaining power (that is, the available power) of the selected battery pack is 40% of the power of the battery pack in the state of being fully charged. The battery level 5121 may be presented in the form of time. For example, "4h" may be displayed to indicate that the battery pack can still be used for 4 hours under a current working condition.

A rotational speed outputted by the power unit 10 in operation is displayed as the output speed 5125. As shown in FIG. 46, the higher the lit scale value for the output speed 5125 is, the higher the rotational speed of the output shaft 110 is. The output speed 5125 is provided on the right side of the screen of the display interface 512a and arranged in the up and down direction. This configuration conforms to the viewing habits of human eyes so that the rotational speed outputted by the output shaft 110 can be clearly seen at a glance.

Maintenance and fault reminders are displayed in the lowermost layer of the display interface 512a. When the overheating reminder 5126 is lit, the user is reminded that the temperature of the power unit 10 is excessively high. When the stall reminder 5127 is lit, the user is reminded that a stall has occurred in the power unit 10. The code of a fault that occurred is displayed as the fault code 5128. The user can find, according to the code, the type of the fault that occurred in the power unit 10.

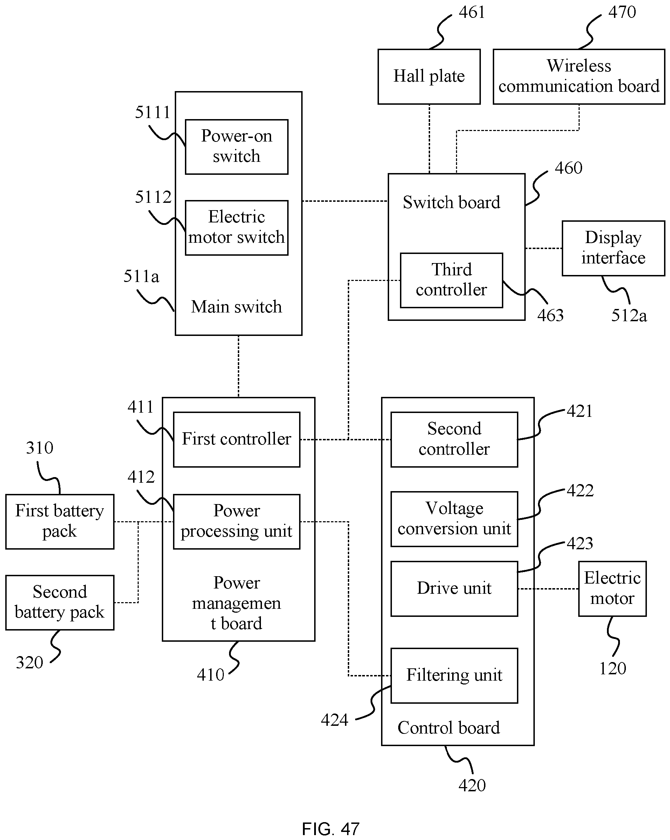

FIG. 47 is a schematic diagram showing the functions of the control system of the power unit 10. A first controller 411 is disposed on the power management board 410. A second controller 421 is disposed on the control board 420. A third controller 463 is disposed on the switch control board 460. In an example, the first controller 411, the second controller 421, and the third controller 463 are microcontroller unit (MCU) controllers. In another example, the first controller 411, the second controller 421, and the third controller 463 may be central processing unit (CPU) controllers, microprocessor unit (MPU) controllers, digital signal processor (DSP) controllers, or the like.

A power processing unit 412 is also disposed on the power management board 410. The power processing unit 412 may select, according to the magnitudes of output voltages of the first battery pack 310 and the second battery pack 320, one or both of the battery packs for discharge. The power processing unit 412 may also determine whether the first battery pack 310 and the second battery pack 320 are in a normal state. A voltage conversion unit 422 is disposed on the control board 420. The voltage conversion unit 422 is configured to convert a voltage outputted by the power supply device 300 into a voltage required by the switch control board 460 and the control board 420 for driving the electric motor 120 to start. A drive unit 423 electrically connected to the electric motor 120 is also disposed on the control board 420 to drive the electric motor 120 to move. A filtering unit 424 capable of filtering electrical signals is also disposed on the control board 420.

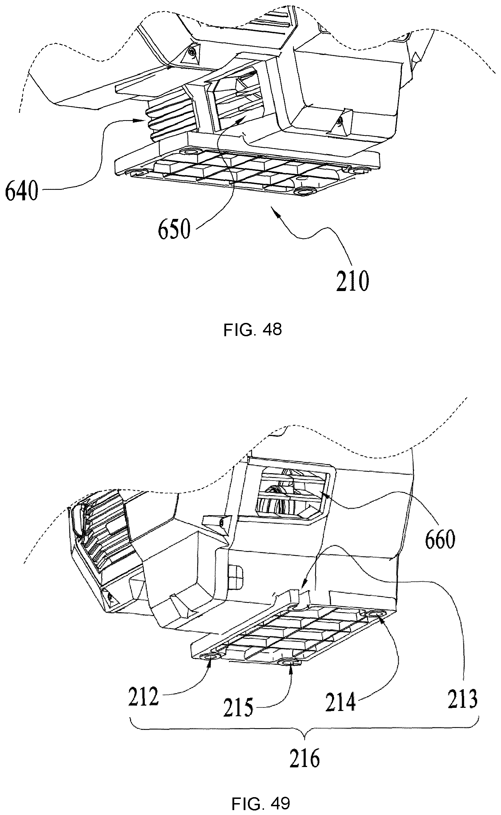

In conjunction with FIG. 33, FIG. 48, and FIG. 49, a heat dissipation structure is also disposed on the upper side of the base plate 210 and near the base plate 210 and is used for dissipating the heat for electronic components in the power unit 10 such as the electric motor 120, the power management board 410, and the control board 420. The power unit 10 is provided with at least two heat dissipation openings for dissipating the heat, that is, a first heat dissipation opening 650 and a second heat dissipation opening 660. The first heat dissipation opening 650 and the second heat dissipation opening 660 are provided on the left and right sides of the power unit 10, respectively. A heat dissipation space is increased through the two heat dissipation openings. Heat sink fins 640 are adjacent to the first heat dissipation opening 650 and can enhance heat conduction. Thus, the heat dissipation effect and heat conduction effect of the housing 200 are improved while the strength of the housing 200 is ensured.

Therefore, air flows into the power unit 10 from the air inlet 610, dissipates the heat for the electric motor 120, the power management board 410, the control board 420, and the control device 500e in the housing 200, and then flows out from the first heat dissipation opening 650 and the second heat dissipation opening 660. To accelerate the heat dissipation, a thermally conductive silicon gel may be mounted on the electric motor 120.

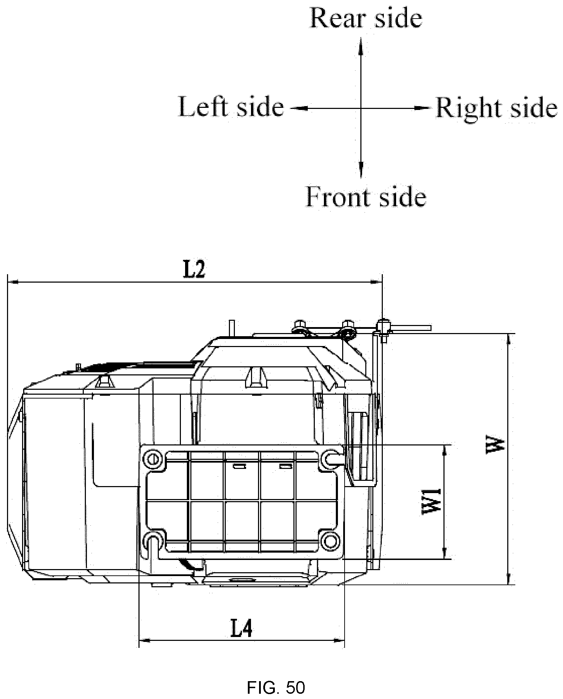

FIGS. 50 to 53 show more parameters of the base plate 210. In conjunction with FIG. 13, FIG. 14, and FIG. 56, the distance of the base plate 210 along the front and rear direction is a base plate width W1, and the distance of the base plate 210 along the left and right direction is a base plate length L4. The ratio of the base plate width W1 to the thickness W of the whole machine is higher than or equal to 0.3 and lower than or equal to 0.6. In some examples, the ratio of the base plate width W1 to the thickness W of the whole machine is approximately 0.4, 0.45, or 0.5. The ratio of the base plate length L4 to the length L2 of the whole machine is higher than or equal to 0.4 and lower than or equal to 0.7. In some examples, the ratio of the base plate length L4 to the length L2 of the whole machine is approximately 0.5, 0.55, or 0.6.

In other words, the power unit 10 is projected from top to bottom onto the plane where the base plate 210 is located, and the ratio of the area of the base plate 210 to the area of the projection of the power unit 10 on the base plate 210 is higher than or equal to 0.2 and lower than or equal to 0.5. In some examples, the ratio may be 0.3, 0.35, or 0.4. In this manner, the space required for mounting the power unit 10 can be saved as much as possible, thereby improving space utilization.

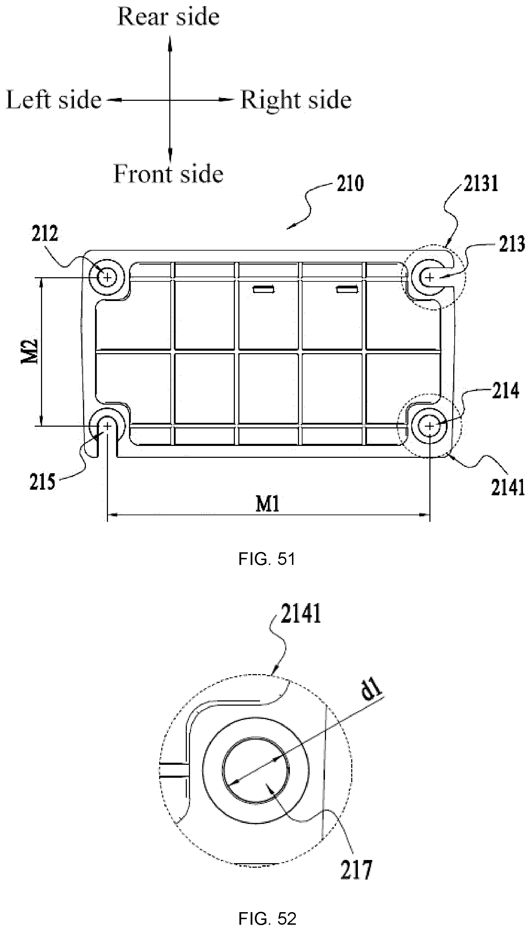

As shown in FIG. 51, the base plate 210 has four mounting holes. The four mounting holes are a first mounting hole 212, a second mounting hole 213, a third mounting hole 214, and a fourth mounting hole 215, respectively.

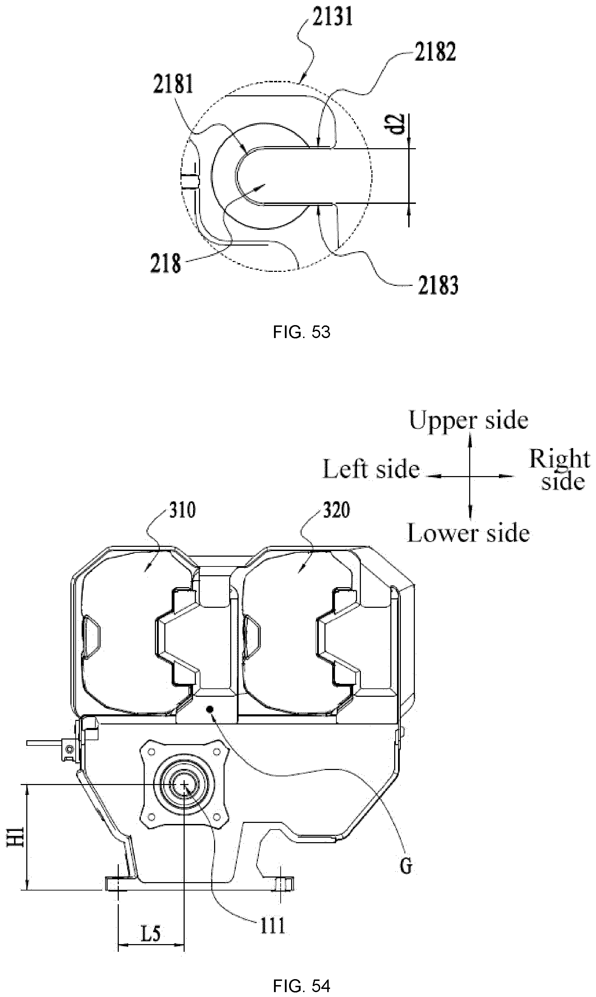

The base plate 210 has at least four openings 216 (see FIG. 51) for mounting the power unit 10 to the power tool. The four openings 216 are a first opening 212, a second opening 213, a third opening 214, and a fourth opening 215, respectively. Among the four openings 216, the first opening 212 is provided at the rearmost side and leftmost side of the base plate 210, the second opening 213 is provided at the rearmost side and rightmost side of the base plate 210, the third opening 214 is provided at the frontmost side and rightmost side of the base plate 210, and the fourth opening 215 is provided at the frontmost side and leftmost side of the base plate 210. A partial enlarged view of the third opening 214 is a first region 2141. For details, see FIG. 52. A partial enlarged view of the second opening 213 is a second region 2131. For details, see FIG. 53.

Each of the first opening 212 and the third opening 214 has a closed circular shape. Each of the inner diameters of the first opening 212 and the third opening 214 is a first diameter d1. The first diameter d1 is greater than or equal to 10 mm and less than or equal to 10.1 mm.

Each of the second opening 213 and the fourth opening 215 has an open semicircular shape. The second opening 213 is used as an example. The second opening 213 has a semicircular portion 2181, a first straight portion 2182, and a second straight portion 2183. The first straight portion 2182 and the second straight portion 2183 are substantially parallel to each other. In addition, the distance between the first straight portion 2182 and the second straight portion 2183 is substantially equal to a second diameter d2 of the semicircular portion 2181. The second diameter d2 is greater than or equal to 10 mm and less than or equal to 10.1 mm.

It is to be noted that FIG. 51 shows the only one arrangement manner of the four openings 216. In an example, each of the first opening 212 and the third opening 214 has the open semicircular shape, and each of the second opening 213 and the fourth opening 215 has the closed circular shape. In an example, at least one of the four openings 216 has the open semicircular shape. That is to say, one, two, or three of the four openings 216 may have the open semicircular shape. In an example, at least one of the four openings 216 has the closed circular shape. That is to say, one, two, or three of the four openings 216 may have the closed circular shape.

The openings 216 are described in another manner. The openings 216 on the base plate 210 may be classified into closed openings 217 and open openings 218. These openings 216 are used for mating with mounting members (such as screws) so that the power unit 10 is mounted on the power tool through the base plate 210 for use. Each of the closed openings 217 may have a circular shape, a polygonal shape, or the like, but the openings 217 are fully closed. An open opening 218 refers to that the opening does not form a complete boundary.

In an example, at least one open opening 218 exists among multiple openings 216 of the base plate 210. In this manner, it can be more convenient for the user to align the multiple openings 216 with a mounting portion of the power tool when the base plate 210 of the power unit 10 is mounted. In an example, at least one closed opening 218 exists among the multiple openings 216 of the base plate 210. The provision of the closed opening 218 helps the power unit 10 maintain a stable position after being coupled to the mounting portion of the power tool. More specifically, in an example, if there are four openings 216 on the base plate 210, the four openings 216 may be two closed openings 217 and two open openings 218, three closed openings 217 and one open opening 218, or three open openings 218 and one closed opening 217. With different numbers and positions of open openings 218 and closed openings 217, different assembly difficulties and different assembly stability can be implemented.

With continued reference to FIG. 51, the open openings 218 refer to the second opening 213 and the fourth opening 215 in the example in FIG. 51. The distance between each of the closed openings 217 and each of the open openings 218 refers to the distance between the circle center of each of the closed openings 217 and the circle center of the semicircular portion 2181 of each of the open openings 218. In an example, the distance between the first opening 212 and the second opening 213 is substantially the same as the distance between the third opening 214 and the fourth opening 215. Each of the distance between the first opening 212 and the second opening 213 and the distance between the third opening 214 and the fourth opening 215 is a first distance M1. The first distance M1 is approximately 162 mm. The distance between the first opening 212 and the fourth opening 215 is substantially the same as the distance between the second opening 213 and the third opening 214. Each of the distance between the first opening 212 and the fourth opening 215 and the distance between the second opening 213 and the third opening 214 is a second distance M2. The second distance M2 is approximately 75 mm. In this manner, mounting dimensions of the base plate 219 of the power unit 10 remain consistent with mounting dimensions of a traditional engine. Thus, the user does not need to mount an additional adapter plate and it is convenient to mount the power unit 10.

In another example, the mounting dimensions of the base plate 219 of the power unit 10 are different from the mounting dimensions of the conventional engine, so mounting dimensions of the power tool that mates with the base plate 210 also need to be changed accordingly. In this case, the first distance M1 is greater than or equal to 165 mm and less than or equal to 180 mm, and the second distance M2 is greater than or equal to 80 mm and less than or equal to 90 mm.

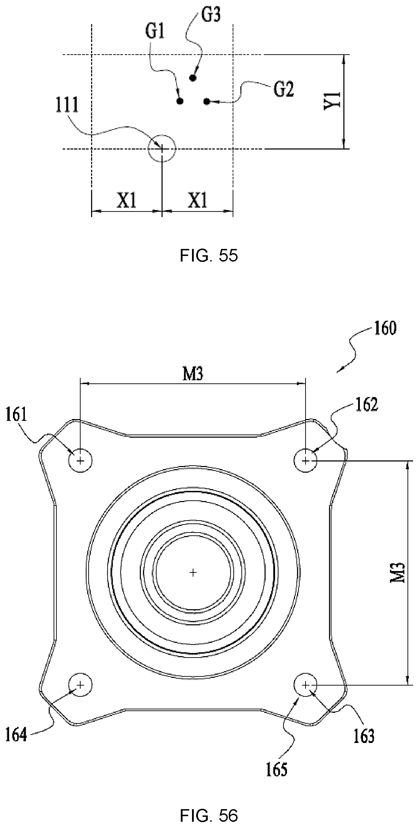

As shown in FIG. 54 and FIG. 55, the power unit 10 may have multiple working states. In different working states, the power unit 10 has different center-of-gravity positions. The center of gravity of the whole machine is a first center of gravity G1 when only the first battery pack 310 is mounted on the power unit 10. The center of gravity of the whole machine is a second center of gravity G2 when only the second battery pack 320 is mounted on the power unit 10. The center of gravity of the whole machine is a third center of gravity G3 when both the first battery pack 310 and the second battery pack 320 are mounted on the power unit 10. That is to say, the power unit 10 has at least two workable states, and different center-of-gravity positions exist in the two workable states.

The power unit 10 has a working center of gravity G. It is defined that the working center of gravity G refers to the center of gravity of the whole machine for the power unit 10 to be capable of working normally. The working center of gravity G refers to the center of gravity of the whole machine at the time when the output shaft 110 is driven to rotate by the power supply device 300. The distance Y1 between the working center of gravity G and the first axis 111 in the up and down direction is less than or equal to 14 cm. In an example, the distance Y1 between the working center of gravity G and the first axis 111 in the up and down direction is less than or equal to 12 cm. In an example, the distance Y1 between the working center of gravity G and the first axis 111 in the up and down direction is less than or equal to 10 cm. In an example, the distance Y1 between the working center of gravity G and the first axis 111 in the up and down direction is less than or equal to 8 cm. In some examples, the distance Y1 between the working center of gravity G and the first axis 111 in the up and down direction is approximately 5 cm, 6 cm, or 9 cm. The working center of gravity G of the whole machine is relatively low, which helps reduce a vibration when the power unit 10 is in operation, prolong the service life of the base plate 210, and prevent the screws at the base plate 210 from loosening or being damaged.

The distance X1 between the working center of gravity G and the first axis 111 in the left and right direction is less than or equal to 10 cm. In an example, the distance X1 between the working center of gravity G and the first axis 111 in the left and right direction is less than or equal to 8 cm. In an example, the distance X1 between the working center of gravity G and the first axis 111 in the left and right direction is less than or equal to 6 cm. In some examples, the distance X1 between the working center of gravity G and the first axis 111 in the left and right direction is approximately 2 cm, 4 cm, or 6 cm. The working center of gravity G of the whole machine is relatively close to the output shaft 110 in the left and right direction, which helps maintain the working stability of the power unit 10, reduce the vibration, and improve output smoothness.

In summary, for the power unit 10 that replaces the traditional engine and supplies power to the power tool, the present application implements that the working center of gravity G of the power unit 10 in operation is close to the output shaft 110 that outputs the power. The distance between the working center of gravity G and the center of the output shaft 110 is less than or equal to 14 cm in the up and down direction and is less than or equal to 10 cm in the left and right direction. It is to be noted that the preceding description of the distance relationship between the working center of gravity G and the first axis 111 is not limited to the structural arrangement manner shown in FIG. 55, for example, the position, number, and inclination angle of the power supply device 300, the position of the control device 500e, and the position of the base plate 210.

As shown in FIG. 34 and FIG. 56, an output shaft mounting portion 160 is disposed around the output shaft 110. The output shaft mounting portion 160 is used for fixing the output shaft 110 to the input end of the power tool so that the power unit 10 is prevented from shaking and causing the output shaft 110 to loosen or fall off during the rotation of the output shaft 110. The output shaft mounting portion 160 has four mounting holes 165 forming a rectangular shape. As shown in FIG. 56, the four mounting holes 165 are a first mounting hole 161, a second mounting hole 162, a third mounting hole 163, and a fourth mounting hole 164, respectively. The distance between the first mounting hole 161 and the second mounting hole 162 is a third distance M3. The third distance M3 is approximately 65.1 mm. The distance between the second mounting hole 162 and the third mounting hole 163 is equal to the third distance M3. In this manner, the four mounting holes 165 substantially form a square. This dimension configuration causes dimensions of the output shaft mounting portion 160 to be equal to those of the traditional engine. Thus, the power unit 10 can directly replace the traditional engine for use.

In another example, the third distance M3 is greater than or equal to 70 mm and less than or equal to 80 mm. The dimension is configured to be different from the mounting dimension of the output shaft of the traditional engine. In this case, the mounting dimension of the input end of the power tool mating with the power unit 10 needs to be customized by the user.

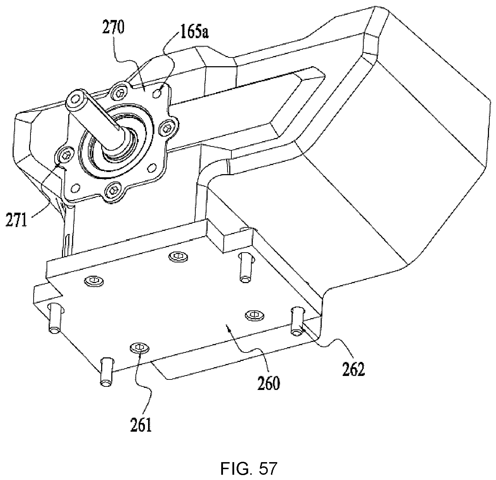

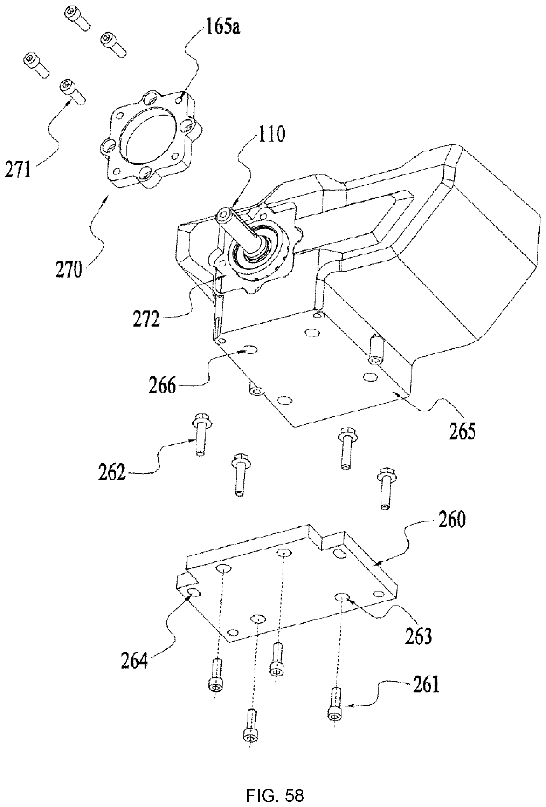

As shown in FIG. 57 and FIG. 58, a first adapter plate 260 may be mounted on the base plate 210 of the power unit 10. The base plate 210 is mounted on the power tool through the first adapter plate 260. The first adapter plate 260 may be fastened to the bottom surface 265 of the power unit 10 through first screws 261. The bottom surface 265 may include multiple first mounting holes 266 for receiving the first screws 261. The first adapter plate 260 has second mounting holes 264 for receiving second screws 262. In an example, four second mounting holes 264 may be provided. The arrangement manner of the four second mounting holes 264 is consistent with the dimension parameters disclosed in FIG. 57 and FIG. 56. In another example, the second mounting holes 264 may include at least one round hole and at least one waist-shaped hole so that it is convenient to position and mount the first adapter plate 260.

A second adapter plate 270 may be mounted near the output shaft 110. The second adapter plate is mounted to an adapter plate coupling portion 272 through third screws 271. The arrangement of the screws is not limited when the second adapter plate 270 and the adapter plate coupling portion 272 are assembled. The second adapter plate 270 may be screwed into the adapter plate coupling portion 272 in the form of a threaded connection. Finally, the second adapter plate 270 is formed with third mounting holes 165a for connecting the output shaft 110 to the power tool to be adapted. The arrangement manner and dimensions of the third mounting holes 165a satisfy the specific parameters disclosed in FIG. 56 in the preceding description. The details are not repeated here.

## Claims

1. A power unit applicable to a power tool, comprising:
an output assembly comprising an output shaft for outputting power, wherein the output shaft is configured to be rotatable about a first axis;
a housing supporting the output assembly and comprising a base, wherein it is defined that the base has a bottom plane capable of causing the power unit to be placed on a receiving plane and the bottom plane is parallel to the receiving plane; and
a power supply device comprising a first battery pack and a second battery pack for powering the output assembly;
wherein a distance between the output shaft and the bottom plane is greater than or equal to 5 mm, the first battery pack is detachably mounted to the housing along a direction of a first straight line, the second battery pack is detachably mounted to the housing along a direction of a second straight line, the first straight line is substantially parallel to the bottom plane, and the second straight line is substantially parallel to the bottom plane.

2. The power unit according to claim 1, wherein the first battery pack and the second battery pack are symmetrical about a symmetry plane, the first battery pack is disposed on one side of the symmetry plane, the second battery pack is symmetrically disposed on another side of the symmetry plane relative to the first battery pack, a preset distance exists between the first axis of the output shaft and the symmetry plane, and the preset distance is greater than or equal to 5 mm.

3. The power unit according to claim 1, wherein the power unit is mounted to the power tool through the base.

4. The power unit according to claim 1, wherein the housing comprises a sidewall, and the output shaft protrudes from the sidewall.

5. The power unit according to claim 1, further comprising an electric motor, wherein the electric motor rotates about an electric motor axis coinciding with the first axis.

6. The power unit according to claim 1, further comprising an electric motor, wherein the electric motor rotates about an electric motor axis, a transmission assembly is disposed between the electric motor and the output shaft, a ratio of a rotational speed of the output shaft to a rotational speed of the electric motor is defined as a gear ratio of the transmission assembly, and the gear ratio is higher than or equal to 2 and lower than or equal to 15.

7. The power unit according to claim 1, wherein a longest distance of the power unit in a left and right direction is a length of a whole machine, and the length of the whole machine is greater than or equal to 200 mm.

8. The power unit according to claim 1, wherein a height of the power unit along an up and down direction is a height of a whole machine, and the height of the whole machine is greater than or equal to 250 mm.

9. The power unit according to claim 1, wherein a thickness of the power unit along a front and rear direction is a thickness of a whole machine, and the thickness of the whole machine is greater than or equal to 150 mm.

10. The power unit according to claim 1, wherein a length by which the output shaft protrudes from the housing is a protruding length, a diameter of the output shaft is a shaft diameter, and a ratio of the protruding length to the shaft diameter is higher than 1 and lower than 10.

11. A power unit applicable to a power tool, comprising:
an output assembly comprising an output shaft for outputting power, wherein the output shaft is configured to be rotatable about a first axis;
a housing supporting the output assembly and comprising a base, wherein the base is configured to be used for detachably mounting the power unit to the power tool; and
a power supply device comprising a first battery pack and a second battery pack for powering the output assembly;
wherein the first battery pack is detachably mounted to the housing along a direction of a first straight line, the second battery pack is detachably mounted to the housing along a direction of a second straight line, the first straight line is substantially parallel to a working plane of the power unit, and the second straight line is substantially parallel to the working plane.

12. The power unit according to claim 11, wherein the housing comprises a sidewall, and the output shaft protrudes from the sidewall.

13. The power unit according to claim 11, wherein the first straight line is substantially parallel to the second straight line.

14. The power unit according to claim 11, wherein the first straight line and the second straight line form an included angle.

15. The power unit according to claim 11, further comprising an electric motor, wherein the electric motor rotates about an electric motor axis coinciding with the first axis.

16. The power unit according to claim 11, further comprising an electric motor, wherein the electric motor rotates about an electric motor axis, a transmission assembly is disposed between the electric motor and the output shaft, a ratio of a rotational speed of the output shaft to a rotational speed of the electric motor is defined as a gear ratio of the transmission assembly, and the gear ratio is higher than or equal to 3 and lower than or equal to 15.

17. The power unit according to claim 11, wherein a longest distance of the power unit in a left and right direction is a length of a whole machine, and the length of the whole machine is greater than or equal to 200 mm.

18. The power unit according to claim 11, wherein a height of the power unit along an up and down direction is a height of a whole machine, and the height of the whole machine is greater than or equal to 250 mm.

19. The power unit according to claim 11, wherein a thickness of the power unit along a front and rear direction is a thickness of a whole machine, and the thickness of the whole machine is greater than or equal to 150 mm.

20. The power unit according to claim 11, wherein a length by which the output shaft protrudes from the housing is a protruding length, a diameter of the output shaft is a shaft diameter, and a ratio of the protruding length to the shaft diameter is higher than 1 and lower than 10.

21. A power unit applicable to a power tool, comprising:
an output assembly comprising an output shaft for outputting power, wherein the output shaft is configured to be rotatable about a first axis;
a housing supporting the output assembly and comprising a base and a sidewall, wherein the base is configured to be used for detachably mounting the power unit to the power tool, and the sidewall is formed with a through hole for the output shaft to protrude from the housing along the first axis; and
a power supply device comprising a first battery pack and a second battery pack for powering the output assembly;
wherein the first battery pack is disposed above the output shaft, and the second battery pack is disposed above the output shaft; and
the first battery pack and the second battery pack are symmetrical about a symmetry plane, the first battery pack is disposed on one side of the symmetry plane, the second battery pack is symmetrically disposed on another side of the symmetry plane relative to the first battery pack, and a preset distance exists between the output shaft and the symmetry plane.

22. The power unit according to claim 21, wherein the preset distance is greater than or equal to 5 mm.

23. The power unit according to claim 21, further comprising an electric motor, wherein the electric motor rotates about an electric motor axis coinciding with the first axis.

24. The power unit according to claim 21, further comprising an electric motor, wherein the electric motor rotates about an electric motor axis, a transmission assembly is disposed between the electric motor and the output shaft, a ratio of a rotational speed of the output shaft to a rotational speed of the electric motor is defined as a gear ratio of the transmission assembly, and the gear ratio is higher than or equal to 3 and lower than or equal to 15.

25. The power unit according to claim 21, wherein a longest distance of the power unit in a left and right direction is a length of a whole machine, and the length of the whole machine is greater than or equal to 200 mm.

26. The power unit according to claim 21, wherein a height of the power unit along an up and down direction is a height of a whole machine, and the height of the whole machine is greater than or equal to 250 mm.

27. The power unit according to claim 21, wherein a thickness of the power unit along a front and rear direction is a thickness of a whole machine, and the thickness of the whole machine is greater than or equal to 150 mm.

28. The power unit according to claim 21, wherein a length by which the output shaft protrudes from the housing is a protruding length, a diameter of the output shaft is a shaft diameter, and a ratio of the protruding length to the shaft diameter is higher than 1 and lower than 10.

29. The power unit according to claim 21, wherein one of the first battery pack and the second battery pack is fixed to the housing of the power unit, and another one of the first battery pack and the second battery pack is detachably disposed on the power unit.

30. The power unit according to claim 21, wherein a distance between a center of gravity of the first battery pack or the second battery pack and the first axis of the output shaft is greater than or equal to 4 cm.

31. A power unit applicable to a power tool, comprising:
an output assembly comprising an electric motor and an output shaft for outputting power, wherein the output shaft is configured to be rotatable about a first axis;
a housing supporting the output assembly and comprising a base, wherein the base is configured to be used for mounting the power unit to the power tool, and the output shaft is disposed on an upper side of the base; and
a power supply device comprising a first battery pack and a second battery pack for powering the output assembly;
wherein the output shaft comprises an output portion on a front side of the housing, the first battery pack is disposed on an upper side of the electric motor, and the second battery pack is disposed on a left or right side of the electric motor.

32. The power unit according to claim 31, wherein it is defined that the base has a bottom plane capable of causing the power unit to be placed on a receiving plane and the bottom plane is parallel to the receiving plane.

33. The power unit according to claim 32, wherein the first battery pack is detachably mounted to the housing along a direction of a first straight line, and the second battery pack is detachably mounted to the housing along a direction of a second straight line.

34. The power unit according to claim 33, wherein the first straight line is substantially parallel to the bottom plane.

35. The power unit according to claim 33, wherein the first straight line and the first axis form an included angle.

36. The power unit according to claim 32, wherein the first battery pack is encapsulated in the housing, and the second battery pack is detachably mounted to the housing along a direction of a second straight line.

37. The power unit according to claim 31, wherein a longest distance of the power unit in a left and right direction is a length of a whole machine, and the length of the whole machine is greater than or equal to 200 mm.

38. The power unit according to claim 31, wherein a height of the power unit along an up and down direction is a height of a whole machine, and the height of the whole machine is greater than or equal to 250 mm.

39. The power unit according to claim 31, wherein a thickness of the power unit along a front and rear direction is a thickness of a whole machine, and the thickness of the whole machine is greater than or equal to 150 mm.

40. The power unit according to claim 31, wherein a length by which the output shaft protrudes from the housing is a protruding length, a diameter of the output shaft is a shaft diameter, and a ratio of the protruding length to the shaft diameter is higher than 1 and lower than 10.

41. A power unit applicable to a power tool, comprising:
an output assembly comprising an electric motor and an output shaft for outputting power, wherein the output shaft is configured to be rotatable about a first axis;
a housing supporting the output assembly;
a power supply device comprising a first battery pack for powering the output assembly; and
a battery pack coupling portion for mounting the first battery pack;
wherein the first battery pack is detachably coupled to the battery pack coupling portion along a direction of a first straight line, and the direction of the first straight line is inclined relative to a direction of the first axis.

42. The power unit according to claim 41, wherein the housing comprises a base, it is defined that the base has a bottom plane capable of causing the power unit to be placed on a receiving plane, and the bottom plane is parallel to the receiving plane.

43. The power unit according to claim 42, wherein the base is configured to be used for mounting the power unit to the power tool.

44. The power unit according to claim 41, wherein the power supply device comprises a second battery pack.

45. The power unit according to claim 44, wherein the second battery pack is encapsulated in the housing.

46. The power unit according to claim 44, wherein the second battery pack is detachably coupled to the housing along a direction of a second straight line.

47. The power unit according to claim 44, wherein the power supply device comprises a third battery pack.

48. The power unit according to claim 47, wherein the third battery pack is detachably coupled to the housing.

49. The power unit according to claim 47, wherein the third battery pack is disposed outside in the housing.

50. The power unit according to claim 44, further comprising a power management board, wherein the power management board comprises a control circuit configured to control a power supply mode of the power supply device.

51. A power unit applicable to a power tool, comprising:
an output assembly comprising an electric motor and an output shaft for outputting power, wherein the output shaft is configured to be rotatable about a first axis;
a housing supporting the output assembly and comprising a base, wherein the output shaft is disposed on an upper side of the base;
a power supply device comprising a first battery pack and a second battery pack for powering the output assembly; and
a power management board comprising a control circuit configured to control a power supply mode of the power supply device;
wherein the first battery pack is disposed on an upper side of the electric motor, and the power management board is disposed between the base and a top surface of the first battery pack.

52. The power unit according to claim 51, further comprising a control board, wherein a control circuit configured to control the electric motor to start, stop, or run is disposed on the control board.

53. The power unit according to claim 51, wherein the power management board is disposed between a bottom of the first battery pack and the base.

54. The power unit according to claim 51, wherein the first battery pack and the second battery pack are symmetrical about a symmetry plane, and the power management board is disposed between the second battery pack and the base.

55. The power unit according to claim 51, wherein the power management board is disposed between the first battery pack and the electric motor.

56. The power unit according to claim 51, wherein the power management board is disposed on a left or right side of the electric motor.

57. The power unit according to claim 52, wherein the control board is substantially parallel to the power management board.

58. The power unit according to claim 51, wherein a control board is inclined relative to the power management board.

59. The power unit according to claim 52, further comprising a third circuit board, wherein the third circuit board comprises an electronic element for controlling the power unit.

60. The power unit according to claim 59, wherein the third circuit board is disposed between the base and the top surface of the first battery pack.

61. A power unit applicable to a power tool, comprising:
an output assembly comprising a first electric motor and a second electric motor;
a housing supporting the output assembly and comprising a base, wherein the base is configured to be used for detachably mounting the power unit to the power tool, and the output shaft is disposed on an upper side of the base; and
a power supply device for powering the output assembly;
wherein the first electric motor comprises a first electric motor shaft rotatable about a first axis, and the second electric motor comprises a second electric motor shaft rotatable about a second axis.

62. The power unit according to claim 61, wherein the first axis coincides with the second axis.

63. The power unit according to claim 61, wherein the first axis is parallel to the second axis.

64. The power unit according to claim 61, wherein the first axis and the second axis are inclined relative to each other.

65. The power unit according to claim 61, wherein the power supply device comprises at least a first battery pack.

66. The power unit according to claim 65, wherein the first battery pack is at least partially disposed above the first electric motor and the second electric motor.

67. The power unit according to claim 66, wherein the first battery pack is detachably plugged into or unplugged from the housing along a direction of a first straight line, and the first straight line is substantially parallel to the base.

68. The power unit according to claim 65, wherein the power supply device further comprises a second battery pack.

69. The power unit according to claim 68, wherein at least one of the first battery pack and the second battery pack is encapsulated in the housing.

70. The power unit according to claim 66, wherein the first battery pack is detachably plugged into or unplugged from the housing along a direction of a first straight line, and the first straight line is substantially perpendicular to the base.

71. A power unit applicable to a power tool, comprising:
an output assembly comprising an output shaft for outputting power and an electric motor for driving the output shaft to rotate;
a housing supporting the output assembly and comprising a base, wherein the base is configured to be used for detachably mounting the power unit to the power tool, and the output shaft is disposed on an upper side of the base; and
a power supply device for powering the output assembly;
wherein the output assembly further comprises a transmission assembly disposed between the electric motor and the output shaft, a ratio of a rotational speed of the output shaft to a rotational speed of the electric motor is defined as a gear ratio of the transmission assembly, and the gear ratio is higher than or equal to 2 and lower than or equal to 15.

72. The power unit according to claim 71, wherein the power supply device comprises a first battery pack.

73. The power unit according to claim 71, wherein the first battery pack is detachably plugged into or unplugged from the housing along a direction of a first straight line, and the first straight line is substantially parallel to the base.

74. The power unit according to claim 72, wherein the power supply device further comprises a second battery pack.

75. The power unit according to claim 71, wherein the second battery pack is detachably plugged into or unplugged from the housing along a direction of a second straight line, and the second straight line is substantially parallel to the base.

76. The power unit according to claim 74, wherein at least one of the first battery pack and the second battery pack is encapsulated in the housing.

77. The power unit according to claim 71, wherein the output shaft is configured to be rotatable about a first axis, the housing comprises a sidewall, and the sidewall is formed with a through hole for the output shaft to protrude forward from the housing along the first axis.

78. The power unit according to claim 71, wherein the power supply device comprises a first battery pack for powering the output assembly.

79. The power unit according to claim 78, wherein the first battery pack is detachably mounted to the housing along a direction of a first straight line, and the first straight line is substantially parallel to a working plane of the power unit.

80. The power unit according to claim 79, wherein the power supply device further comprises a second battery pack, the second battery pack is detachably mounted to the housing along a direction of a second straight line, and the second straight line is substantially parallel to the working plane.

81. A power unit applicable to a power tool, comprising:
an output assembly comprising an electric motor and an output shaft for outputting power, wherein the output shaft is configured to be rotatable about a first axis;
a housing supporting the output assembly and comprising a base and a sidewall, wherein the base is configured to be used for detachably mounting the power unit to the power tool, and the sidewall is formed with a through hole for the output shaft to protrude forward from the housing along the first axis;
a power supply device comprising a first battery pack for powering the output assembly;
a circuit board assembly for controlling the electric motor and/or the power supply device; and
a control device comprising a speed adjusting element for controlling an output speed of the output shaft;
wherein at least part of the circuit board assembly and at least part of the control device are disposed on a same side of a vertical plane passing through the first axis.

82. The power unit according to claim 81, wherein the circuit board assembly is disposed between the electric motor and the first battery pack.

83. The power unit according to claim 81, wherein the circuit board assembly is disposed between the base and a top of the first battery pack.

84. The power unit according to claim 81, wherein the circuit board assembly is disposed between the base and a top of the housing.

85. The power unit according to claim 82, wherein the power supply device further comprises a second battery pack.

86. The power unit according to claim 85, wherein the first battery pack and the second battery pack are each disposed above the electric motor.

87. The power unit according to claim 85, wherein the first battery pack is disposed above the electric motor, and the circuit board assembly is at least partially disposed between the first battery pack and the second battery pack.

88. The power unit according to claim 85, wherein the first battery pack is disposed above the electric motor, and the circuit board assembly is at least partially disposed between the electric motor and the second battery pack.

89. The power unit according to claim 81, wherein the circuit board assembly comprises a control board, and the control device is electrically connected to the control board of the circuit board assembly.

90. The power unit according to claim 81, wherein the control device further comprises a display interface for displaying a rotational speed.

91. A power unit applicable to a power tool, comprising:
an output assembly comprising an output shaft for outputting power;
a housing supporting the output assembly and comprising a base, wherein the base is configured to be used for detachably mounting the power unit to the power tool, and the output shaft is disposed on an upper side of the base;
a power supply device comprising a first battery pack for powering the output assembly; and
a control device comprising a speed adjusting element for controlling an output speed of the output shaft;
wherein the housing is formed with a mounting portion for mounting the control device, the mounting portion comprises a mounting structure through which the control device is capable of being detachably mounted, the control device comprises a first electrical connection interface, and the power unit comprises a second electrical connection interface electrically connected to the first electrical connection interface.

92. The power unit according to claim 91, wherein the power tool comprises a handle portion to be held by a user, the control device of the power unit comprises a third electrical connection interface, and the third electrical connection interface is connectable to the handle portion of the power tool.

93. The power unit according to claim 91, wherein the control device is slidably connected in the mounting structure of the mounting portion of the housing.

94. The power unit according to claim 91, wherein the control device is pivotally connected in the mounting structure of the mounting portion of the housing.

95. The power unit according to claim 91, wherein the control device is pressed to be connected in the mounting structure of the mounting portion of the housing.

96. The power unit according to claim 91, wherein the mounting structure forms an accommodation space, and the control device is capable of being placed in the accommodation space of the mounting structure of the housing.

97. The power unit according to claim 91, wherein the mounting structure has a certain adhesive force to cause the control device and the housing to adhere together.

98. The power unit according to claim 91, wherein the mounting structure has certain suction, for example, a magnet or a vacuum cup.

99. The power unit according to claim 91, wherein the power supply device further comprises a second battery pack, and the first battery pack and the second battery pack are each disposed above the output shaft.

100. The power unit according to claim 91, further comprising a power management board, wherein the power management board comprises a control circuit configured to control a power supply mode of the power supply device.

101. A power unit applicable to a power tool, comprising:
an output assembly comprising an output shaft for outputting power;
a housing supporting the output assembly and comprising a base, wherein the base is configured to be used for detachably mounting the power unit to the power tool, and the output shaft is disposed on an upper side of the base;
a power supply device comprising a first battery pack for powering the output assembly;
a control device comprising a speed adjusting element for controlling an output speed of the output shaft; and
a circuit board disposed in the housing;
wherein the housing is formed with a mounting portion for mounting the control device, the mounting portion comprises a mounting structure through which the control device is capable of being detachably mounted, and the mounting structure is also configured to be capable of causing the control device to be electrically connected to the circuit board.

102. The power unit according to claim 101, further comprising a control board, wherein a control circuit configured to control an electric motor to start, stop, or run is disposed on the control board.

103. The power unit according to claim 101, wherein the circuit board is disposed between a bottom of the first battery pack and the base.

104. The power unit according to claim 101, wherein the power supply device comprises a second battery pack.

105. The power unit according to claim 104, wherein the first battery pack and the second battery pack are symmetrical about a symmetry plane, and the circuit board is disposed between the second battery pack and the base.

106. The power unit according to claim 101, wherein the circuit board is disposed between the first battery pack and the electric motor.

107. The power unit according to claim 101, wherein the circuit board is disposed on a left or right side of an electric motor.

108. The power unit according to claim 101, wherein the control device further comprises a display interface for displaying a rotational speed.

109. The power unit according to claim 101 wherein the housing forms a mounting portion for being coupled to the control device, and the mounting portion comprises a mechanical connection.

110. The power unit according to claim 102, wherein the control device is movable on the housing and is coupled to different positions of the mounting portion of the housing.

111. A power unit applicable to a power tool, comprising:
an output assembly comprising an output shaft for outputting power;
a housing supporting the output assembly and comprising a base, wherein the base is configured to be used for detachably mounting the power unit to the power tool, and the output shaft is disposed on an upper side of the base;
a power supply device comprising a first battery pack for powering the output assembly;
a control device comprising a speed adjusting element for controlling an output speed of the output shaft; and
a circuit board disposed in the housing;
wherein the housing is formed with a mounting portion for mounting the control device, the control device has a separate state in which the control device is detached from the mounting portion to be mounted on the power unit, the control device is electrically connected to the circuit board through a cable when the control device is in the separate state, and a length of a portion of the cable located outside the housing is greater than or equal to 10 cm when the control device is in the separate state.

112. The power unit according to claim 111, wherein the cable passes through a first electrical connection interface and/or a second electrical connection interface.

113. The power unit according to claim 111, wherein the cable moves along the housing of the power unit in a first electrical connection interface and/or a second electrical connection interface.

114. The power unit according to claim 111, wherein a second electrical connection interface on the housing is a track slot, and the cable is movable in the track slot during a movement of the control device.

115. The power unit according to claim 111, wherein a coupling portion of the control device is separated from the mounting portion on the housing.

116. The power unit according to claim 111, wherein the control device is capable of being moved to a handle portion of the power tool adapted to the power unit.

117. The power unit according to claim 111, wherein the control device is capable of being disposed on a top of the housing.

118. The power unit according to claim 111, wherein the housing comprises a sidewall, the output shaft protrudes from the sidewall, and the control device is capable of being disposed on the sidewall of the housing.

119. The power unit according to claim 111, wherein the control device is capable of being fixed, through a strap, to the power tool used in conjunction with the power unit.

120. The power unit according to claim 111, wherein the control device forms a wireless communication connection with the circuit board.

121. A power unit applicable to a power tool, comprising:
an output assembly comprising an output shaft for outputting power;
a housing supporting the output assembly and comprising a base, wherein the base is configured to be used for detachably mounting the power unit to the power tool, and the output shaft is disposed on an upper side of the base;
a power supply device comprising a first battery pack for powering the output assembly;
a control device comprising a speed adjusting element for controlling an output speed of the output shaft; and
a circuit board disposed in the housing;
wherein the housing is formed with a mounting portion for mounting the control device,
the control device has a separate state in which the control device is detached from the mounting portion, and the control device is configured to be capable of forming a wireless communication connection with the circuit board when the control device is in the separate state.

122. The power unit according to claim 121, wherein the power supply device comprises a second battery pack.

123. The power unit according to claim 121, wherein a second battery pack is detachably plugged into or unplugged from the housing along a direction of a second straight line, and the second straight line is substantially parallel to the base.

124. The power unit according to claim 121, wherein at least one of the first battery pack and a second battery pack is encapsulated in the housing.

125. The power unit according to claim 121, wherein the output shaft is configured to be rotatable about a first axis, the housing comprises a sidewall, and the sidewall is formed with a through hole for the output shaft to protrude forward from the housing along the first axis.

126. The power unit according to claim 121, wherein the first battery pack is detachably mounted to the housing along a direction of a first straight line, and the first straight line is substantially parallel to a working plane of the power unit.

127. The power unit according to claim 121, wherein the power supply device further comprises a second battery pack, the second battery pack is detachably mounted to the housing along a direction of a second straight line, and the second straight line is substantially parallel to the working plane.

128. The power unit according to claim 121, wherein the control device forms a Bluetooth wireless communication connection with the circuit board.

129. The power unit according to claim 121, wherein the control device is configured to be capable of performing a wireless communication connection with another electronic device.

130. The power unit according to claim 129, wherein the power unit is adjusted through an operation on another electronic device.

131. A power unit applicable to a power tool, comprising:
an output assembly comprising an output shaft for outputting power;
a housing supporting the output assembly and comprising a base, wherein it is defined that the base has a bottom plane capable of causing the power unit to be placed on a receiving plane, the bottom plane is parallel to the receiving plane, and a distance between the output shaft and the bottom plane is greater than or equal to 5 mm; and
a power supply device comprising a first battery pack and a second battery pack for powering the output assembly;
wherein a ratio of a distance between the output shaft and the base to a height of the power unit in a vertical direction is higher than or equal to 0.01.

132. The power unit according to claim 131, further comprising an electric motor that rotates about an electric motor axis.

133. The power unit according to claim 132, wherein the first battery pack is disposed above the electric motor, and the second battery pack is also disposed above the electric motor.

134. The power unit according to claim 132, wherein the first battery pack is disposed above the electric motor, and the second battery pack is disposed on a left or right side of the electric motor.

135. The power unit according to claim 132, wherein the first battery pack and the second battery pack are symmetrical about a symmetry plane, the first battery pack is disposed on one side of the symmetry plane, the second battery pack is symmetrically disposed on another side of the symmetry plane relative to the first battery pack, and a preset distance exists between a first axis of the output shaft and the symmetry plane.

136. The power unit according to claim 132, wherein the first battery pack is detachably coupled to a battery pack coupling portion along a direction of a first straight line, and the direction of the first straight line is inclined relative to a direction of a first axis.

137. The power unit according to claim 131, wherein the housing comprises a sidewall, and the output shaft protrudes from the sidewall.

138. The power unit according to claim 131, wherein a length by which the output shaft protrudes from the housing is a protruding length, a diameter of the output shaft is a shaft diameter, and a ratio of the protruding length to the shaft diameter is higher than 1 and lower than 10.

139. The power unit according to claim 131, wherein at least one of the first battery pack and the second battery pack is encapsulated in the housing.

140. The power unit according to claim 131, further comprising an external third battery pack.

141. A power unit applicable to a power tool, comprising:
an output assembly comprising an output shaft for outputting power;
a housing supporting the output assembly and comprising a base and a sidewall, wherein the base is configured to be used for detachably mounting the power unit to the power tool; and
a power supply device comprising a first battery pack and a second battery pack for powering the output assembly;
wherein a distance between the output shaft and an outer edge of the sidewall is a first length, a distance of the power unit in a left and right direction is a length of a whole machine, and a ratio of the first length to the length of the whole machine is higher than or equal to 0.02 and lower than or equal to 05.

142. The power unit according to claim 141, wherein the sidewall comprises a front sidewall for the output shaft to pass through to protrude from the housing, a rear sidewall opposite to the front sidewall, and a left sidewall and a right sidewall disposed between the front sidewall and the rear sidewall.

143. The power unit according to claim 141, wherein the first battery pack and the second battery pack are symmetrical about a symmetry plane, the first battery pack is disposed on one side of the symmetry plane, the second battery pack is symmetrically disposed on another side of the symmetry plane relative to the first battery pack, and a preset distance exists between a first axis of the output shaft and the symmetry plane.

144. The power unit according to claim 141, wherein it is defined that the base has a bottom plane capable of causing the power unit to be placed on a receiving plane, the bottom plane is parallel to the receiving plane, and a distance between the output shaft and the bottom plane is greater than or equal to 5 mm.

145. The power unit according to claim 141, wherein the first battery pack is detachably mounted to the housing along a direction of a first straight line, and the second battery pack is detachably mounted to the housing along a direction of a second straight line.

146. The power unit according to claim 145, wherein the first straight line is substantially parallel to a bottom plane, and the second straight line is substantially parallel to the bottom plane.

147. The power unit according to claim 144, wherein a first straight line is substantially parallel to the bottom plane, and a second straight line is substantially perpendicular to the bottom plane.

148. The power unit according to claim 141, wherein a length by which the output shaft protrudes from the housing is a protruding length, a diameter of the output shaft is a shaft diameter, and a ratio of the protruding length to the shaft diameter is higher than 1 and lower than 10.

149. The power unit according to claim 141, wherein at least one of the first battery pack and the second battery pack is encapsulated in the housing.

150. The power unit according to claim 141, further comprising an external third battery pack.

151. A power unit applicable to a power tool, comprising:
an output assembly comprising an electric motor and an output shaft for outputting power;
a housing supporting the output assembly and comprising a base, wherein it is defined that the base has a bottom plane capable of causing the power unit to be placed on a receiving plane, the bottom plane is parallel to the receiving plane, and a distance between the output shaft and the bottom plane is greater than or equal to 5 mm; and
a power supply device comprising a first battery pack for powering the output assembly;
wherein a ratio of a diameter of the output shaft to an outer diameter of the electric motor is higher than or equal to 0.069 and lower than or equal to 0.4.

152. The power unit according to claim 151, wherein the diameter of the output shaft refers to a diameter value at a point on the output shaft with a maximum diameter, and the diameter of the output shaft is greater than or equal to 10 mm and less than or equal to 50 mm.

153. The power unit according to claim 151, wherein the outer diameter of the electric motor is greater than or equal to 75 mm.

154. The power unit according to claim 151, wherein the electric motor is an inrunner, and the outer diameter of the electric motor is a stator diameter of the inrunner, that is, a lamination diameter of the inrunner.

155. The power unit according to claim 151, wherein the electric motor is an outrunner, and the outer diameter of the electric motor is a diameter of a rotor sleeve of the outrunner.

156. The power unit according to claim 151, wherein the power supply device comprises a second battery pack.

157. The power unit according to claim 156, wherein the first battery pack and the second battery pack are symmetrical about a symmetry plane, and a power management board is disposed between the second battery pack and the base.

158. The power unit according to claim 156, wherein the first battery pack is disposed above the electric motor, and the second battery pack is disposed above the electric motor.

159. The power unit according to claim 151, wherein the first battery pack is detachably mounted to the housing along a direction of a first straight line, a second battery pack is detachably mounted to the housing along a direction of a second straight line, the first straight line is substantially parallel to the bottom plane, and the second straight line is substantially parallel to the bottom plane.

160. The power unit according to claim 151, wherein the first battery pack is detachably mounted to the housing along a direction of a first straight line, a second battery pack is detachably mounted to the housing along a direction of a second straight line, one of the first straight line and the second straight line is substantially parallel to the bottom plane, and another one of the first straight line and the second straight line is substantially perpendicular to the bottom plane.

161. A power unit applicable to a power tool, comprising:
an output assembly comprising an electric motor and an output shaft for outputting power;
a housing supporting the output assembly and comprising a base, wherein the base is configured to be used for detachably mounting the power unit to the power tool, it is defined that the base has a bottom plane capable of causing the power unit to be placed on a receiving plane, the bottom plane is parallel to the receiving plane, and a distance between the output shaft and the bottom plane is greater than or equal to 5 mm; and
a power supply device comprising a first battery pack for powering the output assembly;
wherein a product of a height of the power unit along an up and down direction, a width of the power unit along a left and right direction, and a thickness of the power unit along a front and rear direction is defined as a volume of the power unit, and a ratio of maximum output power of the power unit to the volume of the power unit is higher than or equal to 10000 (W/m^3) and lower than or equal to 1330000 (W/m^3).

162. The power unit according to claim 161, wherein the maximum output power of the power unit is greater than or equal to 500 W and less than or equal to 10000 W.

163. The power unit according to claim 161, wherein the maximum output power of the power unit is greater than or equal to 3000 W and less than or equal to 7000 W.

164. The power unit according to claim 161, wherein a product of a total capacity of the power supply device and the maximum output power of the power unit is greater than or equal to 1000 W·Ah.

165. The power unit according to claim 161, wherein a total capacity of the power supply device is greater than or equal to 2 Ah and less than or equal to 52 Ah.

166. The power unit according to claim 161, wherein the power supply device comprises two battery packs with different capacities.

167. The power unit according to claim 166, further comprising a second battery pack, wherein the first battery pack and the second battery pack are symmetrical about a symmetry plane.

168. The power unit according to claim 166, further comprising a second battery pack, wherein the first battery pack is disposed above the electric motor, and the second battery pack is disposed above the electric motor.

169. The power unit according to claim 161, further comprising a second battery pack, wherein the first battery pack is detachably mounted to the housing along a direction of a first straight line, the second battery pack is detachably mounted to the housing along a direction of a second straight line, the first straight line is substantially parallel to the bottom plane, and the second straight line is substantially parallel to the bottom plane.

170. The power unit according to claim 161, further comprising a second battery pack, wherein the first battery pack is detachably mounted to the housing along a direction of a first straight line, the second battery pack is detachably mounted to the housing along a direction of a second straight line, one of the first straight line and the second straight line is substantially parallel to the bottom plane, and another one of the first straight line and the second straight line is substantially perpendicular to the bottom plane.

171. A power unit applicable to a power tool, comprising:
an output assembly comprising an electric motor and an output shaft for outputting power, wherein the output shaft is configured to be rotatable about a first axis;
a housing supporting the output assembly and comprising a base, wherein it is defined that the base has a bottom plane capable of causing the power unit to be placed on a receiving plane, the bottom plane is parallel to the receiving plane, and a distance between the output shaft and the bottom plane is greater than or equal to 5 mm; and a power supply device comprising at least a first battery pack and a second battery pack for powering the output assembly;
wherein a product of a total capacity of the power supply device and maximum output power of the power unit is greater than or equal to 1000 W·Ah.

172. The power unit according to claim 171, wherein the total capacity of the power supply device is greater than or equal to 2 Ah.

173. The power unit according to claim 171, wherein the maximum output power of the power unit is greater than or equal to 500 W and less than or equal to 10000 W.

174. The power unit according to claim 171, wherein the first battery pack and the second battery pack are symmetrical about a symmetry plane, and a circuit board is disposed between the second battery pack and the base.

175. The power unit according to claim 171, wherein the first battery pack is disposed above the electric motor, and the second battery pack is disposed above the electric motor.

176. The power unit according to claim 171, wherein the first battery pack is detachably mounted to the housing along a direction of a first straight line, the second battery pack is detachably mounted to the housing along a direction of a second straight line, the first straight line is substantially parallel to the bottom plane, and the second straight line is substantially parallel to the bottom plane.

177. The power unit according to claim 171, wherein the first battery pack is detachably mounted to the housing along a direction of a first straight line, the second battery pack is detachably mounted to the housing along a direction of a second straight line, one of the first straight line and the second straight line is substantially parallel to the bottom plane, and another one of the first straight line and the second straight line is substantially perpendicular to the bottom plane.

178. The power unit according to claim 171, wherein at least one of the first battery pack and the second battery pack is encapsulated in the housing.

179. The power unit according to claim 171, wherein the power supply device further comprises a third battery pack detachably coupled to the housing.

180. The power unit according to claim 171, wherein the power supply device further comprises a third battery pack disposed outside the housing.

181. A power unit applicable to a power tool, comprising:
an output assembly comprising an electric motor and an output shaft for outputting power, wherein the output shaft is configured to be rotatable about a first axis;
a housing supporting the output assembly and comprising a base, wherein it is defined that the base has a bottom plane capable of causing the power unit to be placed on a receiving plane, the bottom plane is parallel to the receiving plane, and a distance between the output shaft and the bottom plane is greater than or equal to 5 mm; and
a power supply device comprising at least a first battery pack and a second battery pack for powering the output assembly;
wherein the first battery pack comprises a first cell encapsulated in the housing, the second battery pack is detachably connected to the housing, and the housing is formed with a coupling portion to which the second battery pack is detachably mounted.

182. The power unit according to claim 181, wherein the first battery pack is disposed above the electric motor, and the second battery pack is also disposed above the electric motor.

183. The power unit according to claim 181, wherein the first battery pack is disposed above the electric motor, and the second battery pack is disposed on a left or right side of the electric motor.

184. The power unit according to claim 181, wherein the first battery pack and the second battery pack are symmetrical about a symmetry plane, the first battery pack is disposed on one side of the symmetry plane, the second battery pack is symmetrically disposed on another side of the symmetry plane relative to the first battery pack, and a preset distance exists between the first axis of the output shaft and the symmetry plane.

185. The power unit according to claim 181, wherein the second battery pack is detachably coupled to the battery pack coupling portion along a direction of a second straight line, and the direction of the second straight line is inclined relative to a direction of the first axis.

186. The power unit according to claim 181, wherein the second battery pack is detachably coupled to the battery pack coupling portion along a direction of a second straight line, and the direction of the second straight line is parallel to a direction of the first axis.

187. The power unit according to claim 181, wherein the first cell of the first battery pack has one of different materials or shapes.

188. The power unit according to claim 181, wherein the second battery pack comprises a second cell having one of different materials or shapes.

189. The power unit according to claim 188, wherein the first cell and the second cell have different materials or shapes.

190. The power unit according to claim 181, wherein the power supply device further comprises a third battery pack disposed outside the housing.

191. A power unit applicable to a power tool, comprising:
an output assembly comprising an electric motor and an output shaft for outputting power, wherein the output shaft is configured to be rotatable about a first axis;
a housing supporting the output assembly and comprising a base, wherein the base is configured to be used for detachably mounting the power unit to the power tool; and
a power supply device comprising at least a first battery pack and a second battery pack for powering the output assembly;
wherein the first battery pack comprises a first cell, the second battery pack comprises a second cell, and the first cell and the second cell are capable of having different materials or different shapes.

192. The power unit according to claim 191, wherein the first battery pack is disposed above the electric motor, and the second battery pack is also disposed above the electric motor.

193. The power unit according to claim 191, wherein the first battery pack is disposed above the electric motor, and the second battery pack is disposed on a left or right side of the electric motor.

194. The power unit according to claim 191, wherein the first battery pack and the second battery pack are symmetrical about a symmetry plane, the first battery pack is disposed on one side of the symmetry plane, the second battery pack is symmetrically disposed on another side of the symmetry plane relative to the first battery pack, and a preset distance exists between the first axis of the output shaft and the symmetry plane.

195. The power unit according to claim 191, wherein the second battery pack is detachably coupled to a battery pack coupling portion along a direction of a second straight line, and the direction of the second straight line is inclined relative to a direction of the first axis.

196. The power unit according to claim 191, wherein the second battery pack is detachably coupled to a battery pack coupling portion along a direction of a second straight line, and the direction of the second straight line is parallel to a direction of the first axis.

197. The power unit according to claim 191, wherein the first cell of the first battery pack has one of different materials or shapes.

198. The power unit according to claim 191, wherein the second battery pack comprises a second cell having one of different materials or shapes.

199. The power unit according to claim 191, wherein the power supply device further comprises a third battery pack disposed outside the housing.

200. The power unit according to claim 191, further comprising a power management board, wherein the power management board comprises a control circuit configured to control a power supply mode of the power supply device.

201. A power unit applicable to a power tool, comprising:
an output assembly comprising an electric motor and an output shaft for outputting power, wherein the output shaft is configured to be rotatable about a first axis;
a housing supporting the output assembly and comprising a base, wherein the output shaft is disposed on an upper side of the base; and
a power supply device comprising at least a first battery pack and a second battery pack for powering the output assembly;
wherein the first battery pack is further configured to be detachable from the housing to power another power tool, and the housing is formed with a battery pack coupling portion to which the first battery pack is capable of being detachably mounted.

202. The power unit according to claim 201, wherein the first battery pack is disposed above the electric motor, and the second battery pack is disposed above the electric motor.

203. The power unit according to claim 201, wherein the first battery pack is disposed above the electric motor, and the second battery pack is disposed on a left or right side of the electric motor.

204. The power unit according to claim 201, wherein the first battery pack and the second battery pack are symmetrical about a symmetry plane, the first battery pack is disposed on one side of the symmetry plane, the second battery pack is symmetrically disposed on another side of the symmetry plane relative to the first battery pack, and a preset distance exists between the first axis of the output shaft and the symmetry plane.

205. The power unit according to claim 201, wherein the second battery pack is detachably coupled to the battery pack coupling portion along a direction of a second straight line, and the direction of the second straight line is inclined relative to a direction of the first axis.

206. The power unit according to claim 201, wherein the second battery pack is detachably coupled to the battery pack coupling portion along a direction of a second straight line, and the direction of the second straight line is parallel to a direction of the first axis.

207. The power unit according to claim 201, further comprising a power management board, wherein the power management board comprises a control circuit configured to control a power supply mode of the power supply device.

208. The power unit according to claim 201, wherein maximum output power of the power unit is greater than or equal to 500 W and less than or equal to 10000 W.

209. The power unit according to claim 201, wherein an outer diameter of the electric motor is greater than or equal to 75 mm.

210. The power unit according to claim 201, comprising a first socket for connecting a third battery pack capable of powering the power unit, wherein the third battery pack is disposed outside the housing.

211. A power unit applicable to a power tool, comprising:
an output assembly comprising an electric motor and an output shaft for outputting power, wherein the output shaft is configured to be rotatable about a first axis;
a housing supporting the output assembly and comprising a base and a sidewall,
wherein the base is configured to be used for detachably mounting the power unit to the power tool; and
a power supply device comprising at least a first battery pack and a second battery pack for powering the output assembly;
wherein the first battery pack is mounted to the housing, and the second battery pack is configured to be separable from the power unit and capable of powering the power unit when the second battery pack is separated from the power unit.

212. The power unit according to claim 211, wherein the second battery pack is capable of remaining electrically connected to the housing when the second battery pack is placed outside the housing.

213. The power unit according to claim 211, comprising a control board, wherein the control board comprises an electronic element for controlling the electric motor, and the second battery pack is configured to be connectable to the control board.

214. The power unit according to claim 211, wherein the second battery pack is capable of being carried by a user on a back for use.

215. The power unit according to claim 211, wherein the power unit has a first coupling portion, the second battery pack has a first mounting portion, and the first mounting portion of the second battery pack is capable of being mounted to the first coupling portion of the power unit.

216. The power unit according to claim 215, wherein the first coupling portion is disposed on a top or sidewall of the power unit.

217. The power unit according to claim 211, wherein the second battery pack has a second mounting portion, and the second mounting portion is capable of causing the second battery pack to be mounted on an even surface.

218. The power unit according to claim 211, wherein the second battery pack has a second mounting portion, and the second mounting portion is capable of being hung, slidably mounted, pivotally mounted, or mounted through a press.

219. The power unit according to claim 218, wherein the second mounting portion of the second battery pack is capable of being mounted to the power unit.

220. The power unit according to claim 218, wherein the second mounting portion of the second battery pack is capable of being mounted to the power tool mating with the power unit.

221. A power unit applicable to a power tool, comprising:
an output assembly comprising an output shaft for outputting power, wherein the output shaft is configured to be rotatable about a first axis;
a housing supporting the output assembly and comprising a base, wherein it is defined that the base has a bottom plane capable of causing the power unit to be placed on a receiving plane and the bottom plane is parallel to the receiving plane; and
a power supply device comprising a first battery pack for powering the output assembly;
wherein the power unit further comprises:
a first locking assembly, wherein the first battery pack is fixed to the power unit through the first locking assembly, the first locking assembly has a locking position and an unlocking position, the first locking assembly restricts a movement of the first battery pack when the first locking assembly is located at the locking position, the first locking assembly does not restrict the movement of the first battery pack when the first locking assembly is located at the unlocking position, and the first locking assembly needs to be driven by a first unlocking tool to switch between the locking position and the unlocking position.

222. The power unit according to claim 221, further comprising a second locking assembly, wherein when the first locking assembly and the second locking assembly are at unlocking positions simultaneously, the first battery pack is in a detachable state.

223. The power unit according to claim 222, wherein the second locking assembly does not need to be unlocked by an unlocking tool.

224. The power unit according to claim 223, wherein the power supply device further comprises a second battery pack, and when the first locking assembly is at the unlocking position, the first battery pack and the second battery pack are each detachable.

225. The power unit according to claim 221, wherein the first unlocking tool is connected to the power unit through a first connector.

226. The power unit according to claim 221, wherein the power supply device further comprises a second battery pack for powering the output assembly, and the second battery pack is different from the first battery pack.

227. The power unit according to claim 226, further comprising a second locking assembly, wherein the second battery pack is fixed to the power unit through the second locking assembly, the second locking assembly has a locking position and an unlocking position, the second locking assembly restricts a movement of the second battery pack when the second locking assembly is located at the locking position, and the second locking assembly does not restrict the movement of the second battery pack when the second locking assembly is located at the unlocking position.

228. The power unit according to claim 227, wherein the first unlocking tool is also capable of being used for driving the second locking assembly to move between the locking position and the unlocking position.

229. The power unit according to claim 221, wherein the first locking assembly comprises a locking member and a locking plate, the locking plate comprises a locking hole, and the locking member passes through the locking hole and fixes the locking plate on the housing.

230. A power unit applicable to a power tool, comprising:
an output assembly comprising an output shaft for outputting power, wherein the output shaft is configured to be rotatable about a first axis;
a housing supporting the output assembly and comprising a base, wherein it is defined that the base has a bottom plane capable of causing the power unit to be placed on a receiving plane and the bottom plane is parallel to the receiving plane; and
a power supply device comprising a first battery pack for powering the output assembly;
wherein the power unit further comprises:
a first locking assembly, wherein the first battery pack is fixed to the power unit through the first locking assembly, the first locking assembly has a locking position and an unlocking position, the first locking assembly restricts a movement of the first battery pack when the first locking assembly is located at the locking position, and the first locking assembly does not restrict the movement of the first battery pack when the first locking assembly is located at the unlocking position; and
a first unlocking tool driving the first locking assembly to switch between the locking position and the unlocking position.

231. A power unit applicable to a power tool, comprising:
an output assembly comprising an output shaft for outputting power, wherein the output shaft is configured to be rotatable about a first axis;
a housing supporting the output assembly and comprising a base, wherein it is defined that the base has a bottom plane capable of causing the power unit to be placed on a receiving plane and the bottom plane is parallel to the receiving plane; and
a power supply device comprising a first battery pack for powering the output assembly;
wherein it is defined that a working center of gravity G refers to a center of gravity of a whole machine for the power unit 10 to be capable of working normally, and a distance Y1 between the working center of gravity G and the first axis in an up and down direction is less than or equal to 14 cm.

232. The power unit according to claim 231, wherein the power unit has at least two workable states, and a first working center of gravity G1 and a second working center of gravity G2 exist in the two workable states, respectively.

233. The power unit according to claim 231, wherein the center of gravity of the whole machine is a first center of gravity G1 when only the first battery pack is mounted on the power unit.

234. The power unit according to claim 231, wherein the power supply device further comprises a second battery pack for powering the output assembly, the center of gravity of the whole machine is a second center of gravity G2 when only the second battery pack is mounted on the power unit, and the center of gravity of the whole machine is a third center of gravity G3 when both the first battery pack and the second battery pack are mounted on the power unit.

235. The power unit according to claim 231, wherein the power unit has at least one working center of gravity G, and a distance Y1 between each of the at least one working center of gravity G and the first axis in the up and down direction is less than or equal to 12 cm.

236. The power unit according to claim 231, wherein the power unit has at least one working center of gravity G, and a distance Y1 between each of the at least one working center of gravity G and the first axis in the up and down direction is less than or equal to 10 cm.

237. The power unit according to claim 231, wherein the power unit has at least one working center of gravity G, and a distance Y1 between each of the at least one working center of gravity G and the first axis in the up and down direction is less than or equal to 8 cm.

238. The power unit according to claim 231, wherein a distance X1 between the working center of gravity G and the first axis in a left and right direction is less than or equal to 10 cm.

239. The power unit according to claim 231, wherein the power unit has at least one working center of gravity G, and a distance X1 between each of the at least one working center of gravity G and the first axis in a left and right direction is less than or equal to 6 cm.

240. The power unit according to claim 231, wherein the power unit has at least one working center of gravity G, and a distance X1 between each of the at least one working center of gravity G and the first axis in a left and right direction is less than or equal to 4 cm.

241. A power unit applicable to a power tool, comprising:
an output assembly comprising an output shaft for outputting power, wherein the output shaft is configured to be rotatable about a first axis;
a housing supporting the output assembly and comprising a base, wherein it is defined that the base has a bottom plane capable of causing the power unit to be placed on a receiving plane and the bottom plane is parallel to the receiving plane; and
a power supply device comprising a first battery pack and a second battery pack for powering the output assembly;
wherein a distance between the output shaft and the bottom plane is greater than or equal to 5 mm, the first battery pack is detachably mounted to the housing along a direction of a first straight line, the second battery pack is detachably mounted to the housing along a direction of a second straight line, an included angle between the first straight line and the bottom plane is greater than or equal to 0 degrees and less than or equal to 30 degrees, and an included angle between the second straight line and the bottom plane is greater than or equal to 0 degrees and less than or equal to 30 degrees.

242. The power unit according to claim 241, wherein the first battery pack and the second battery pack are symmetrical about a symmetry plane, the first battery pack is disposed on one side of the symmetry plane, the second battery pack is symmetrically disposed on another side of the symmetry plane relative to the first battery pack, a preset distance exists between the first axis of the output shaft and the symmetry plane, and the preset distance is greater than or equal to 5 mm.

243. The power unit according to claim 241, wherein the power unit is mounted to the power tool through the base.

244. The power unit according to claim 241, wherein the housing comprises a sidewall, and the output shaft protrudes from the sidewall.

245. The power unit according to claim 241, further comprising an electric motor, wherein the electric motor rotates about an electric motor axis coinciding with the first axis.

246. The power unit according to claim 241, further comprising an electric motor, wherein the electric motor rotates about an electric motor axis, a transmission assembly is disposed between the electric motor and the output shaft, a ratio of a rotational speed of the output shaft to a rotational speed of the electric motor is defined as a gear ratio of the transmission assembly, and the gear ratio is higher than or equal to 2 and lower than or equal to 15.

247. The power unit according to claim 241, wherein a longest distance of the power unit in a left and right direction is a length of a whole machine, and the length of the whole machine is greater than or equal to 200 mm.

248. The power unit according to claim 241, wherein a height of the power unit along an up and down direction is a height of a whole machine, and the height of the whole machine is greater than or equal to 250 mm.

249. The power unit according to claim 241, wherein a thickness of the power unit along a front and rear direction is a thickness of a whole machine, and the thickness of the whole machine is greater than or equal to 150 mm.

250. The power unit according to claim 241, wherein a length by which the output shaft protrudes from the housing is a protruding length, a diameter of the output shaft is a shaft diameter, and a ratio of the protruding length to the shaft diameter is higher than 1 and lower than 10.

251. The power unit according to claim 241, wherein the first battery pack is disposed above the output shaft, the second battery pack is disposed above the output shaft, the first battery pack and the second battery pack are symmetrical about a symmetry plane, the first battery pack is disposed on one side of the symmetry plane, the second battery pack is symmetrically disposed on another side of the symmetry plane relative to the first battery pack, and a preset distance exists between the output shaft and the symmetry plane.

252. The power unit according to claim 241, further comprising a power management board, wherein the power management board comprises a control circuit configured to control a power supply mode of the power supply device, the first battery pack is disposed on an upper side of an electric motor, and the power management board is disposed between the base and a top surface of the first battery pack.

253. The power unit according to claim 241, wherein the output assembly comprises a first electric motor and a second electric motor, wherein the first electric motor comprises a first electric motor shaft rotatable about a first axis, and the second electric motor comprises a second electric motor shaft rotatable about a second axis.

254. The power unit according to claim 241, wherein a ratio of a distance between the output shaft and the base to a height of the power unit in a vertical direction is higher than or equal to 0.01.

255. The power unit according to claim 241, wherein a distance between the output shaft and an outer edge of a sidewall is a first length, a distance of the power unit in a left and right direction is a length of a whole machine, and a ratio of the first length to the length of the whole machine is higher than or equal to 0.02 and lower than or equal to 0.5.

256. The power unit according to claim 241, wherein the output assembly further comprises an electric motor, and a ratio of a diameter of the output shaft to an outer diameter of the electric motor is higher than or equal to 0.069 and lower than or equal to 0.4.

257. The power unit according to claim 241, wherein the first battery pack comprises a first cell encapsulated in the housing, the second battery pack is detachably connected to the housing, and the housing is formed with a coupling portion to which the second battery pack is detachably mounted.

258. The power unit according to claim 241, wherein the first battery pack comprises a first cell, the second battery pack comprises a second cell, and the first cell and the second cell are capable of having different materials or different shapes.

259. The power unit according to claim 241, wherein the first battery pack is further configured to be detachable from the housing to power another power tool, and the housing is formed with a battery pack coupling portion to which the first battery pack is capable of being detachably mounted.

260. The power unit according to claim 241, wherein the first battery pack is mounted to the housing, and the second battery pack is configured to be separable from the power unit and capable of powering the power unit when the second battery pack is separated from the power unit.

261. A power unit applicable to a power tool, comprising:
an output assembly comprising an electric motor and an output shaft for outputting power, wherein the output shaft is configured to be rotatable about a first axis;
a housing supporting the output assembly and comprising a base and a sidewall, wherein the base is configured to be used for detachably mounting the power unit to the power tool, and the sidewall is formed with a through hole for the output shaft to protrude forward from the housing along the first axis;
a power supply device comprising a first battery pack for powering the output assembly;
a circuit board assembly for controlling the electric motor and/or the power supply device; and
a control device comprising a speed adjusting element for controlling an output speed of the output shaft;
wherein at least part of the circuit board assembly and at least part of the control device are disposed on a same side of a vertical plane passing through the first axis.

262. The power unit according to claim 261, wherein the circuit board assembly is disposed between the electric motor and the first battery pack.

263. The power unit according to claim 261, wherein the circuit board assembly is disposed between the base and a top of the first battery pack.

264. The power unit according to claim 261, wherein the circuit board assembly is disposed between the base and a top of the housing.

265. The power unit according to claim 262, wherein the power supply device further comprises a second battery pack.

266. The power unit according to claim 265, wherein the first battery pack and the second battery pack are each disposed above the electric motor.

267. The power unit according to claim 265, wherein the first battery pack is disposed above the electric motor, and the circuit board assembly is at least partially disposed between the first battery pack and the second battery pack.

268. The power unit according to claim 265, wherein the first battery pack is disposed above the electric motor, and the circuit board assembly is at least partially disposed between the electric motor and the second battery pack.

269. The power unit according to claim 261, wherein the circuit board assembly comprises a control board, and the control device is electrically connected to the control board of the circuit board assembly.

270. The power unit according to claim 261, wherein the control device further comprises a display interface for displaying a rotational speed.

271. The power unit according to claim 261, wherein the housing is formed with a mounting portion for mounting the control device, the mounting portion comprises a mounting structure through which the control device is capable of being detachably mounted, the control device comprises a first electrical connection interface, and the power unit comprises a second electrical connection interface electrically connected to the first electrical connection interface.

272. The power unit according to claim 261, wherein the housing is formed with a mounting portion for mounting the control device, the mounting portion comprises a mounting structure through which the control device is capable of being detachably mounted, and the mounting structure is also configured to be capable of causing the control device to be electrically connected to a circuit board.

273. The power unit according to claim 261, wherein the housing is formed with a mounting portion for mounting the control device, the control device has a separate state in which the control device is detached from the mounting portion to be mounted on the power unit, the control device is electrically connected to a circuit board through a cable when the control device is in the separate state, and a length of a portion of the cable located outside the housing is greater than or equal to 10 cm when the control device is in the separate state.

274. The power unit according to claim 261, wherein the housing is formed with a mounting portion for mounting the control device, the control device has a separate state in which the control device is detached from the mounting portion, and the control device is configured to be capable of forming a wireless communication connection with the circuit board when the control device is in the separate state.

275. The power unit according to claim 261, wherein the housing comprises the base, it is defined that the base has a bottom plane capable of causing the power unit to be placed on a receiving plane, the bottom plane is parallel to the receiving plane, the control device comprises a viewing interface for a user to view, the viewing interface is a side surface of the control device that has a maximum area and is capable of being directly viewed by the user, a second included angle β is formed between the viewing interface and the receiving plane, and the second included angle β is greater than or equal to 10 degrees and less than or equal to 70 degrees.

276. The power unit according to claim 261, wherein the control device also comprises a main switch configured to control the electric motor to start and stop and a display interface for displaying working information of the power unit.

277. The power unit according to claim 276, wherein the display interface is capable of displaying at least one of the following information: a battery level of the power supply device, total working time of the power unit, Bluetooth connection information, working information of the power supply device, an output speed of the power unit, temperature information of the power unit, and fault information of the power unit.

278. The power unit according to claim 265, wherein the control device is disposed on a lower side of at least one of the first battery pack and the second battery pack.

279. The power unit according to claim 261, wherein the speed adjusting element adjusts a speed through a Hall speed adjustment.

280. The power unit according to claim 261, wherein the power unit is provided with at least two heat dissipation vents for dissipating heat.
